(19) Europäisches Patentamt
European Patent Office
Office européen des brevets

(11) **EP 1 941 487 B1**

(12) **EUROPÄISCHE PATENTSCHRIFT**

(45) Veröffentlichungstag und Bekanntmachung des Hinweises auf die Patenterteilung:
**07.07.2010 Patentblatt 2010/27**

(21) Anmeldenummer: **07722885.6**

(22) Anmeldetag: **21.02.2007**

(51) Int Cl.:
**G10H 1/38** (2006.01)     **G10H 1/00** (2006.01)

(86) Internationale Anmeldenummer:
**PCT/EP2007/001509**

(87) Internationale Veröffentlichungsnummer:
**WO 2007/096152 (30.08.2007 Gazette 2007/35)**

(54) **VORRICHTUNG, VERFAHREN UND COMPUTER PROGRAMM ZUM ERZEUGEN EINES NOTENSIGNALS**

DEVICE, METHOD AND COMPUTER PROGRAM FOR PRODUCING A NOTE SIGNAL

PROCÉDÉ, DISPOSITIF ET ET PRGRAMME D'ORDINATEUR DE PRODUCTION D'UN SIGNAL DE NOTES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.02.2006 DE 102006008298**

(43) Veröffentlichungstag der Anmeldung:
**09.07.2008 Patentblatt 2008/28**

(73) Patentinhaber: **Fraunhofer-Gesellschaft zur Förderung der angewandten Forschung e.V.
80686 München (DE)**

(72) Erfinder:
- **GATZSCHE, Gabriel
  98693 Martinroda (DE)**
- **GATZSCHE, David
  99427 Weimar (DE)**
- **BECKINGER, Michael
  99084 Erfurt (DE)**
- **MELCHIOR, Frank
  99089 Erfurt (DE)**

(74) Vertreter: **Schenk, Markus et al
Schoppe, Zimmermann, Stöckeler & Zinkler
Patentanwälte
Postfach 246
82043 Pullach bei München (DE)**

(56) Entgegenhaltungen:
WO-A-90/09650          DE-A1- 10 042 300
GB-A- 2 312 085        US-A1- 2001 052 283
US-A1- 2003 209 130

- PHILIP DORRELL: "What is Music, Chapter 5, Vector Analysis of Musical Intervals" [Online] 2005, , INTERNET , XP002430508 Gefunden im Internet: URL:http://web.archive.org/web/20051124063 808/http://whatismusic.info/download.html> [gefunden am 2007-04-05] Abschnitt 5.8: the Harmonic Heptagon
- CHING-HUA CHUAN ET AL: "Polyphonic Audio Key Finding Using the Spiral Array CEG Algorithm" MULTIMEDIA AND EXPO, 2005. ICME 2005. IEEE INTERNATIONAL CONFERENCE ON AMSTERDAM, THE NETHERLANDS 06-06 JULY 2005, PISCATAWAY, NJ, USA,IEEE, 6. Juli 2005 (2005-07-06), Seiten 21-24, XP010843224 ISBN: 0-7803-9331-7

**Beschreibung**

Die vorliegende Erfindung bezieht sich auf eine Vorrichtung und ein Verfahren zum Erzeugen eines Notensignals auf eine manuelle Eingabe hin, insbesondere auf ein Bedienfeld, das eine einfache, schnelle und pädagogische Eingabe von einzelnen Tönen und harmonisch klingenden Tonkombinationen ermöglicht.

Beim Musizieren und insbesondere beim Improvisieren über ein bestehendes Musikstück oder eine bestehende Akkordfolge, also bei einem kreativen Erschaffen harmonisch und konsonant klingender Melodien, während die Melodie oder die Akkordfolge in Echtzeit gespielt wird, ist eine schnelle und effiziente Eingabe von Tönen unabdingbar. Eine solche schnelle und effiziente Eingabe von Tönen setzt im Allgemeinen jedoch eine mehrjährige Lernphase an einem bestimmten Instrument, beispielsweise einem Klavier, einer Gitarre oder einem anderen Musikinstrument voraus, um in ausreichender Geschwindigkeit harmonische und/oder konsonant klingende Töne zu erzeugen. Da neben einer solchen Beherrschung eines Musikinstruments im Allgemeinen auch eine ausreichende musikalische Grundbildung vorausgesetzt wird, sind viele Menschen ausgeschlossen, denen das notwendige musiktheoretische Hintergrundwissen fehlt oder die keine ausreichende Erfahrung im Umgang mit einem Musikinstrument haben.

Gerade zu Beginn einer solchen mehrjährigen Lernphase ist es für den Lernenden sehr schwierig, neben der bloßen Beherrschung des Musikinstruments auch die notwendigen musiktheoretischen Hintergründe, die für ein späteres Musizieren unabdingbar sind, zu verstehen. Gerade die "klassischen Musikinstrumente", also beispielsweise das Klavier, die Gitarre, die Geige, die Trompete und das Saxophon, sind in Bezug auf eine Vermittlung musiktheoretischer Hintergründe kaum ausgerichtet, sondern wenden sich vielmehr an einen erfahrenen Musiker.

Gerade diese Komplexität der Bedienung und das Fehlen musiktheoretischen Wissens führt dazu, dass nur wenige Menschen dem Musizieren, Improvisieren und Komponieren nähergebracht werden, da gerade die "ersten Schritte" besonders schwierig sind. Dies gilt insbesondere für Kinder, für die sich ein spielerischer Umgang mit der Musik eignen würde, um sie an die Musik heranzuführen. Darüber hinaus ist es gerade auch für behinderte Menschen sehr schwierig zu musizieren oder zu improvisieren, da diese häufig aufgrund ihrer Behinderung nicht in der Lage sind, bestimmte Musikinstrumente zu spielen.

In der Literatur sind viele Hilfsmittel und Lernhilfen zum Erlernen bzw. zum Auffinden von Akkorden, Harmonien und Tonarten bekannt. Bei diesen handelt es sich häufig um Schablonen, Scheiben oder anderen Objekten, insbesondere mechanisch miteinander verbundene, verschiebbare oder drehbare Schablonen, auf denen musiktheoretische Zusammenhänge dargestellt sind. Solche Hilfsmittel und Lernhilfen sind beispielsweise in den Schriften DE 8005260 U1, DE 8902959 U1, DE 3744255 A1, US 5709552, DE 3690188 T1, US 2002/0178896 A1, DE 4002361 A1, DE 19831409 A1, DE 19859303 A1, DE 29801154 U1 und DE 20301012 U1 beschrieben. Im Allgemeinen ist auf eine der Scheiben oder der betreffenden Objekte eine Aneinanderreihung von Tönen aufgetragen, die im Allgemeinen entweder der chromatischen Tonleiter, die aus einer Folge von zwölf Halbtönen und damit allen verfügbaren Tönen einer temperierten Stimmung besteht, oder des Quintenzirkels entspricht, bei dem also ein Tonabstand zweier benachbarter Töne einer Quinte entspricht (beispielsweise C - G oder F - C). Die DE 8005260 zeigt ein Arbeitsgerät zum Auffinden von Akkorden, Harmonien und Tonarten mit einer Anordnung in einem Terzabstand.

Die Gebrauchsmusterschrift DE 29512911 U1 beschreibt ein Lehr- und Lernmittel zur Synthese und Analyse musiktheoretischer Zusammenhänge mit mehreren unterschiedlichen Schablonen und wenigstens zwölf mit Tonbezeichnungen versehener Spielsteine.

Die europäische Patentschrift EP 0452347 B1 bezieht sich auf eine universelle Bedieneinheit für ein elektronisches Musikinstrument mit einer Anzahl von Noten-Auswählern, von denen jeder bei Auswahl einer Note ein Noten-Auswahlsignal und bei Abfall einer Note ein Noten-Abwahlsignal liefert, mit der Anzahl von Noten-Auswählern gekoppelte Noten-Anschalter zum Liefern von jedem Noten-Auswähler zugeordneter, notenkennzeichnender Informationen und zum Liefern jeweils eines von dem Noten-Auswahlsignal ausgelösten Noten-Anschaltsignals, das die entsprechenden notenkennzeichnenden Informationen umfasst, einer Speichereinrichtung zum Speichern der ausgelöst vom Noten-Auswahlsignal gelieferten notenkennzeichnenden Informationen, an die Noten-Anschalter gekoppelte Mittel zum Ändern der notenkennzeichnenden Informationen und an die Anzahl von Noten-Auswählern sowie an die Speichereinrichtung gekoppelte Noten-Abschalter zum Liefern eines von dem Noten-Abwahlsignal ausgelösten Noten-Abschaltsignals, das die bei Lieferung des Noten-Auswahlsignals gespeicherte notenkennzeichnende Information umfasst. Insbesondere beschreiben diese Dokumente eine Bedieneinheit für ein elektronisches Musikinstrument, das eine einer Klaviatur eines Klaviers nachgebildete Bedieneinheit aufweist.

Die Patentschrift DE 4216349 C2 beschreibt ein elektronisches Musikinstrument mit einer Melodie- und einer Begleittastatur. Das beschriebene elektronische Musikinstrument hat eine Melodie-Tastatur, deren Melodie-Tasten Schalter mit zwei Schaltstufen umfassen, wobei den ersten Schaltstufen diejenigen Töne, die den Untertasten, und den zweiten Schalterstufen diejenigen Töne, die den Obertasten einer Klaviatur entsprechend zugeordnet sind, und eine BegleitTastatur, die Begleit-Tasten aufweist, bei deren Betätigung eine automatische Akkordbegleitung aufrufbar ist, wobei die Begleit-Tasten jeweils als Schalter mit mindestens zwei Schaltstufen ausgebildet sind, denen unterschiedliche Begleitakkorde zugeordnet sind. Eine Bedienung des beschriebenen elektronischen Musikinstruments erfordert zwar nicht die Kenntnis der Notenschrift, erfordert jedoch aufgrund der beschriebenen Anlehnung an eine Klaviatur einen musiktheoretisch vorgebildeten Bediener, da insbesondere bestimmte Kombinationen von einzelnen Tönen und Akkorden, wie es gerade zu pädagogischen Zwecken notwendig ist, nahe liegt.

Die Patenschrift DE 2857808 C3 beschreibt ein elektronisches Musikinstrument kombiniert mit einer elektronischen Uhr. Die Erfindung betrifft ein elektronisches Musikinstrument, bei dem über Eingabe- und Speichermittel beliebige Tonfolgen und Musikstücke eingebbar und wieder abrufbar sind. Das beschriebene elektronische Musikinstrument ermöglicht somit nur eine Eingabe mit einer anschließenden Speicherung einer Tonfolge sowie eine Wiedergabe der gespeicherten Tonfolge über eine Tongeneratorschaltung, um die gespeicherte Tonfolge in Form einer sequentiellen akustischen Darbietung wiederzugeben. Nachteilig an dem beschriebenen elektronischen Musikinstrument ist insbesondere, dass die Eingabe bzw. die "Programmierung" der Tonfolge über eine um einige Zusatztasten erweiterten Zehnertastatur erfolgt. Insbesondere erfordert das beschriebene elektronische Musikinstrument auch ein gewisses Mindestmaß an musiktheoretischem Vorwissen, da sonst eine Programmierung des Musikinstruments kaum durchführbar ist.

Die europäische Patentschrift EP 0834167 B1 bezieht sich auf ein virtuelles Musikinstrument mit einer neuen Eingabevorrichtung. Genauer gesagt bezieht sich die genannte Patentschrift auf ein virtuelles Musikinstrument mit einem Handzubehörteil eines Typs, der mit einem Musikinstrument in Kontakt gebracht werden soll, um dieses Instrument zu spielen, wobei das genannte Handzubehörteil einen Schalter aufweist, der als Reaktion darauf, dass das genannte Handzubehörteil von einer der genannten Handzubehörteil haltenden Person veranlasst wird, gegen ein anderes Objekt zu schlagen, ein Aktivierungssignal erzeugt. Das genannte Aktivierungssignal wird von einem Digitalprozessor empfangen, der wiederum ein Steuersignal erzeugt, das einen Synthesizer dazu veranlasst, eine Note zu erzeugen, die durch eine gewählte Notendatenstruktur repräsentiert wird. Insbesondere beschreibt die Patentschrift ein virtuelles Musikinstrument, bei dem das genannte Handzubehörteil ein Gitarrenplektrum ist, und bei dem ein Benutzer nur innerhalb einer vorgegebenen Menge von Tönen diese über den Synthesizer erklingen lassen kann.

Die europäische Patentschrift EP 0632427 B1 bzw. die Übersetzung dieser europäischen Patentschrift DE 69418776 T2 bezieht sich auf ein Verfahren und eine Vorrichtung zur Eingabe von Musikdaten. Genauer gesagt bezieht sich die genannte Patentschrift auf eine Musikdateneingabevorrichtung, die eine Eingabeaufnahmeeinrichtung zum Aufnehmen einer handschriftlichen Eingabe darauf, eine Positionserfassungseinrichtung zum Erfassen einer Position auf der Eingabeaufnahmeeinrichtung, wo die handschriftliche Eingabe ausgeführt wird, um Tonhöhendaten zu erhalten, die für eine Tonhöhe einer Musiknote repräsentativ sind, eine Eingabeerkennungseinrichtung zum Erkennen der handschriftlichen Eingabe, die auf der Eingabeaufnahmeeinrichtung ausgeführt wird, wobei die Eingabeerkennungseinrichtung eine Einrichtung aufweist zum Erfassen der Anzahl der Drückvorgänge, die auf der Eingabeaufnahmeeinrichtung ausgeführt werden, oder zum Erfassen einer Zeitdauer, in der auf die Eingabeaufnahmeeinrichtung gedrückt wird, oder zum Erfassen der Intensität des Drucks, der auf die Eingabeaufnahmeeinrichtung während der handschriftlichen Eingabe ausgeübt wird, oder eine Zahlenerfassungseinrichtung aufweist, um eine auf die Eingabeaufnahmeeinrichtung geschriebene Zahl zu erfassen, oder eine Linienerfassungseinrichtung, um die Länge einer Linie zu erfassen, die auf die Eingabeaufnahmeeinrichtung gezeichnet wird, eine Zeitbezeichnungseinrichtung zum Bezeichnen von Zeitdaten, die für die Länge eines Musiktons repräsentativ sind, auf der Grundlage der erfassten Anzahl der Drückvorgänge oder der erfassten Zeitdauer oder der erfassten Intensität der Drückvorgänge oder der erfassten Zahl oder der erfassten Länge einer Linie, die von der Eingabeerkennungsvorrichtung erkannt wird, und eine Musiktonerzeugungseinrichtung zum Erkennen von Musiktondaten auf der Grundlage der Tonhöhendaten umfasst, die von der Positionserfassungseinrichtung erhalten werden, und der Zeitdaten, die von der Zeitbezeichnungseinrichtung erhalten werden. Insbesondere beschreibt die genannte Patenschrift eine Musikdateneingabevorrichtung mit einer LCD-Einheit (LCD = liquid crystal display = Flüssigkeitskristallanzeige) und ein auf dieser angeordnetes Berührungsfeld, über das mit Hilfe eines Stiftes in ein Notensystem Noten eingetragen werden können. Die beschriebene Musikdateneingabevorrichtung bezieht sich daher auf Menschen mit einem hinreichend hohen Kenntnisstand musiktheoretischer Zusammenhänge.

Die Patentschrift US 5415071 bezieht sich auf ein Verfahren und eine Vorrichtung zum Erzeugen von Beziehungen zwischen musikalischen Noten. Hierbei wird eine Anordnung versetzte Linien oder Zeilen von Symbolen beschrieben, wobei jedes Symbol eine musikalische Note darstellt. Jede Linie umfasst eine wiederholte Serie von zwölf Symbolen, die eine musikalische Serie von Halbtönen bildet, die auch als chromatische Tonleiter bekannt ist. Hierbei ist jede Linie gegenüber den angrenzenden Linien so versetzt, dass Gruppen von Symbolen, die die gleiche musikalische Beziehung darstellen, also beispielsweise Intervalle Tonleitern, Akkorde usw., gleiche visuell erkennbare Konfigurationen bilden, wie beispielsweise diagonale Konfigurationen oder vertikale Konfigurationen an bestimmten Orten in der Anordnung. In einem Ausführungsbeispiel kann ein solches Gerät, das eine solche Anordnung umfasst, als Lernhilfe verwendet werden, wobei die Lernhilfe zwei überlappende Komponenten aufweist, die gegeneinander verschiebbar sind. Darüber hinaus beschreibt die Patentschrift eine Anordnung der Kontaktflächen eines Keyboards bzw. einer Klaviatur eines Musikinstruments mit einer Klaviatur oder ein Griffbrett eines musikalischen Saiteninstruments, die in Übereinstimmung mit der Anordnung arrangiert sind. Die Patentschrift beschreibt so eine Klaviatur mit in Form konzentrischer Kreise angeordneter Tasten.

Ausgehend von diesem Stand der Technik besteht die Aufgabe der vorliegenden Erfindung darin, eine Vorrichtung zum Erzeugen eines Notensignals auf eine manuelle Eingabe hin zu schaffen, die es einem musikalisch nicht vorgebildeten Benutzer ermöglicht, schneller und effizienter konsonant klingende Notensignale zu erzeugen.

Diese Aufgabe wird gelöst durch eine Vorrichtung gemäß Anspruch 1, ein Verfahren gemäß Anspruch 17, und ein Computer-Programm gemäß Anspruch 18.

Die erfindungsgemäße Vorrichtung zum Erzeugen eines Notensignals auf eine manuelle Eingabe hin umfasst eine Bedieneinrichtung, die ausgebildet ist, um es einem Benutzer derselben als Eingabe zu ermöglichen, einen Eingabewinkel oder einen Eingabewinkelbereich als Eingabesignal zu definieren, und eine Steuereinrichtung, die ausgebildet ist, um das Eingabesignal zu empfangen und basierend auf einer Zuordnungsfunktion und dem Eingabesignal ein einer Tonigkeit zugeordnetes Notensignal zu erzeugen, wobei die Zuordnungsfunktion den vollen Winkelbereich eines Kreises auf eine Tonigkeitsmenge abbildet, derart, dass jedem Winkel des vollen Winkelbereichs eine Tonigkeit oder keine Tonigkeit zugeordnet ist, und dass für alle vorbestimmten Winkel gilt, dass,

- wenn dem vorbestimmten Winkel keine Tonigkeit zugeordnet ist, einem zu dem vorbestimmten Winkel in einer ersten Richtung nächstliegenden ersten Nächstnachbarwinkel des vollen Winkelbereichs, dem eine Tonigkeit zugeordnet ist, eine erste Nächstnachbartonigkeit zugeordnet ist, die zu einer zweiten Nächstnachbartonigkeit, die einem zu dem vorbestimmten Winkel in einer der ersten Richtung entgegengesetzten zweiten Richtung nächstliegenden zweiten Nächstnachbarwinkel des vollen Winkelbereichs, dem eine Tonigkeit zugeordnet ist, zugeordnet ist, einen kleinsten Tonabstand aufweist, der einem kleinen Terzabstand oder einem großen Terzabstand entspricht, und

- wenn dem vorbestimmten Winkel eine vorbestimmte Tonigkeit zugeordnet ist, die vorbestimmte Tonigkeit und die erste Nächstnachbartonigkeit einen kleinsten Tonabstand aufweisen, der einem Primabstand, einem kleinen Terzabstand oder einem großen Terzabstand entspricht, und die vorbestimmte Tonigkeit und die zweite Nächstnachbartonigkeit einen kleinsten Tonabstand aufweist, der einem Primabstand, einem kleinen Terzabstand oder einem großen Terzabstand entspricht.

Der vorliegenden Erfindung liegt die Erkenntnis zugrunde, dass es einem auch musikalisch nicht vorgebildeten Benutzer möglich ist, schneller und effizienter Notensignale zu erzeugen, indem der Benutzer auf einer Bedieneinrichtung einen Eingabewinkel oder einen Eingabewinkelbereich eingibt. Der Eingabewinkel oder der Eingabewinkelbereich wird als Eingabesignal der Steuereinrichtung bereitgestellt, die basierend auf der Zuordnungsfunktion und dem Ausgabesignal das einer Tonigkeit zugeordnete Notensignal erzeugt. Hierbei ist die Eingabe des Eingabewinkels oder des Eingabewinkelbereichs besonders vorteilhaft, da die Zuordnungsfunktion zwei winkelmäßig benachbarten Tonigkeiten jeweils eine Tonigkeit zuordnet, die bezogen auf die Nächstnachbartonigkeit einen kleinsten Tonabstand aufweist, der einem kleinen Terzabstand oder einem großen Terzabstand entspricht. Hierdurch ist es möglich, harmonisch oder konsonant klingende Tonkombinationen dadurch zu erzeugen, dass ein Eingabewinkel oder ein Eingabewinkelbereich durch den Benutzer vorgegeben wird.

Wie die Ausführungsbeispiele zeigen werden, ist es hierbei möglich, unterschiedliche Zuordnungsfunktionen zu definieren, die beispielsweise die Tonigkeiten der chromatischen Tonleiter mit ihrer Folge von zwölf Halbtönen oder die Tonigkeiten der diatonischen Tonleiter aufweist. Hierdurch kann je nach Einsatzgebiet, wie beispielsweise dem Musizieren, Improvisieren oder einem pädagogischen Ziel entsprechend, dem Benutzer eine an seine Bedürfnisse angepasste Bedieneinrichtung und Zuordnungsfunktion angeboten werden. Dies stellt insbesondere deswegen einen signifikanten Vorteil dar, da durch die Wahl einer geeigneten Zuordnungsfunktion die erfindungsgemäße Vorrichtung zum Erzeugen eines Notensignals an den jeweiligen Einsatz und die musikalische Vorbildung des Benutzers angepasst werden kann.

Ein weiterer Vorteil der vorliegenden Erfindung besteht darin, dass die Steuereinrichtung darüber hinaus ausgebildet sein kann, um Notensignale mit eine Lautstärkeinformation zu erzeugen, wobei die Lautstärkeinformation von der Eingabe des Benutzers abhängig sein kann. Wie die Ausführungsbeispiele zeigen werden, kann dies beispielsweise durch Einführen einer Selektionsgewichtungsfunktion geschehen, die eine winkelabhängige Lautstärkeinformation aufweist. Im Rahmen der vorliegenden Anmeldung wird unter einer Lautstärkeinformation eine Amplitude, eine Intensität (im Wesentlichen proportional zum Quadrat der Amplitude), eine Lautstärke (im Wesentlichen ein Logarithmus der Amplitude oder der Intensität), eine gehörangepasste Lautstärke oder eine entsprechende Größe verstanden.

Weiterhin vorteilhaft ist, dass die Steuereinrichtung ausgebildet werden kann, um das Notensignal mit einer von einer Oktavierungseingabe des Benutzers abhängigen Oktavierung zu erzeugen. Hierdurch ist es möglich, Töne und Akkorde über einen angeschlossenen Klangerzeuger mit einer veränderlichen Oktavierung bzw. im Fall von Akkorden mit einer veränderlichen Umkehrung zu erzeugen. Wie die Ausführungsbeispiele zeigen werden, kann die Oktavierungseingabe beispielsweise in Form einer Radiuseingabe erfolgen, so dass aufgrund der Tatsache, dass die Zuordnungsfunktion jedem Winkel eine Tonigkeit oder keine Tonigkeit zuordnet, jedem Punkt auf einer ovalen/kreisförmigen Bedieneinrichtung ein Notensignal zugeordnet werden kann, das zusätzlich Informationen bezüglich der Oktavierung aufweist. In Ausführungsbeispielen einer Vorrichtung zum Erzeugen eines Notensignals kann so beispielsweise wenigstens auf Basis einer Radiuseingabe oder auf Basis einer Radiusbereichseingabe ein einem entsprechenden Winkel zugeordnete Tonigkeit zugeordnetes Notensignal erzeugt werden, dass wenigstens bezüglich einer Oktavierung Intensitätsinformationen aufweist. Hierdurch können beispielsweise Überblendungen zwischen verschiedenen Umkehrungen von Akkorden oder Überblendungen zwischen verschiedenen Oktavierungen durchgeführt werden, in dem der eingegebene Radiuswert oder Radiusbereich entlang einer radialen Richtung verschoben wird.

Wie die Ausführungsbeispiele zeigen werden, ist es möglich, den Eingabewinkelbereich durch Eingabe eines Startwinkels und eines Öffnungswinkels durchzuführen. Hierdurch kann das Bedienelement eine Vielzahl von Eingabeeinrichtungen aufweisen zu denen unter anderem ein Joystick, eine neigbare Fußplatte, ein Drehregler, ein Schieberegler, ein Touchscreen und nicht zuletzt eine berührungsempfindliche Fläche gehören kann, was einen signifikanten Vorteil aufgrund der Vielzahl von Eingabemöglichkeiten darstellt. Darüber hinaus können auch Eingabeeinrichtungen verwendet werden, die beispielsweise eine Neigungsrichtung und/oder eine Neigungsstärke eines Kopfes des Benutzers auswerten, so dass auch hochgradig behinderte Menschen mit der erfindungsgemäßen Vorrichtung Notensignale erzeugen und damit musizieren können, was einen weiteren erheblichen Vorteil darstellt.

Darüber hinaus kann die Bedieneinrichtung eine weitere Eingabeeinrichtung aufweisen, mit der der Benutzer eine Zuordnungsfunktion aus einer Mehrzahl von Zuordnungsfunktionen auswählen kann, so dass die Bedieneinrichtung dem Benutzer eine Vorwahl einer diatonischen Dur-Tonleiter ermöglicht. Vorteilhaft hieran ist insbesondere, dass der Benutzer eine einfache Transposition des von ihm gespielten Musikstücks ohne eine Änderung des Eingabewinkels oder des Eingabewinkelbereichs erreichen kann. Vorteilhaft ist also hieran insbesondere, dass der Benutzer Musikstücke transponieren kann, ohne auf ein größeres musiktheoretisches Hintergrundwissen zurückgreifen zu müssen.

Es ist auch vorteilhaft, eine erfindungsgemäße Vorrichtung zum Erzeugen eines Notensignals auf eine manuelle Eingabe hin mit einer Vorrichtung zur Ausgabe von einem eine Tonigkeit anzeigenden Ausgabesignal zu kombinieren, um im didaktischen Bereich Zusammenhänge darstellen zu können. So ist es beispielsweise möglich, von einem Rechnersystem ein Eingangssignal für eine der Vorrichtungen zur Ausgabe erzeugen zu lassen, dieses mit einer konkreten Fragestellung, die musiktheoretisches Hintergrundwissen erfordert, an den Benutzer weiterzuleiten und auf der Vorrichtung zur Ausgabe von einem eine Tonigkeit anzeigenden Ausgabesignal darstellen zu lassen. Der Benutzer kann dann die Vorrichtung zum Erzeugen eines Notensignals dazu verwenden, die Frage, beispielsweise nach einem bestimmten Dreiklang oder Akkord, zu beantworten, woraufhin die Ausgabevorrichtung das erzeugte Notensignal dem Rechnersystem zur Verfügung stellt, das wiederum die Antwort des Benutzers bewertet. Hierdurch ist ein interaktives Erlernen musiktheoretischer Zusammenhänge möglich, was einen Vorteil gerade klassischen Lernmethoden gegenüber darstellt.

Eine solche Vorrichtung zur Ausgabe von einem eine Tonigkeit anzeigenden Ausgabesignal umfasst beispielsweise ein Ausgabefeld mit einer Ausgabefeldmitte und einer Mehrzahl vorbestimmter Ausgabefeldradialrichtungen, wobei jeder Ausgabefeldradialrichtung der Mehrzahl von vorbestimmten Ausgabefeldradialrichtungen eine Tonigkeit zugeordnet ist, und wobei ein kleinster Tonabstand zwischen zwei unmittelbar benachbarter Ausgabefeldradialrichtungen zugeordneter Tonigkeiten einem großen Terzabstand oder einem kleinen Terzabstand entspricht, und eine Steuereinrichtung aufweist, die ausgebildet ist, um ein eine Tonigkeit anzeigendes Eingangssignal zu empfangen und das Ausgabefeld so anzusteuern, dass abhängig von dem Eingangssignal als das Ausgabesignal eine Ausgabefeldradialrichtung hervorgehoben wird.

Ferner kann eine Vorrichtung zur Ausgabe von einem eine Tonigkeit anzeigenden Ausgabesignal ein Ausgabefeld mit einer Mehrzahl von Ausgabebereichen und einem oval/kreisförmigen Ausgabefeldumfang umfassen, wobei genau sieben Ausgabebereiche der Mehrzahl von Ausgabebereichen entlang des Ausgabefeldumfangs aufeinander folgend angeordnet sind, wobei jedem der sieben Ausgabebereiche eine Tonigkeit zugeordnet ist, wobei die sieben Ausgabebereiche bezogen auf eine Symmetrieachse symmetrisch auf dem Ausgabefeldumfang angeordnet sind, so dass im Uhrzeigersinn der erste Ausgabebereich auf der Symmetrieachse liegt, und wobei ein kleinster Tonabstand zwischen zwei unmittelbar benachbarten Ausgabebereichen zugeordneten Tonigkeiten einem großen Terzabstand oder einem kleinen Terzabstand entspricht, und eine Steuereinrichtung, die ausgebildet ist, um ein eine Tonigkeit anzeigendes Eingangssignal zu empfangen und das Ausgabefeld so anzusteuern, dass abhängig von dem Eingangssignal als das Ausgabesignal ein Ausgabebereich hervorgehoben wird.

Die Vorrichtungen zur Ausgabe von einem eine Tonigkeit anzeigenden Ausgabesignal ermöglichen aufgrund ihrer Ausgestaltung mit der Ausgabefeldmitte und einer Mehrzahl vorbestimmter Ausgabefeldradialrichtungen eine räumliche Nachbildung der Zuordnungsfunktion der Steuereinrichtung der erfindungsgemäßen Vorrichtung zum Erzeugen eines Notensignals, was mehrere Vorteile mit sich bringt. Zum einen ermöglichen die Vorrichtungen zur Ausgabe von einem eine Tonigkeit anzeigenden Ausgabesignal eine didaktisch wertvolle Darstellung musiktheoretischer Zusammenhänge bezüglich eines als Eingangssignal der Vorrichtung zur Ausgabe zur Verfügung gestellten Musikstücks.

Darüber hinaus ermöglichen die Vorrichtungen zur Ausgabe im Zusammenhang mit einer erfindungsgemäßen Vorrichtung zum Erzeugen eines Notensignals auf eine manuelle Eingabe hin eine besonders schnelle und effiziente Möglichkeit, über ein einer Vorrichtung zur Ausgabe in Form eines Eingangssignals zur Verfügung gestelltes Musikstück zu improvisieren. Dies liegt daran, dass die Ausgabefelder der Vorrichtung zur Ausgabe die Zuordnungsfunktion der erfindungsgemäßen Vorrichtung Zum Erzeugen eines Notensignals nachbilden können.

Vorteilhaft ist hieran insbesondere, dass die Vorrichtungen zur Ausgabe die betreffenden Ausgabefeldradialrichtungen bzw. die Ausgabebereiche optisch, mechanisch oder auf andere Art und Weise hervorheben können, so dass beispielsweise auch Blinden in Form von Vibrationen oder anderen mechanischen Stimulationen das eine Tonigkeit anzeigende Ausgabesignal ausgegeben werden kann.

Ein weiterer Vorteil besteht darin, dass beispielsweise Kindern oder anderen Personen, die (noch) keine Notenschrift lesen können, musiktheoretische Zusammenhänge in Form farbcodierter Leuchtflächen angezeigt werden können.

Wie die Ausführungsbeispiele zeigen werden, ist es besonders vorteilhaft, wenn die Vorrichtungen zur Ausgabe von einem eine Tonigkeit anzeigenden Ausgabesignal auf einem Touchscreen oder einer anderen Eingabeeinrichtung, die eine gleichzeitige Ausgabe ermöglicht, erfolgt, so dass die Vorrichtungen zur Ausgabe mit der erfindungsgemäßen Vorrichtung zum Erzeugen eines Notensignals auf eine manuelle Eingabe hin kombiniert werden können. Hierdurch ist es dem Benutzer unmittelbar möglich, ohne seinen Blick von dem Ausgabefeld abzuwenden, auf ein Fortschreiten eines Musikstücks, beispielsweise in Form eines Akkordwechsels, eines Tonartwechsels oder einer anderen Änderung, die manuelle Eingabe dahingehend anzupassen, dass wiederum eine harmonisch klingende Tonfolge durch einen mit der Vorrichtung zum Erzeugen eines Notensignals gekoppelten Klangerzeuger erklingt.

Bevorzugte Ausführungsbeispiele der vorliegenden Erfindung werden nachfolgend Bezug nehmend auf die beiliegenden Zeichnungen näher erläutert. Es zeigen:

| | |
|---|---|
| Fig. 1 | ein schematisches Blockschaltbild einer erfin- dungsgemäßen Vorrichtung zum Erzeugen eines No- tensignals auf eine manuelle Eingabe hin; |
| Fig. 2 | eine graphische Illustration des erfindungsgemä- ßen Verfahrens zum Erzeugen eines Notensignals auf eine manuelle Eingabe hin; |
| Fig. 3 | ein schematisches Blockschaltbild einer Vorrichtung zur Ausgabe von einem eine Tonigkeit anzeigenden Ausgabesignal; |
| Fig. 4A | eine schematische Darstellung eines auf eine Gerade abgebildeten Winkelbereichs mit einer Zu- ordnung von Tonigkeiten und einem Eingabewinkel- bereich; |
| Fig. 4B | eine schematische Darstellung eines auf eine Gerade abgebildeten Winkelbereichs mit einer Zu- ordnung von Tonigkeiten und einem Eingabewinkel oder einem Eingabewinkelbereich; |
| Fig. 4C | eine schematische Darstellung eines auf eine Gerade abgebildeten Winkelbereichs mit einer Zu- ordnung von Tonigkeiten und dreier ineinander ü- berführter Eingabewinkelbereiche; |
| Fig. 4D | eine schematische Darstellung eines auf eine Gerade abgebildeten Winkelbereichs mit einer Zu- ordnung von Tonigkeiten und einem Eingabewinkel- bereich mit einer zunehmenden Größe; |
| Fig. 4E | eine schematische Darstellung eines auf eine Gerade abgebildeten Winkelbereichs mit einer Zu- ordnung von Tonigkeiten und zweier Eingabewinkel- bereiche; |
| Fig. 5A | eine schematische Darstellung eines auf eine Gerade abgebildeten Winkelbereichs mit einer Zu- ordnung von Tonigkeiten und einem mit einer Se- lektionsgewichtungsfunktion gewichteten Eingabe- winkelbereich; |
| Fig. 5B | eine schematische Darstellung eines auf eine Gerade abgebildeten Winkelbereichs mit einer Zu- ordnung von Tonigkeiten und einer räumlichen, z.B. wie in unserem Beispiel winkelabhängigen Tonverteilungsfunktion; |
| Fig. 5C | eine schematische Darstellung dreier räumlicher Tonverteilungsfunktionen; |
| Fig. 6A | eine schematische Darstellung eines auf eine Gerade abgebildeten Winkelbereichs mit einer Her- vorhebung eines einer Tonigkeit zugeordneten Win- kels; |

Fig. 6B     eine schematische Darstellung eines auf eine Gerade abgebildeten Winkelbereichs mit einer Zuordnung von Tonigkeiten und einer Hervorhebung dreier konsonant bzw. harmonisch klingender To- nigkeiten;

Fig. 6C     eine schematische Darstellung eines auf eine Gerade abgebildeten Winkelbereichs mit einer Zuordnung von Tonigkeiten und einer Hervorhebung zweier wenig harmonisch klingender Tonigkeiten;

Fig. 6D     eine schematische Darstellung eines auf eine Gerade abgebildeten Winkelbereichs mit einer Zuordnung von Tonigkeiten, dreier harmonisch klin- gender Tonigkeiten zugeordneter Winkel und zweier hervorgehobener Winkelbereiche;

Fig. 7     eine Darstellung des Symmetriemodells bzw. des Kadenzkreises am Beispiel der diatonischen Ton- leiter C-Dur bzw. a-Moll;

Fig. 8     eine Darstellung des Terzkreises;

Fig. 9     eine Darstellung der diatonischen Tonart C-Dur bzw. a-Moll im Terzkreis;

Fig. 10     eine Darstellung der gemeinsamen Tonigkeiten zweier benachbarter Tonarten am Terzkreis;

Fig. 11     eine Darstellung musiktheoretischer Zusammenhänge am Terzkreis;

Fig. 12     eine Darstellung der musiktheoretischen Verwandt- schaftsbeziehungen zwischen Tonarten am Terz- kreis;

Fig. 13     eine Darstellung zweier benachbarter Tonarten bei einer chromatischen Anordnung der Tonigkeiten (links) und einer dem Terzkreis entsprechenden Anordnung der Tonigkeiten (rechts);

Fig. 14     eine Darstellung des Prinzips der sechsfachen Tonverwertung am Beispiel der Tonigkeit C im Terzkreis;

Fig. 15     eine Darstellung des Verlaufs einer Länge des Terzkreis-Summenvektors für verschiedene Tonigkeitskombinationen;

Fig. 16     eine Darstellung des Verlaufs eines Winkels des Terzkreis-Summenvektors über der Zeit für die ersten zehn Sekunden von Bachs Brandenburgischem Konzert (Nr. 1, Allegro);

Fig. 17     eine Darstellung des Verlaufs eines Winkels des Symmetriekreis-Summenvektors für verschiedene Dreiklänge;

Fig. 18     eine Darstellung des Verlaufs der Länge eines Symmetriekreis-Summenvektors für verschiedene In- tervalle;

Fig. 19     eine Darstellung zweier Verläufe der Länge von Terzkreis-Summenvektoren für verschiedene Intervalle;

Fig. 20     eine Darstellung zweier Verläufe der Länge des Symmetriekreis-Summenvektors für verschiedene Ak- kordvarianten bzw. Tonkombinationen;

Fig. 21     eine Darstellung des Verlaufs einer psychometri- schen Untersuchung zur Bewertung des Konsonanz- empfindens mit Bezug auf das Symmetriemodell;

Fig. 22     ein schematisches Blockschaltbild eines Ausfüh- rungsbeispiels einer erfindungsgemäßen Vorrich- tung zum Erzeugen eines Notensignals und einer Vorrichtung zum Ausgeben von einem eine Tonigkeit anzeigenden Ausgabesignal;

Fig. 23     eine Darstellung eines Ausführungsbeispiels einer Bedieneinrichtung einer erfindungsgemäßen Vor- richtung zum Erzeugen eines Notensignals;

Fig. 24A bis 24D      eine Darstellung von vier Ausführungsbeispielen von Eingabeeinrichtungen zur Definition eines Startwinkels;

Fig. 25A bis 25C      eine Darstellung dreier Ausführungsbeispiele ei- ner Bedieneinrichtung zur Definition eines Öffnungswinkels;

Fig. 26      eine Darstellung eines Ausführungsbeispiels einer Bedieneinrichtung einer erfindungsgemäßen Vor- richtung zum Erzeugen eines Notensignals und ei- ner Vorrichtung zur Ausgabe von einem eine Tonig- keit anzeigenden Ausgabesignal (HarmonyPad);

Fig. 27      eine Darstellung eines Ausführungsbeispiels einer Bedieneinrichtung einer erfindungsgemäßen Vor- richtung zum Erzeugen eines Notensignals und ei- ner Vorrichtung zur Ausgabe von einem eine Tonig- keit anzeigenden Ausgabesignal;

Fig. 28      ein schematisches Blockschaltbild eines Ausfüh- rungsbeispiels einer Vorrichtung zur Analyse von Audiodaten;

Fig. 29      eine Darstellung eines Ausführungsbeispiels einer Bedieneinrichtung einer erfindungsgemäßen Vor- richtung zum Erzeugen eines; und

Fig. 30A und 30B      Vergrößerte Ausschnitte der Bedieneinrichtung aus Fig. 29 mit zwei Darstellungen zweier möglicher radialer Intensitätsverteilungsfunktionen.

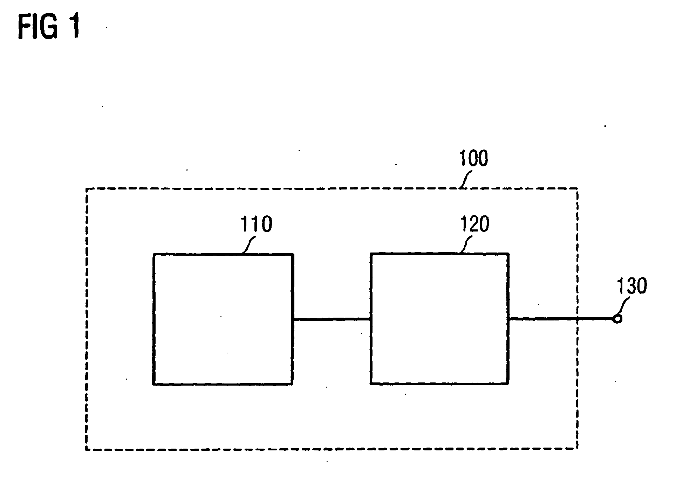

Bezug nehmend auf die Fig. 1 - 30 wird nun ein erstes Ausführungsbeispiel einer erfindungsgemäßen Vor- richtung zum Erzeugen eines Notensignals auf eine manuelle Eingabe hin beschrieben. Hierbei werden in den Fig. 1 bis 30 für Elemente mit gleichen oder ähnlichen funktionalen Eigenschaften gleiche Bezugszeichen verwendet, wobei die entsprechenden Ausführungen und Erläuterungen somit jeweils aufeinander anwendbar und austauschbar sind.

Die vorliegende Anmeldung ist wie folgt gegliedert: zunächst wird anhand zweier Ausführungsbeispiele der grundsätzliche Aufbau und die grundsätzliche Funktionsweise einer erfindungsgemäßen Vorrichtung zum Erzeugen eines Notensignals auf eine manuelle Eingabe hin und einer Vorrichtung zur Ausgabe von einem eine Tonigkeit anzeigenden Ausgabesignal'erläutert. Anschließend wird die Synthese und die Analyse von Tonkombinationen näher erläutert, bevor eine Einführung in zwei unterschiedliche Positionierungsvarianten gegeben wird. Hier schließt sich eine mathematische Modellbeschreibung an, die zum weiteren Verständnis der vorliegenden Erfindung zweckdienlich ist. Anschließend wird eine symmetriemodellbasierte und eine terzkreisbasierte Harmonieanalyse erläutert, bevor weitere Ausführungsbeispiele erläutert und diskutiert werden.

Fig. 1 zeigt ein schematisches Blockschaltbild eines ersten Ausführungsbeispiels einer erfindungsgemäßen Vorrichtung 100 zum Erzeugen eines Notensignals auf eine manuelle Eingabe hin. Die Vorrichtung 100 weist eine Bedieneinrichtung 110 auf, die mit einer Steuereinrichtung 120 gekoppelt ist, um von der Bedieneinrichtung 110 ein Eingabesignal zu empfangen. Die Steuereinrichtung 120 ist darüber hinaus mit einem Notensignalausgang 130 gekoppelt, an dem die Steuereinrichtung 120 ein von dieser erzeugtes Notensignal einer in Fig. 1 nicht gezeigten Komponente bereitstellt. Die Steuereinrichtung 120 erzeugt hierbei das Notensignal auf Basis einer Zuordnungsfunktion und auf Basis des Eingabesignals, das die Steuereinrichtung 120 von der Bedieneinrichtung 110 empfängt. Die Zuordnungsfunktion kann hierbei in der Steuereinrichtung 120 oder auch beispielsweise in einem externen Speicher abgelegt sein, auf den die Steuereinrichtung 120 dann mittelbar oder unmittelbar zugreifen kann.

An die Vorrichtung 100 und insbesondere an den Notensignalausgang 130 kann ein Klangerzeuger optional gekoppelt sein, so dass der Klangerzeuger in diesem Fall, basierend auf den von der Vorrichtung 100 bereitgestellten Notensignalen Töne bzw. Klänge erzeugt. Alternativ oder ergänzend kann an den Notensignalausgang 130 optional eine Anzeigevorrichtung, eine Analysevorrichtung oder auch eine Prozessoreinrichtung, wie etwa ein Computer oder PC, angeschlossen werden, die Notensignale der Vorrichtung 100 als Eingangssignale oder Audiodaten empfangen und entsprechend weiterverarbeiten. So kann beispielsweise ein Computer mit Hilfe der erfindungsgemäßen Vorrichtung 100 zu didaktischen Zwecken herangezogen werden.

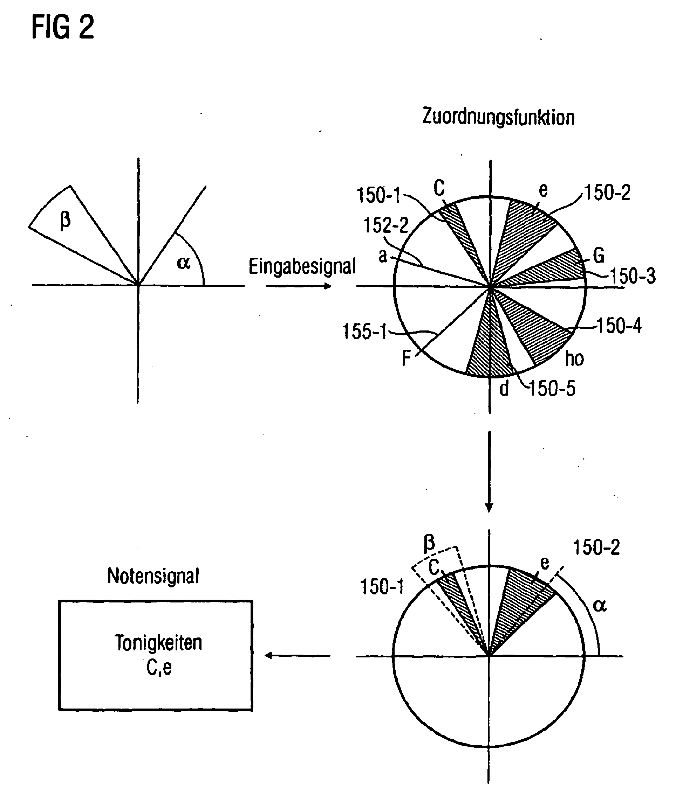

In Fig. 2 ist das erfindungsgemäße Verfahren zum Erzeugen eines Notensignals auf eine manuelle Eingabe hin und die Arbeitsweise bzw. das Vorgehen zur Erzeugung eines Notensignals durch die Steuereinrichtung 120 graphisch illustriert. Auf eine Eingabe eines Benutzers, die einen Eingabewinkel $\alpha$ oder einen Eingabewinkelbereich $\beta$ aufweist, erzeugt die Bedieneinrichtung 110 ein Eingabesignal, das der Steuereinrichtung 120 bereitgestellt wird. Die Steuereinrichtung 120 erzeugt nun, basierend auf einer Zuordnungsfunktion, die den vollen Winkelbereich eines Kreises, also den Winkelbereich von 0° bis 360° bzw. den Winkelbereich von 0 bis 2 n auf eine Tonigkeitsmenge abbildet, ein Notensignal. Hierbei kann einem jedem Winkel des vollen Winkelbereichs eine Tonigkeit der. Tonigkeitsmenge oder keine Tonigkeit zugeordnet sein. Darüber hinaus ist es möglich, einer Tonigkeit nur einen einzelnen Winkel, was einer mathematischen δ-Funktion entsprechen würde, oder einem (endlichen) Winkelbereich zuzuordnen. Hierdurch entsteht eine Zuordnungsfunktion, wie sie in Fig. 2 rechts oben schematisch dargestellt ist. Die Zuordnungsfunktion unterteilt somit den vollen Winkelbereich eines Kreises in einzelne Winkel und Winkelbereiche, denen keine, eine oder mehr Tonigkeiten zugeordnet sind. Die so entstehenden Winkelbereiche bzw. Winkel, denen Tonigkeiten zugeordnet sind, grenzen bezogen auf den Winkel so unmittelbar oder getrennt durch einen Winkelbereich, dem keine Tonigkeit zugeordnet ist, aneinander an. Solche Winkel oder Winkelbereiche werden als benachbarte Winkel bzw. Winkelbereiche bezeichnet. Hierbei wird im Rahmen der vorliegenden Anmeldung unter einem benachbarten Winkel oder einem benachbarten Winkelbereich auch ein solcher Winkel oder Winkelbereich verstanden, der sich von dem zugrundeliegenden Winkel oder Winkelbereich um 360° bzw. 2 n oder ein Vielfaches davon unterscheidet. Die Zuordnungsfunktion wird daher periodisch mit einer Periode von 360° bzw. 2 n auf die ganze Zahlenachse der reellen Zahlen fortgesetzt. Daher kann beispielsweise ein Winkelbereich, dem eine Tonigkeit zugeordnet ist und der bei einem Winkel von 359° endet, unmittelbar benachbart zu einem anderen Winkelbereich liegen, dem eine Tonigkeit zugeordnet ist und der bei einem Winkel von 1° beginnt.

Wichtig ist in diesem Zusammenhang jedoch, dass Tonigkeiten, die unmittelbar benachbarten Winkeln oder Winkelbereichen zugeordnet sind, einen kleinsten Tonabstand aufweisen, der einem kleinen Terzabstand, einem großen Terzabstand oder einem Primabstand entspricht.

Fig. 2 zeigt rechts oben eine entsprechende Darstellung einer beispielhaften Zuordnungsfunktion, die den vollen Winkelbereich eines Kreises auf eine Menge von Tonigkeiten abbildet, die die Tonigkeiten C, e, G, h0, d, F und a beinhaltet. Hierbei werden fünf Winkelbereichen 150-1, 150-2, 150-3, 150-4 und 150-5 den Tonigkeiten C, e, G, h0 und d zugeordnet. Darüber hinaus werden die Winkel 155-1 und 155-2 den beiden Tonigkeiten F und a zugeordnet.

Bei der Notation der Tonigkeiten wird, wie bereits erläutert, zwischen großgeschriebenen und kleingeschriebenen Tonigkeiten im Rahmen der vorliegenden Anmeldung meist unterschieden. Wird eine Tonigkeit mit einem großen Buchstaben bezeichnet, wie beispielsweise C oder F, so erklingt, wenn die betreffende Tonigkeit und die zwei Tonigkeiten, die sich im Uhrzeigersinn an die betreffende Tonigkeit anschließen, der entsprechende Dur-Dreiklang. Im Falle des C bedeutet dies, dass die Tonigkeiten C - e - G einen C-Dur-Dreiklang beispielsweise darstellen. Entsprechend stellen die drei Tonigkeiten F, a und C zusammen einen F-Dur-Dreiklang dar. Tonigkeiten, die mit kleinen Buchstaben bezeichnet sind, stellen entsprechend Moll-Dreiklänge dar. Ein Beispiel hierfür stellt beispielsweise der d-Moll-Dreiklang dar, der die Tonigkeiten d, F und a umfasst. Eine Sonderstellung nimmt der mit h0 bezeichnete Dreiklang ein, bei dem es sich um den verminderten Dreiklang h0 handelt, wenn, ausgehend von der Tonigkeit h0, die beiden im Uhrzeigersinn nächsten Tonigkeiten miterklingen. Hierbei handelt es sich also um den Dreiklang h - d - F, der aus einer Abfolge zweier kleiner Terzabstände besteht.

Da nun in dem gezeigten Beispiel die Eingabe des Benutzers den Eingabewinkel α und den Eingabewinkelbereich β umfasst und diesen, wie es in Fig. 2 rechts unten gezeigt ist, durch die beschriebene Zuordnungsfunktion die Tonigkeiten e und C zugeordnet werden, erzeugt die Steuereinrichtung 120 ein Notensignal, das der Tonigkeit C und e zugeordnet ist.

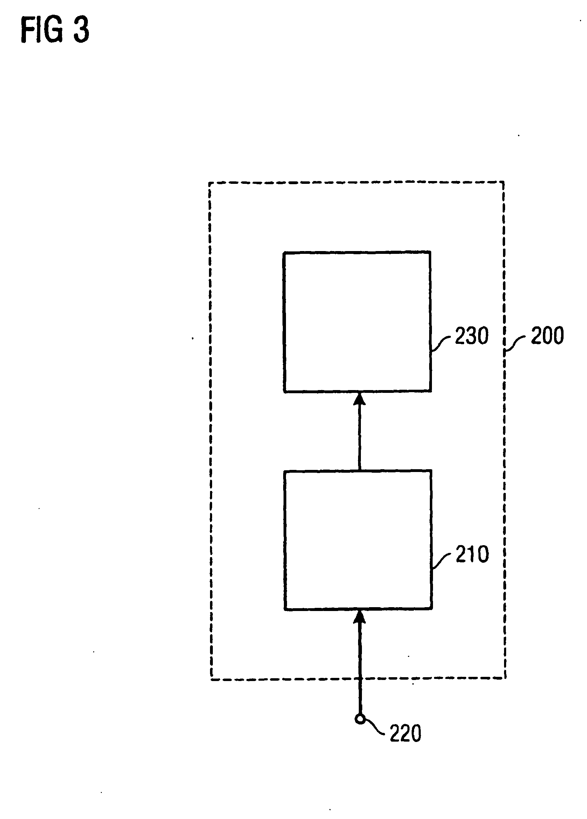

Fig. 3 zeigt ein erstes Ausführungsbeispiel einer Vorrichtung 200 zur Ausgabe von einem eine Tonigkeit anzeigenden Ausgabesignal. Die Vorrichtung 200 weist eine Anzeigesteuereinrichtung 210 auf, die mit einem Eingangssignalanschluss 220 gekoppelt ist. Darüber hinaus weist die Vorrichtung 200 ein Anzeigefeld 230 auf, das mit der Anzeigesteuereinrichtung 210 gekoppelt ist.

Empfängt nun die Anzeigesteuereinrichtung 210 über den Eingangssignalanschluss 220 ein eine Tonigkeit anzeigendes Eingangssignal, so steuert die Anzeigesteuereinrichtung das Ausgabefeld 230 derart an, dass abhängig von dem Eingangssignal das Ausgabefeld 230 ein entsprechendes Ausgabesignal ausgibt. Je nach konkreter Ausgestaltung des Ausgabefeldes 230 kann es sich hierbei beispielsweise um eine bezogen auf eine Ausgabefeldmitte vorbestimmte Ausgabefeldradialrichtung handeln, der die entsprechende Tonigkeit zugeordnet ist. Eine konkrete, technische Realisierung sieht beispielsweise so aus, dass auf einem LCD-Display (LCD = liquid crystal display = FLüssigkeitskristallanzeige), einem Bildschirm oder einer anderen (pixelbasierten) Anzeige die zugehörige Ausgabefeldrichtung in Form einer Linie, einem Kreisssektor, einem Kreisausschnitt eines kleinen Kreises oder Bereichs in der entsprechenden Ausgabefeldradialrichtung oder durch eine andere Möglichkeit optisch hervorgehoben wird.

Im Falle eines mechanischen Ausgabefeldes kann beispielsweise unter der betreffenden Ausgabefeldradialrichtung bezogen auf die Ausgabefeldmitte ein entsprechendes Element des Ausgabefeldes vibrieren, erhöht oder auf andere Art und Weise mechanisch hervorgehoben werden. Hierdurch ist beispielsweise auch einem Blinden eine entsprechende Hervorhebung kenntlich zu machen.

Ebenso ist es möglich, dass das Ausgabefeld eine Mehrzahl von Ausgabebereichen auf einem oval/kreisförmigen Ausgabefeldumfang aufweist und dass bei einer entsprechenden Ansteuerung durch die Anzeigesteuereinrichtung 210 ein zugehöriger Ausgabebereich hervorgehoben wird. Auch in diesem Fall kann die Hervorhebung auf optischem oder mechanischem Wege erfolgen, also beispielsweise durch Aufleuchten eines entsprechenden Ausgabebereichs oder durch mechanische Vibration eines Ausgabebereichs. Hierbei wird im Rahmen der vorliegenden Anmeldung unter einer oval/kreisförmigen Anordnung eine Anordnung verstanden, bei der bezogen auf einen zentralen Punkt die Elemente der Anordnung, hier also die Ausgabebereiche, unter einer Mehrzahl von Winkeln bezogen auf eine Nullrichtung mit einem von dem Winkel abhängigen Radius angeordnet sind. Eine Differenz zwischen einem maximal auftretenden Radius und einem minimal auftretenden Radius unterscheidet sich hierbei typischerweise von einem mittleren Radius um weniger als 70 % und vorzugsweise um weniger als 25 %.

Neben einer eigenständigen Nutzung einer Vorrichtung 200 beispielsweise in Form einer Darstellung auf einem Bildschirm einem Display oder einem anderen Ausgabefeld kann die Vorrichtung 200 auch mit einer erfindungsgemäßen Vorrichtung 100 zum Erzeugen eines Notensignals kombiniert werden. Im Falle einer Kombination einer erfindungsgemäßen Vorrichtung 100 zum Erzeugen eines Notensignals und einer Vorrichtung 200 zur Ausgabe von einem eine Tonigkeit anzeigenden Ausgabesignal in ein System können die Bedieneinrichtung 110 bzw. die Zuordnungsfunktion, die in der Steuereinrichtung 120 implementiert sein kann, und das Ausgabefeld 230 so aufeinander abgestimmt, dass die Bedieneinrichtung 110 und/oder das Ausgabefeld 230 die Zuordnungsfunktion räumlich nachbildet. Hierbei wird im Rahmen der vorliegenden Anmeldung unter "räumlich nachbilden" eine Anordnung verstanden, bei der Elemente einer Anordnung, also beispielsweise Eingabeeinrichtungen, Ausgabefeldradialrichtungen und Ausgabebereiche, bezogen auf einen zentralen Punkt so angeordnet sind, dass Elemente, die einer bestimmten Tonigkeit zugeordnet sind, unter einem solchen Winkel angeordnet sind, dass auch eine Zuordnungsfunktion dem entsprechenden Winkel die entsprechende Tonigkeit zuordnet. Ein entsprechendes Ausführungsbeispiel stellt das sogenannte HarmonyPad, das weiter unten beschrieben wird, dar.

Die chromatische Tonleiter besteht aus einer Folge von zwölf Halbtönen, die jeweils einen Tonabstand von einer kleinen Sekunde aufweisen. Mit anderen Worten umfasst die chromatische Tonleiter zwölf Halbtöne, die zu einer Oktave gehören. Jedem Ton und Halbton ist daher eine Frequenz einer Schallwelle oder einer anderen mechanischen Schwingung zugeordnet. Aufgrund der in der abendländischen Musik üblichen Einteilung des hörbaren Spektrums in Oktaven mit jeweils genau zwölf Halbtönen kann so jeder Ton und Halbton einer bestimmten Oktave und innerhalb einer Oktave einer bestimmten Tonigkeit zugeordnet werden. Mit anderen Worten bedeutet dies, dass ein Halbton eindeutig durch die Oktave und seine Tonigkeit bestimmt ist.

Anders ausgedrückt bedeutet dies, dass man von einer Tonigkeit spricht, wenn bei einem Ton vernachlässigt wird, zu welcher Oktave er gehört. In der abendländischen Musik und ihren Instrumenten, also beispielsweise dem Klavier, sind somit die zwölf Tonigkeiten D, Dis, E, F, Fis, G, Gis, A, Ais, B bzw. H, C und Cis definiert, wobei der Übersichtlichkeit halber eine Angabe enharmonischer Verwechslungen an dieser Stelle nicht erfolgt.

In der Musik bezeichnet eine Prime oder ein Primabstand einen Tonabstand von einem Halbton, wobei der Startton und der Endton mitgezählt werden. Mit anderen Worten weisen zwei Töne in einem Primabstand die gleiche Frequenz bzw. Grundfrequenz auf (Frequenzverhältnis der Töne 1:1), so dass es sich um den gleichen Ton handelt. Unter einer kleinen Sekunde oder unter einem kleinen Sekundenabstand wird in der Musik ein Tonabstand zweier Halbtöne verstanden, wobei auch hier wiederum die beiden Töne, die das Intervall bilden, mitgezählt werden. Entsprechend wird unter einer kleinen Terz bzw. einem kleinen Terzabstand ein Tonabstand von vier Halbtönen, unter einer großen Terz bzw. einem großen Terzabstand ein Intervall mit fünf Halbtonschritten und unter einer Quinte bzw. einem Quintabstand ein Intervall mit acht Halbtönen verstanden, wobei jeweils die beiden Töne, die das Intervall bilden, mitgezählt werden.

Bei der Notation der Tonigkeiten wird im Rahmen der vorliegenden Anmeldung häufig zwischen großgeschriebenen und kleingeschriebenen Tonigkeiten unterschieden. Wird eine Tonigkeit mit einem großen Buchstaben bezeichnet, beispielsweise C oder F, so deutet dies an, dass die betreffende Tonigkeit der Grundton eines entsprechenden Dur-Dreiklangs darstellt, also im Fall oben einen C-Dur-Dreiklang der F-Dur-Dreiklang. Entsprechend worden Tonigkeiten im Rahmen der vorliegenden Anmeldung, die einen Grundton eines Mol-Dreiklangs darstellen mit kleinen Buchstaben bezeichnet. Ein Beispiel hierfür stellt der a-Mol-Dreiklang dar.

Um ein besseres Verständnis der im weiteren Verlauf der vorliegenden Anmeldung geschilderten Ausführungsbeispiele zu ermöglichen, wird nun zunächst die Synthese sinnvoll klingender Tonkombinationen beleuchtet, bevor in weiteren Abschnitten die Analyse von Tonkombinationen, die Positionierungsvarianten von Basistönen im Tonraum, die mathematische Modellbeschreibung und die symmetriemodellbasierte und terzkreisbasierte Harmonieanalyse beschrieben wird.

## Synthese sinnvoll klingender Tonkombinationen

Das Grundprinzip, das hinter allen in diesem. Dokument vorgeschlagenen Ausführungsbeispielen steht, ist folgendes: In einem sogenannten Tonraum werden Basistöne bzw. Tonigkeiten so platziert, dass benachbarte Töne bzw. Tonigkeiten sinnvoll klingende Tonkombinationen ergeben. Hierbei wird im Rahmen der vorliegenden Anmeldung im Allgemeinen immer eine oval/kreisförmige Anordnung der Basistöne zugrundegelegt. Aufgrund dieser Platzierung ist es möglich, harmonisch klingende Musik durch die Auswahl eines geeigneten Ebenenausschnitts oder Raumausschnitts zu kreieren. Aufgrund der Anordnung der Basistöne in einer oval/kreisförmigen Anordnung umfasst der Ebenenausschnitt bzw. Raumausschnitt wenigstens einen Eingabewinkel oder einen Eingabewinkelbereich, sofern überhaupt ein Eingabewinkel oder Eingabewinkelbereich von dem Benutzer ausgewählt wurde. Der gewählte Raumausschnitt kann stufenlos oder sprunghaft in seiner Ausdehnung und in seinem Schwerpunkt, also seiner Lage, verändert werden. Darüber hinaus ist es möglich, den gewählten Raumausschnitt mit einer Selektionsgewichtungsfunktion zu belegen. Die Selektionsgewichtungsfunktion ermöglicht es zu definieren, mit welcher relativen Lautstärke die durch den Raumausschnitt erfassten Basistöne bzw. Tonigkeiten gespielt werden sollen. An diskreten Positionen des Tonraums werden also Basistöne platziert.

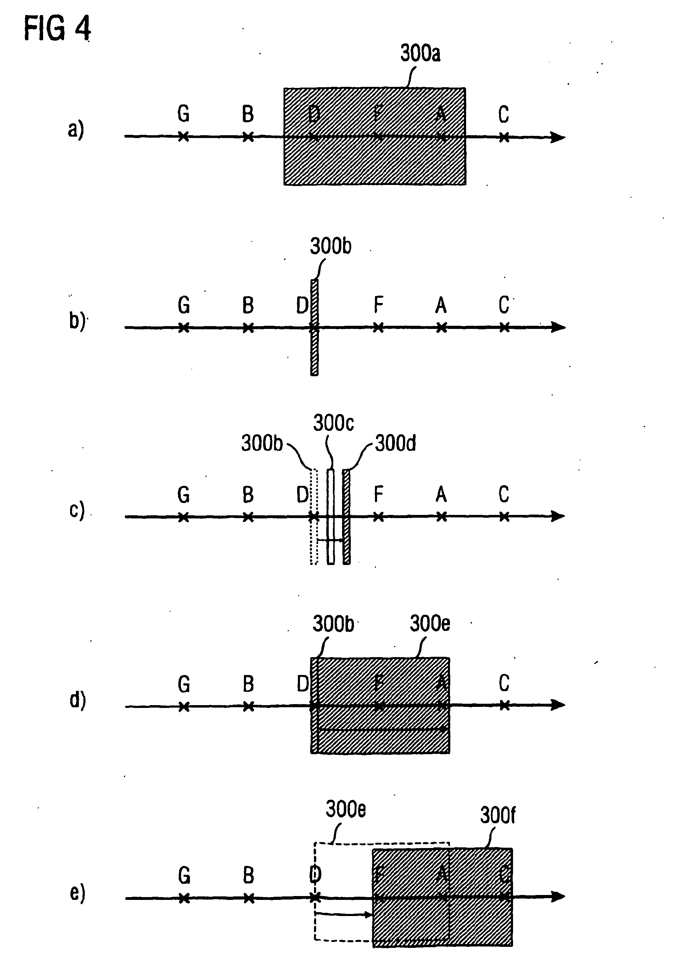

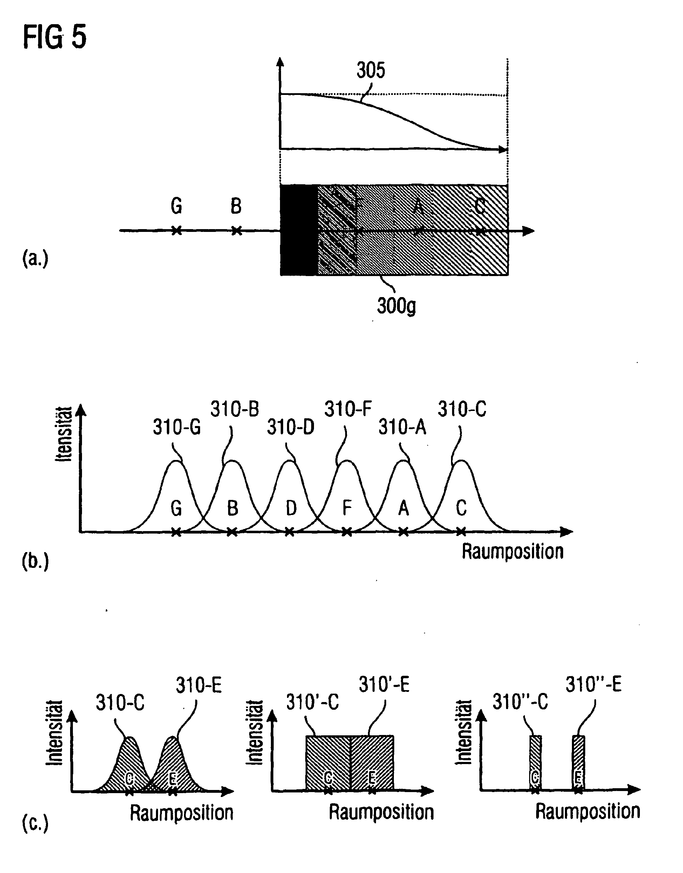

Was geschieht aber mit den Positionen dazwischen? Welche Töne erklingen, wenn ein Raumausschnitt gewählt wurde, der zwischen zwei diskreten Basistönen liegt? Um dieses Problem zu lösen, wird zusätzlich zur Selektionsgewichtungsfunktion eine räumliche Tonverteilungsfunktion definiert. Jeder im Tonraum platzierte Basiston bzw. Tonigkeit besitzt eine solche Funktion, die in diesem Fall als räumliche Einzeltonverteilungsfunktion bezeichnet wird. Durch Einführen der räumlichen Tonverteilungsfunktion bzw. der räumlichen Einzeltonverteilungsfunktionen, wobei jeder Tonigkeit bzw. jedem Basiston eine entsprechende räumliche Einzeltonverteilungsfunktion zugeordnet ist, so dass sich die räumliche Tonverteilungsfunktion als Überlagerung (z. B. durch Addition unter Berücksichtigung der Tonigkeiten) der räumlichen Einzeltonverteilungsfunktionen ergibt. Die räumliche Tonverteilungsfunktion sorgt also dafür, dass ein Ton nicht nur einen unendliche kleinen diskreten Punkt bzw. im Falle eines oval/kreisförmigen Tonraums einen einzigen Winkel einnimmt, sondern einen Raumausschnitt bzw. endlichen Winkelbereich. Die durch zwei Basistöne eingenommenen Raumausschnitte können hierbei überlappen. Es kann somit auch einem Winkel mehr als eine Tonigkeit, insbesondere zwei Tonigkeiten, zugeordnet sein. Die räumliche Tonverteilungsfunktion und damit auch die räumlichen Einzeltonverteilungsfunktionen sind Teilaspekte de Zuordnungsfunktion, die beispielsweise in der Steuereinrichtung, aber auch außerhalb beispielsweise im Rahmen eines Speichers abgelegt sein kann. Die hier vorgestellten Prinzipien bieten somit völlig neuartige Möglichkeiten in der Gestaltung polyphoner Audiosignale, wie dies anhand der Beschreibung der Ausführungsbeispiele im weiteren Verlauf der vorliegenden Anmeldung deutlich werden wird. Möglichkeiten, die diese Anordnung von Basistönen in dem Tonraum bietet, werden im weiteren Verlauf an den Fig. 4 und 5 näher erläutert.

Fig. 4A zeigt so eine schematische Darstellung eines auf eine Gerade abgebildeten Winkelbereichs mit einer Zuordnung von Tonigkeiten, wobei hier der Einfachheit halber die Tonigkeiten nicht mit großen und kleinen Buchstaben bezeichnet sind, um die zugehörige Klangfarbe (Moll-Dreiklang oder Dur-Dreiklang) näher zu spezifizieren, wie dies weiter oben erläutert wurde. Die Pfeilrichtung gibt hierbei die Richtung größer werdender Winkel bzw. den Uhrzeigersinn an. In Fig. 4A sind also die Basistöne G, B, D, F, A und C im eindimensionalen Tonraum platziert. Weiterhin ist ein Raumausschnitt 300a ausgewählt, der die Töne des d-Moll-Akkordes (D - F - A) aufweist. Stellt also der in Fig. 4A dargestellte Tonraum graphisch die Zuordnungsfunktion der erfindungsgemäßen Vorrichtung 100 zum Erzeugen eines Notensignals dar und stellt darüber hinaus der gewählte Raumausschnitt 300a den Eingabewinkelbereich dar, so würde ein an die erfindungsgemäße Vorrichtung 100 angeschlossener Klangerzeuger einen d-Moll-Akkord spielen. Durch Auswahl des Raumausschnittes 300a würde also so ein d-Moll-Akkord erzeugt.

In Fig. 4B ist der Tonraum, der in Fig. 4A bereits gezeigt war, erneut dargestellt. Im Unterschied zu Fig. 4A ist in Fig. 4B jedoch ein Raumausschnitt 300b gezeigt, der im Vergleich zu dem Raumausschnitt 300a sehr klein ist. Der Raumausschnitt 300b weist eine Ausdehnung auf, die fast verschwindet bzw. null ist, was einer Auswahl eines einzelnen Winkels, also eines einzigen Eingabewinkels entsprechen würde. Der Raumausschnitt 300b liegt direkt auf einem Basiston, nämlich dem Basiston D. Ein angeschlossener Klangerzeuger würde jetzt einen Einzelton D spielen.

In Fig. 4C ist wiederum der bereits in Fig. 4A gezeigte Raumausschnitt dargestellt. Fig. 4C zeigt, wie der Raumausschnitt 300b, der bereits in Fig. 4B gezeigt wurde, von der Position des Basistons D kontinuierlich über eine Position eines Raumausschnitts 300c in einer Mittenposition zwischen den Basiston D und den Basiston F bewegt wird, so dass der Raumausschnitt 300b am Ende seiner Bewegung in einen Raumausschnitt 300d übergegangen ist. Ein angeschlossener Klangerzeuger würde entsprechend der Position des Raumausschnittes 300b, 300c oder 300d den erklingenden Ton D lautstärkemäßig ausblenden und den Ton F lautstärkemäßig einblenden, wenn Lautstärkeinformationen in den erzeugten Notensignalen umfasst sind. Details in Bezug auf das Einblenden und Ausblenden von Tönen wird durch die Selektionsgewichtungsfunktion und die räumliche Tonverteilungsfunktion ermöglicht, die weiter unten näher erläutert werden. Während also Fig. 4B eine Erzeugung eines Einzeltons zeigt, zeigt Fig. 4C ein Überblenden zwischen benachbarten Basistönen.

In Fig. 4D ist ein Beispiel für eine Überblendung zwischen einem Einzelton und einem Akkord dargestellt. So ist in Fig. 4D wiederum der bereits in Fig. 4A gezeigte Tonraum dargestellt. In diesem Fall wird der gewählte Raumausschnitt ausgehend von dem Raumausschnitt 300b aus Fig. 4B kontinuierlich auf eine Breite eines Dreiklangs ausgedehnt, was einem Raumausschnitt 300e entspricht. Ein angeschlossener Tonerzeuger würde anfangs wiederum nur den Ton D spielen. Anschließend würde während der Ausdehnung des angewählten Raumausschnittes langsam der Ton F hinzugeblendet und dann anschließend der Ton A. Hierdurch würde der Ton D stufenlos in einen d-Moll-Dreiklang "konvertiert".

In Fig. 4E wird ein Überblenden zwischen unterschiedlichen Akkorden illustriert. Fig. 4E zeigt so, wie der Raumausschnitt 300e aus Fig. 4D kontinuierlich so verschoben wird, dass dieser in einen neuen Raumausschnitt 300f Übergeht. Der Raumausschnitt 300f beginnt danach nicht mehr mit dem Ton D, sondern mit dem Ton F. Ein angeschlossener Tonerzeuger würde also anfangs einen d-Moll-Akkord spielen und diesen anschließend stufenlos in einen F-Dur-Akkord überblenden.

In Fig. 5A ist der Effekt einer Selektionsgewichtungsfunktion illustriert. So zeigt Fig. 5A wiederum den bereits aus Fig. 4A bekannten Tonraum. In Fig. 5A umfasst der gewählte Raumausschnitt die Töne D, F, A und C. Ohne Einführung einer Selektionsgewichtungsfunktion würde ein angeschlossener Klangerzeuger einen d-Moll-7-Akkord Spielen, bei dem alle Töne die gleiche Lautstärke besitzen. Durch Einführung einer Selektionsgewichtungsfunktion 305, wie sie ebenfalls in Fig. 5A dargestellt ist, kann die Lautstärke eines jeden Tons angepasst werden. In diesem Beispiel ist die Selektionsgewichtungsfunktion 305 so gewählt, dass eine Betonung auf dem Grundton D und der Terz F des Akkordes liegt und dass die Quinte A und die Septime C mit einer verringerten Lautstärke gespielt werden.

In Fig. 5B ist der Einfluss einer räumlichen Tonverteilungsfunktion illustriert. So zeigt Fig. 5B wiederum den bereits in Fig. 4A gezeigten Tonraum. Jedem Basiston bzw. jeder Tonigkeit ist in diesem Beispiel jedoch eine räumliche Tonverteilungsfunktion 310-C, 310-A, 310-F, 310-D, 310-B und 310-G zugeordnet. Dadurch ist jeder Basiston nicht nur einer diskreten Stelle bzw. einem einzigen Winkel zugeordnet, sondern auch in einer gewissen Umgebung um den Basiston herum definiert. Hierbei ist bei dem in Fig. 5B gezeigten Beispiel jedem Basiston eine glockenförmige räumliche Einzeltonverteilungsfunktion zugewiesen.

In Fig. 5C sind drei Beispiele für unterschiedliche Raumverteilungsfunktionen bzw. räumliche Tönverteilungsfunktionen dargestellt. Genauer gesagt zeigt Fig. 5C drei Beispiele von räumlichen Einzeltonverteilungsfunktionen, die ihren jeweiligen Basistönen bzw. Tonigkeiten zugeordnet eingezeichnet sind. In Fig. 5C sind links zwei glockenförmige Einzeltonverteilungsfunktionen 310-C, 310-E in einem Tonraum dargestellt, der nur die beiden Basistöne bzw. Tonigkeiten C und E umfasst. Die beiden räumlichen Einzeltonverteilungsfunktionen 310-C und 310-E weisen bei ihren jeweiligen Basistönen bzw. Tonigkeiten C und E eine maximale Lautstärkeinformation in Form einer Intensität auf. Ausgehend von den Basistönen C und E fallen die Lautstärkeinformationen rasch ab. In einem Bereich des Tonraums, der zwischen den beiden Basistönen C und E liegt, überlappen die beiden räumlichen Einzeltonverteilungsfunktionen, so dass eine erfindungsgemäße Vorrichtung zum Erzeugen eines Notensignals Notensignale erzeugen würde, die beiden Tonigkeiten entsprechen, wenn beispielsweise der Eingabewinkel in diesem Bereich des Tonraums liegt.

Die mittlere Teilabbildung von Fig. 5C zeigt eine weitere Möglichkeit einer räumlichen Einzeltonverteilungsfunktion. In dieser Teilabbildung sind über dem gleichen Tonraum, wie er auch in Fig. 5C links gezeigt ist, zwei rechteckigförmige räumliche Einzeltonverteilungsfunktionen 310'-C und 310'-E gezeigt. Die beiden räumlichen Einzeltonverteilungsfunktionen 310'-C, 310'-E erstrecken sich jeweils ausgehend von dem ihnen zugeordneten Basiston C und E zu beiden Seiten über einen Winkelbereich bzw. Raumbereich, der einem halben Abstand zweier benachbarter Basistöne in dem Tonraum entspricht. Innerhalb dieser Raumbereiche ist die Lautstärkeinformation in Form der Intensität in diesem Beispiel konstant. Darüber hinaus überlappen im Unterschied zu dem links in Fig. 5C gezeigten Beispiel die beiden räumlichen Einzeltonverteilungsfunktionen 310'-C und 310'-E nicht.

In Fig. 5C ist rechts ein drittes Beispiel zweier räumlicher Einzeltonverteilungsfunktionen 310"-C und 310"-E über dem bereits links in Fig. 5C gezeigten Tonraum dargestellt. Im Unterschied zu den beiden räumlichen Einzeltonverteilungsfunktionen 310'-C, 310'-E sind die Winkelbereiche bzw. Raumbereiche, in denen die beiden räumlichen Einzeltonverteilungsfunktionen 310"-C und 310"-E eine von Null verschiedene Lautstärkeinformation aufweisen, deutlich reduziert. Aber auch hier sind diese beiden räumlichen Einzeltonverteilungsfunktionen rechteckig, so dass unabhängig von der genauen Position innerhalb des Raumbereichs, in dem die beiden räumlichen Einzeltonverteilungsfunktionen eine von Null verschiedene Lautstärkeinformation aufweisen, diese immer konstant ist.

Ist nun, wie schon im Zusammenhang mit Fig. 4 erläutert wurde, an eine erfindungsgemäße Vorrichtung zum Erzeugen eines Notensignals ein Klangerzeuger angeschlossen, und wird als Eingabewinkelbereich ein sehr schmaler Raumausschnitt oder auch ein einzelner Eingabewinkel jeweils ausgehend von dem Basiston C von links nach rechts zu dem Basiston E verschoben, wird klanglich folgendes passieren: In dem links in Fig. 5C gezeigten Fall würde eine weiche Überblendung zwischen den Tönen C und E stattfinden. Während der eine Ton ausgeblendet wird, wird der andere langsam eingeblendet. In dem in der Mitte von Fig. 5C gezeigten Fall wird eine Zeit lang der Ton C erklingen. Plötzlich wird der Ton C verstummen und der Ton E erklingen. In dem rechts in Fig. 5C gezeigten Fall wird der Ton C eine kurze Zeit erklingen, während der Eingabewinkel bzw. der sehr kleine Eingabewinkelbereich sich innerhalb des Raumbereichs befindet, in dem die räumliche Einzeltonverteilungsfunktion 310"-C eine von Null verschiedene Lautstärkeinformation aufweist. Im Anschluss hieran, wenn also der Eingabewinkel bzw. der sehr kleine Eingabewinkelbereich diesen Bereich verlassen hat, würde der angeschlossene Klangerzeuger keinen Ton erzeugen, so dass in diesem Fall Stille herrscht. Erreicht anschließend der Eingabewinkel oder auch der sehr kleine Eingabewinkelbereich den Raumbereich, in dem die räumliche Einzeltonverteilungsfunktion 300"-E eine von Null verschiedene Lautstärkeinformation aufweist, so wird der Ton E erklingen.

Fig. 5C bietet darüber hinaus die Möglichkeit, die Zuordnungsfunktion auf die einem Winkel zugeordneten Tonigkeiten näher zu untersuchen. Von praktischer Bedeutung sind in diesem Zusammenhang im Wesentlichen drei Fälle: Zunächst kann einem bestimmten Winkel keine Tonigkeit, eine Tonigkeit oder zwei Tonigkeiten zugeordnet sein.

In dem Fall, dass einem Winkel keine Tonigkeit zugeordnet ist, kann so beispielsweise der in Fig. 5C rechts skizzierte Fall vorliegen. In diesem Fall liegt der betreffende Winkel in dem Raumbereich zwischen den beiden räumlichen Einzeltonverteilungsfunktionen 310''-C und 310''-E. Genauer gesagt liegt der betreffende Winkel in dem Raumbereich zwischen dem Basiston C und E, in dem beide räumlichen Einzeltonverteilungsfunktionen 310''-C und 310''-E eine verschwindende Lautstärkeinformation aufweisen. Betrachtet man ausgehend von dem betreffenden Winkel die Tonverteilungsfunktion in einer ersten Richtung, bei der es sich beispielsweise um die durch den Pfeil der Abszisse angedeutete Richtung im Uhrzeigersinn in Bezug auf die der Zuordnungsfunktion zugrundeliegende Definitionsmenge des vollen Winkelbereichs eines Kreises handelt, so stößt man bei einem ersten Nächstnachbarwinkel auf einen Winkel, dem die Tonigkeit E zugeordnet ist. In einer zweiten Richtung, die der ersten Richtung entgegengesetzt ist, erreicht man ausgehend von dem betreffenden Winkel einen zweiten Nächstnachbarwinkel, dem aufgrund der Zuordnungsfunktion eine Tonigkeit C zugeordnet ist. Diese beiden dem ersten Nächstnachbarwinkel und dem zweiten Nächstnachbarwinkel zugeordneten Tonigkeiten weisen nun einen kleinsten Tonabstand auf, der einer großen Terz entspricht. In diesem Zusammenhang ist es notwendig darauf hinzuweisen, dass prinzipiell die beiden Tonigkeiten C und E auch andere, größere Tonabstände als den einer großen Terz aufweisen können. Dies liegt daran, dass Basistöne bzw. Tonigkeiten keine Angaben bezüglich der Oktavierung bzw. Oktavlage aufweisen. Aus diesem Grund weisen die beiden Tonigkeiten C und E beispielsweise auch einen Tonabstand einer kleinen Sechste auf, der jedoch größer ist als der kleinste Tonabstand, der einer großen Terz entspricht.

Ist dem betreffenden Winkel hingegen eine Tonigkeit zugeordnet, so lässt sich dies ebenfalls anhand der in Fig. 5C rechts dargestellten Zuordnungsfunktion illustrieren. In diesem Zusammenhang ist es wichtig zu beachten, dass dieser Fall in mehrere Unterfälle zerfällt. Zunächst kann der betreffende Winkel beispielsweise innerhalb des Raumbereichs bzw. Winkelbereichs liegen, dem die Zuordnungsfunktion, hier in Form der räumlichen Einzeltonverteilungsfunktion 310''-C, die Tonigkeit C zuordnet. Liegt also der betreffende Winkel innerhalb des Bereichs, in dem die räumliche Einzeltonverteilungsfunktion 310''-C eine von Null verschiedene Lautstärkeinformation aufweist, so handelt es sich bei dem ersten Nächstnachbarwinkel und dem zweiten Nächstnachbarwinkel um Winkel, die "unmittelbar neben" dem betreffenden Winkel liegen, da die räumliche Einzeltonverteilungsfunktion 310''-C einem kontinuierlichen Winkelbereich die Tonigkeit C mit einer entsprechenden, konstanten Lautstärkeinformation zuordnet. In diesem Zusammenhang ist im Rahmen der vorliegenden Anmeldung unter "unmittelbar neben" eine mathematische Beschreibung im Sinne einer $\epsilon$-Umgebung zu verstehen. In diesem Fall ist sowohl dem ersten Nächstnachbarwinkel wie auch dem zweiten Nächstnachbarwinkel jeweils die Tonigkeit C zugeordnet, die beide bezogen auf die dem betreffenden Winkel zugeordnete Tonigkeit als kleinsten Tonabstand einen Primabstand aufweisen, da die drei zugeordneten Tonigkeiten alle identisch sind. Auch hier ist der Hinweis angebracht, dass aufgrund der fehlenden Information bezüglich der Oktavierung der Basistöne bzw. Tonigkeiten zwischen der Tonigkeit C und der Tonigkeit C beispielsweise auch als Tonabstand eine Oktave liegen kann, die jedoch nicht den kleinsten Tonabstand darstellt.

In einem zweiten Unterfall des Falls, in dem dem betreffenden Winkel eine Tonigkeit zugeordnet ist, handelt es sich beispielsweise um einen "Eckwinkel" des Raumbereichs, in dem die räumliche Einzeltonverteilungsfunktion 310''-C eine von Null verschiedene Lautstärkeinformation aufweist. In diesem Zusammenhang soll der Begriff "Eckwinkel" bedeuten, dass zwar dem betreffenden Winkel noch die Tonigkeit C zugeordnet ist, dass aber in dem in Fig. 5C rechts gezeigten Beispiel jedem Winkel, der von dem betreffenden Winkel in der ersten Richtung (also im Uhrzeigersinn) einen Abstand aufweist, der kleiner ist als die Hälfte des Abstands der beiden gezeigten Basistöne entspricht, keine Tonigkeit zugeordnet ist. Einfacher ausgedrückt ist dem Winkel unmittelbar neben dem betreffenden Winkel keine Tonigkeit zugeordnet. In diesem Fall entspricht der erste Nächstnachbarwinkel in der ersten Richtung in Fig. 5C rechts dem linken Eckwinkel des Raumbereichs, in dem die räumliche Einzeltonverteilungsfunktion 310''-E eine von Null verschiedene Lautstärkeinformation aufweist.

Dem zweiten Nächstnachbarwinkel ist, wie bereits in dem Unterfall vorher, auch die Tonigkeit C zugeordnet. In diesem Fall weist also die Tonigkeit, die dem betreffenden Winkel zugeordnet ist, und die Tonigkeit, die dem ersten Nächstnachbarwinkel zugeordnet ist, wiederum einen kleinen Terzabstand als kleinsten Tonabstand auf, während die dem betreffenden Winkel zugeordnete Tonigkeit und die dem zweiten Nächstnachbarwinkel zugeordnete Tonigkeit als kleinsten Tonabstand einen Primabstand aufweisen. Entsprechend ergeben sich zu diesem Fall weitere Unterfälle, wenn beispielsweise nur einem einzigen Winkel eine Tonigkeit zugeordnet ist und der betreffende Winkel mit diesem Winkel übereinstimmt.

Der Fall, bei dem dem betreffenden Winkel zwei Tonigkeiten zugeordnet sind, soll nur anhand eines einzigen Unterfalls erläutert werden, der in Fig. 5C links dargestellt ist. In Fig. 5C links trifft dies beispielsweise auf den Winkel bzw. die Raumposition genau zwischen den beiden Tonigkeiten C und E zu. Dieser Unterfall weist Parallelen zu dem weiter oben geschilderten ersten Unterfall, bei dem dem betreffenden Winkel eine Tonigkeit zugeordnet war, auf. Auch in diesem Fall sind sowohl der erste Nächstnachbarwinkel als auch der zweite Nächstnachbarwinkel "unmittelbar neben" dem betreffenden Winkel angeordnet, so dass auch diesen beiden Winkeln jeweils die beiden Tonigkeiten C und E zugeordnet sind. Auch hier sind folglich die kleinsten Tonabstände zwischen den dem betreffenden Winkel zugeordneten Tonigkeiten und den den beiden Nächstnachbarwinkeln zugeordneten Tonigkeiten Primabstände (C - C und E - E) oder große Terzabstände (C - E und E - C).

Der Öffnungswinkel des Symmetriekreises bzw. des selektierten Raumausschnittes kann auch als "Jazz-Faktor" interpretiert werden. Je größer der Winkel ist, desto mehr jazztypische Töne erklingen bzw. kommen hinzu. Dazu gehören die 7er-Akkorde, die 7-9er-Akkorde und die 7-9-13er-Akkorde.

**Analyse vorhandener Tonkombinationen**

Im Folgenden wird das Grundprinzip zur Analyse von einer Tonkombination näher erläutert. Das in den letzten Abschnitten beschriebene Prinzip zur Synthese sinnvoller Klangkombinationen kann umgekehrt werden, um bestehende Klangkombinationen zu analysieren. Genauso wie bei der Synthese müssen in einem ersten Schritt Basistöne in einer Art und Weise im Tonraum positioniert werden, dass benachbarte Basistöne sinnvolle Klangkombinationen ergeben. Der so erzeugte Tonraum wird jedoch jetzt nicht dazu verwendet, um zu erzeugende Töne zu bestimmen, sondern um bereits vorhandene Töne darzustellen und zu analysieren. Dadurch ist es möglich, zu untersuchen, ob eine vorhandene Tonkombination entsprechend der in Form des Tonraums bestehenden Definition "sinnvoll" ist oder nicht. Ist eine Tonkombination sinnvoll, dann werden die Basistöne dieser Tonkombination in räumlich benachbarten Bereichen dargestellt. Ist eine Tonkombination weniger sinnvoll, dann werden die Basistöne in entfernten Bereichen dargestellt. Der Vorteil dieses Prinzips ist, dass die Begriffe "sinnvolle Tonkombination" und die Begriffe "sinnlose Tonkombination" nicht starr sind, sondern durch eine Umorganisation der Basistöne im Tonraum neu definiert werden können.

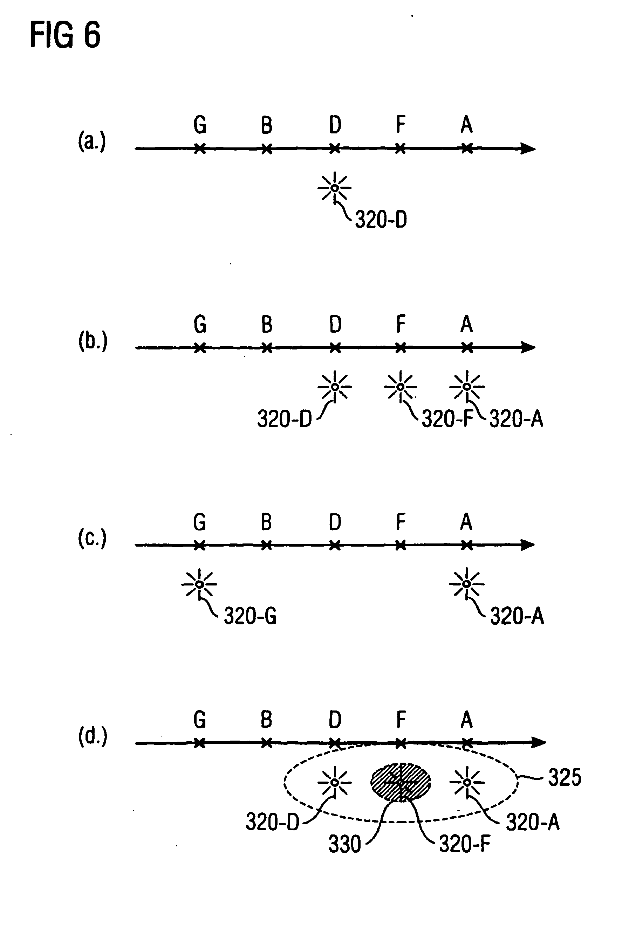

Fig. 6 zeigt vier Beispiele für eine Ausgabe auf dem Ausgabefeld 230 der Vorrichtung 200 zur Ausgabe von einem eine Tonigkeit anzeigenden Ausgabesignal. Hierbei ist zur Vereinfachung der Darstellung die oval/kreisförmige Anordnung der Ausgabefeldradialrichtung bzw. der Ausgabebereiche zu einer geraden Linie "aufgebogen" worden. Die oval/kreisförmige Anordnung der Ausgabefeldradialrichtungen bzw. der zugrundeliegende Winkelbereich ist also auf eine Gerade abgebildet worden. Hierdurch ist eine kompaktere Darstellung des Ausgabefeldes 230 mit verschiedenen angezeigten Tönen, Tonkombinationen und Klangkombinationen möglich. Die in den Fig. 6A - 6D eingezeichneten Pfeile geben hierbei wiederum die Richtung wachsender Winkel bzw. den Uhrzeigersinn an. In den Fig. 6A - 6D ist so ein Tonraum, der die Tonigkeiten G, B, D, F und A umfasst, dargestellt.

Fig. 6A zeigt den Fall, wenn der Anzeigesteuereinrichtung 210 als Eingangssignal ein Erklingen eines Tons mit einer Tonigkeit D angezeigt wird. In diesem Fall steuert die Anzeigesteuereinrichtung 210 das Ausgabefeld 230 so an, dass der dem Ton entsprechende Basiston (bzw. Tonigkeit) in dem Tonraum des Ausgabefeldes 230 markiert wird, wenn also der entsprechende Ton erklingt. In dem in Fig. 6A gezeigten Beispiel erscheint auf dem Ausgabefeld 230 eine Markierung bzw. eine Hervorhebung 320-D, bei der es sich beispielsweise um ein optisches Signal, also um ein Aufleuchten einer entsprechenden Lampe, Schaltfläche oder ähnlichem, handeln kann, oder um eine mechanische Hervorhebung, beispielsweise in Form einer Vibration. In dem in Fig. 6A gezeigten Beispiel erklingt also der Ton D, der dann auf dem Ausgabefeld 230 dargestellt wird.

Fig. 6B zeigt den Fall, dass gleichzeitig mehrere Töne erklingen, die eine sinnvolle Tonkombination ergeben. In diesem Fall werden in dem Tonraum, der auf dem Ausgabefeld 230 dargestellt wird, benachbarte Basistöne markiert bzw. hervorgehoben. Hieraus kann man ableiten, dass die räumliche Konzentriertheit aktiver Basistöne bzw. Tonigkeiten im Tonraum ein Maß für die Sinnhaftigkeit, d. h. also für die wahrgenommene Konsonanz ist. Konkret illustriert Fig. 6B dies anhand eines d-Moll-Akkords, der einer sinnvollen Tonkombination entspricht. In diesem Fall wird bei einem Erklingen des entsprechenden Akkords in dem Tonraum, also auf dem Ausgabefeld 230, die Basistöne D, F und A durch entsprechende Markierungen bzw. Hervorhebungen 320-D, 320-F und 320-A hervorgehoben.

Erklingen gleichzeitig eine weniger sinnvolle Tonkombination ergebende Töne, so liegen die entsprechenden Basistöne im Tonraum und damit auf dem Ausgabefeld, das den Tonraum räumlich nachbildet, sehr weit auseinander. Daraus kann man ableiten, dass die räumliche Ausgedehntheit aktiver Basistöne im Tonraum ein Maß für die Sinnlosigkeit, d. h. für die wahrgenommene Dissonanz, ist. In dem in Fig. 6C gezeigten Beispiel erklingen die Töne G und A, es wird also der Anzeigesteuereinrichtung 210 über den Eingangssignalanschluss 220 ein entsprechendes Eingangssignal zur Verfügung gestellt, so dass auf dem Ausgabefeld 230 die zugehörigen Basistöne G und A durch die Markierungen bzw. Hervorhebungen 320-G und 320-A markiert werden. Das von diesen Töne erzeugte Intervall ist eine Sekunde, welche im Allgemeinen als relativ dissonant klingend empfunden wird. Fig. 6C zeigt also eine Markierung des Tonraums auf dem Ausgabefeld 230 bei Erklingen einer wenig sinnvollen Tonkombination, genauer gesagt einer Sekunde.

Bei mehreren erklingenden Tönen ist es möglich, nicht nur die zugehörigen Basistöne zu markieren, sondern auch auf dem Ausgabefeld 230 einen entsprechenden Bereich, der die erklingenden Töne umfasst, und einen Schwerpunkt aller erklingenden Töne im Tonraum zu berechnen und durch eine entsprechende Markierung darzustellen. Eine solche Berechnung ist mit Hilfe des weiter unten erläuterten Summenvektors möglich. Der Schwerpunkt wiederum ermöglicht es, die Klangfarbe komplizierter Tonkombinationen abzuschätzen. Fig. 6D zeigt ein Beispiel für eine. Anzeige auf einem entsprechenden Ausgabefeld 230 für einen d-Moll-Akkord. So werden bei dem in Fig. 6D gezeigten Beispiel nicht nur die Basistöne D, F und A durch die bereits in Fig. 6B gezeigten Markierungen 320-D, 320-F und 320-A markiert, sondern es wird vielmehr auch ein Bereich 325 angezeigt, der die erklingenden Basistöne bzw. ihre Markierungen umfasst. Darüber hinaus wird ebenfalls durch eine zusätzliche Markierung 330 die Lage des Schwerpunkts dargestellt.

**Positionierungsvarianten von Basistönen im Tonraum**

Was ist eine "sinnvolle Tonkombination" und was ist eine "sinnlose Tonkombination"? Es gibt keine pauschale Antwort auf diese Frage. Was wir als sinnvoll und was wir als sinnlos bewerten oder was wir als konsonant bzw. als dissonant empfinden, ist stark von subjektiven Faktoren wie Geschmack, Kultur, Bildung usw. abhängig und kann von Mensch zu Mensch variieren. Genauso wenig, wie eine umfassende Antwort auf die anfangs gestellte Frage gegeben werden kann, ist es möglich, eine Anordnung von Basistönen im Tonraum zu finden, die für alle Menschen und für alle Musikstile gültige Aussagen liefert. Jedoch ist es möglich, Positionierungsvarianten zu finden, mit deren Hilfe man Aussagen über tonale Zusammenhänge und wahrgenommene Klangempfindungen treffen kann, die für eine große Menge von Menschen gültig sind. Mit dem Terzkreis und dem Symmetriemodell werden in den nachfolgenden Abschnitten zwei Systeme erläutert, die genau dies ermöglichen.

**Das Symmetriemodell**

Das Symmetriemodell ermöglicht, viele tonale Zusammenhänge für Musikstücke zu definieren bzw. zu analysieren, die der klassischen Durkadenz folgen. Die technische Ausnutzung des Symmetriemodells ist neuartig. Die Erläuterungen in diesem Abschnitt erfolgen am Beispiel der C-Dur-Tonleiter und können auf jede andere Dur-Tonleitern übertragen werden. Zusammenfassend kann gesagt werden, dass die Hauptalleinstellungsmerkmale des Symmetriemodells

1. die Auswahl der abgebildeten Töne,

2. die Reihenfolge und

3. die symmetrische Anordnung dieser Töne um die Symmetrieachse ist.

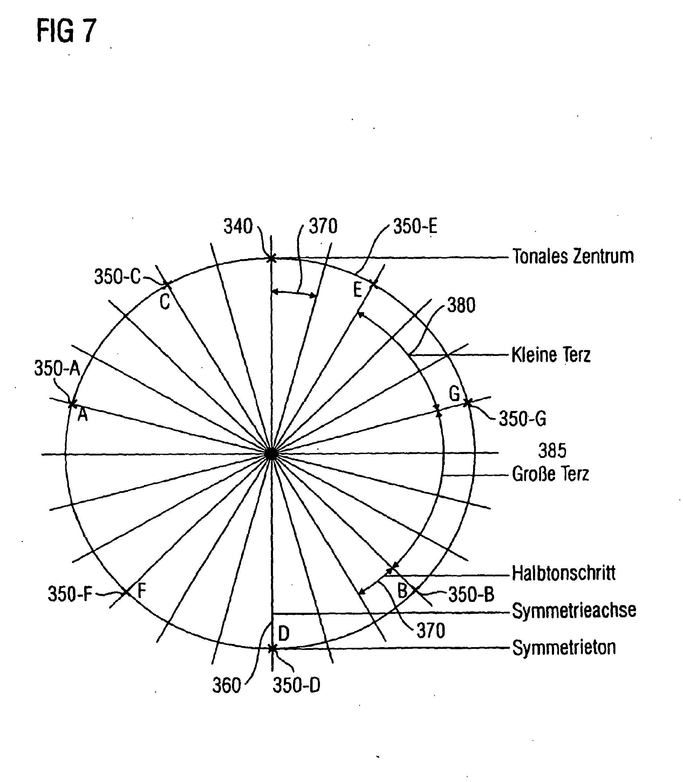

Fig. 7 zeigt eine graphische Darstellung des Symmetriemodells in Form des sogenannten Kadenzkreises für die C-Dur-Tonleiter bzw. für die a-Moll-Tonleiter. Im Rahmen der vorliegenden Anmeldung werden die Bezeichnung "Symmetriemodell" und "Kadenzkreis" zum Teil synonym verwendet. Das Symmetriemodell positioniert die sieben Töne der diatonischen Tonleiter bzw. die sieben Tonigkeiten der diatonischen Tonleiter 305-D, 350-F, 350-A, 350-C, 350-E, 350-G und 350-B auf einem Kreis oder einer oval/kreisförmigen Anordnung. Neuartig ist hierbei vor allem die Reihenfolge der Töne auf dem Kreis. Die Töne bzw. Tonigkeiten sind nicht in gleichen Abständen, sondern - angefangen bei dem zweiten Ton 350-D der Tonleiter, also dem Ton D - abwechselnd in kleinen und großen Terzen unter einem definierten Winkel auf dem Kreis positioniert.

Ein zweites, sehr wesentliches Merkmal ist die symmetrische Anordnung der Töne um eine gedachte Symmetrieachse 360. Die Symmetrieachse 360 verläuft genau durch den Ort 350-D des zweiten Tons der Tonleiter (D), weshalb dieser auch als Symmetrieton bezeichnet wird. Die restlichen bzw. weiteren Töne der Tonleiter werden symmetrisch links und rechts um den Symmetrieton 350-D positioniert.

Ist die Reihenfolge und die Symmetrie der Töne gewahrt, dann bleiben noch verschiedene Möglichkeiten, die genaue Position der Basistöne festzulegen. Eine Möglichkeit, die im Rahmen des Symmetriemodells verwendet wird, ist, die Töne entsprechend ihrem Tonabstand auf dem Kreis zu positionieren. Dazu wird der Kreis in 24 Segmente 370 eingeteilt. Jedes Segment 370 entspricht einem Halbtonintervall, wie dies auch in Fig. 7 eingezeichnet ist. Da eine kleine Terz drei Halbtönen und eine große Terz vier Halbtönen entspricht, werden zwei eine kleine Terz bildende Töne in einem Abstand von drei Segmenten 370 und zwei eine große Terz bildende Töne in einem Abstand von vier Segmenten 370 positioniert. Jedem Segment 370 entspricht somit ein Winkelabstand von $360°/24=15°$. Hieraus folgt, dass der Abstand, der einem kleinen Terzabstand entspricht, einen Öffnungswinkel von $3.15°=45°$ aufweist. Entsprechend weisen zwei Tonigkeiten, die als kleinsten Tonabstand einen großen Terzabstand aufweisen, einen Öffnungswinkel von $4.15°=60°$ auf.

In Fig. 7 ist ein Beispiel für eine solche kleine Terz 380 zwischen den beiden Tönen E und G, sowie ein Beispiel für eine große Terz 385 zwischen den beiden Tönen G und B eingezeichnet. Fig. 7 zeigt somit insgesamt die Anordnung der Basistöne im Tonraum gemäß dem Symmetriemodell. Die Töne sind - wie bereits erwähnt - symmetrisch um die durch den Symmetrieton D 350-D verlaufende Symmetrieachse 360 positioniert. Die Symmetrie ergibt sich aus den Tonabständen der Basistöne.

Hierbei wird unter einem Tonikabereich ein Bereich des in Fig. 7 dargestellten Symmetriemodells verstanden, der die vier Tonigkeiten A (350-A), C (350-C), E (350-E) und G (350-G) umfasst, sich also im Bereich des tonalen Zentrums 390 befindet. Ein als Dominantbereich bezeichneter Bereich erstreckt sich bei der in Fig. 7 gewählten Darstellung als Symmetriemodell ausgehend von dem tonalen Zentrum 390 im Uhrzeigersinn bis etwa in den Bereich des Symmetrietons D (350-D). Der Dominantbereich umfasst die vier Tonigkeiten E (350-E), G (350-G), B bzw. H (350-H) und D (350-D). Entsprechend erstreckt sich ein als Subdominantbereich bezeichneter Bereich ausgehend von dem tonalen Zentrum 390 gegen den Uhrzeigersinn ebenfalls bis zu dem Symmetrieton D (350-D), wobei dieser die Tonigkeiten C (350-C), A (350-A), F (350-F) und D(350-D) umfasst. Aus dem Symmetriemodell ergeben sich viele sinnvolle tonale Zusammenhänge, die zum einen für die Synthese und zum anderen für die Analyse von Audio- und Toninformationen eingesetzt werden können. Im Folgenden werden einige dieser Zusammenhänge aufgelistet:

1. Dissonant klingende Tonkombinationen sind durch weit entfernt positionierte Basistöne repräsentiert, konsonant klingende Tonkombinationen durch geometrisch benachbarte Basistöne. Je weiter zwei Basistöne voneinander entfernt positioniert sind, desto dissonanter klingt die von ihnen erzeugte Tonkombination.

2. Sämtliche mit den Tönen einer diatonischen Dur-Tonleiter erzeugbaren Terzintervalle, Dur- und Mollakkorde, Septakkorde, 7-9er-Akkorde und verminderte Akkorde werden durch benachbart positionierte Basistöne dargestellt. Dies ergibt sich vor allem aus der Reihenfolge der Töne und durch ihre kreisförmige Anordnung.

3. Das Modell spiegelt funktionstheoretische bzw. musiktheoretische Zusammenhänge geometrisch wieder. Zum einen sind die Grundtöne von Dur-Akkorden und parallelen Moll-Akkorden geometrisch direkt benachbart. Zum anderen sind die Töne von Tonika-Akkorden (a-Moll und C-Dur) bezogen auf die Symmetrieachse 360 mittig positioniert, die von Subdominant-Akkorden (F-Dur und d-Moll) auf der einen Seite z.B. links der Symmetrieachse 360 und die von Dominant-Akkorden (G-Dur und e-Moll) auf der anderen Seite (z.B. rechts) der Symmetrieachse 360 angeordnet.

4. Töne, die im Kontext einer Durtonart ein großes Auflösungsbestreben besitzen, wie z. B. der auch als Leitton bezeichnete Ton B bzw. H oder der vierte Ton der Tonleiter (F), sind geometrisch auf dem Symmetrie kreis entfernt von einem als tonalem Zentrum bezeichneten Punkt 390, dem Tonikabereich, positioniert. Töne, die ein kleines Auflösungsbestreben besitzen, sind in der Nähe des tonalen Zentrums 390 positioniert.

5. Aus dem Symmetriemodell lässt sich Riemanns Prinzip der sechsfachen Tonvertretung einfach ableiten, das in Hugo Riemanns Veröffentlichung "Ideen zu einer 'Lehre von den Tonvorstellungen'", Jahrbuch der Musikbibliothek Peters, Jahrgang 21/22 (1914/15), S.11 beschrieben wird. Nach diesem Prinzip kann jeder Ton Grundton, Terz und Quinte sowohl eines Dur-Akkordes als auch eines Moll-Akkordes sein. Aus dem Symmetriemodell gehen für jeden Ton drei dieser sechs Möglichkeiten hervor. So kann beispielsweise der Ton C Bestandteil der Dreiklänge F-A-C, A-C-E und C-E-G sein.

6. An dem Punkt, wo der Kreis sich schließt, also bei dem Symmetrieton D 350-D, gibt es weder einen Moll-Akkord noch einen Dur-Akkord, sondern einen verminderten Dreiklang, der aus zwei kleinen Terzen aufgebaut ist. Dieser Akkord ist der einzige Akkord, der in dem Kadenzkreis bzw. dem Symmetriemodell in Fig. 7 aus zwei gleichen Intervallen besteht. Dieser Akkord enthält in der Mitte den Symmetrieton 350-D und ist somit in sich als gebildet symmetrisch, weshalb er im Rahmen des Symmetriemodells auch als Symmetrieakkord bezeichnet wird.

**Der Terzkreis**

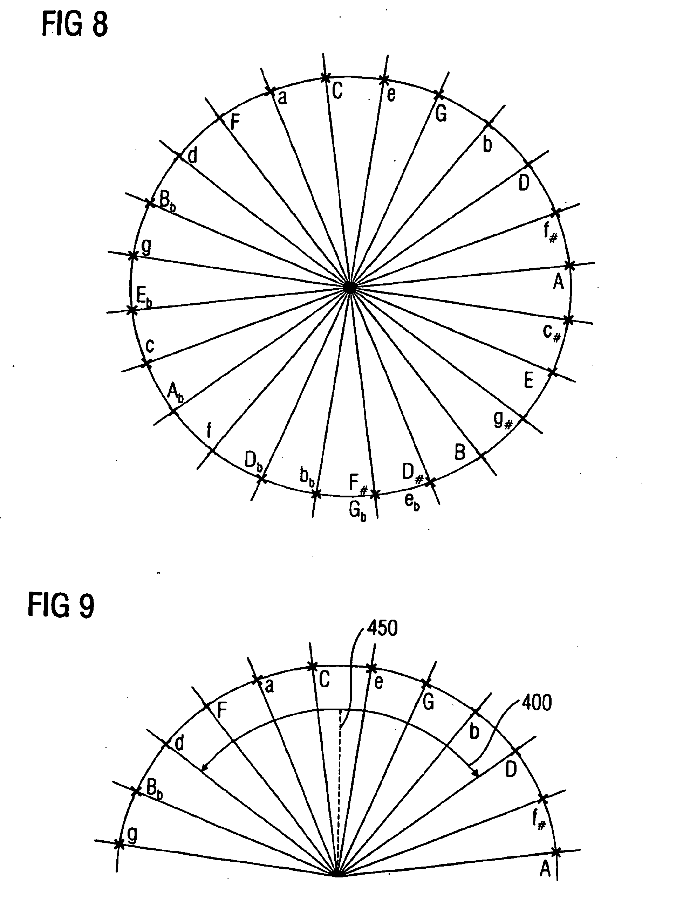

So wie das Symmetriemodell Zusammenhänge innerhalb einer diatonischen Tonart abbildet, stellt der Terzkreis tonarübergreifende Zusammenhänge dar, wie es in Fig. 8 dargestellt ist. Der Terzkreis bildet nicht nur die sieben Töne einer diatonischen Tonleiter im Tonraum ab, sondern alle zwölf Töne der chromatischen Tonleiter oval/kreisförmig bzw. in einer sich schließenden Anordnung. Weiterhin erscheint jeder Basiston nicht nur einmal, sondern zweimal im Terzkreis. Der Terzkreis enthält deshalb 24 Töne bzw. Tonigkeiten. Die Reihenfolge der Töne entspricht im Wesentlichen der Tonreihenfolge des Symmetriemodells. Die Töne sind in Terzabständen und zwar abwechselnd in kleinen und großen Terzen angeordnet. Während es beim Symmetriemodell an der Stelle des verminderten Akkordes, also bei dem Symmetrieton 350-D, eine Unstetigkeitsstelle gibt, ist eine solche Unstetigkeitsstelle im Terzkreis nicht zu finden. Durch diese Annordnung der Basistöne im Tonraum gemäß dem Terzkreis erschließen sich eine Reihe von musiktheoretischen Zusammenhängen, die im Folgenden erläutert werden. Im Unterschied zu dem in Fig. 7 gezeigten Symmetriemodell sind bei dem Terzkreis die Tonigkeiten äquidistant auf den Umfang des Terzkreises verteilt. Die Tonigkeiten weisen daher einen Winkelabstand zueinander von 360° / 24 = 15° auf. In diesem Fall wird also nicht bezogen auf den Winkelabstand unterschieden, ob der kleinste Tonabstand zweier unmittelbar benachbarter Tonigkeiten einem großen Terzabstand oder einem kleinen Terzabstand entspricht.

Fig. 9 zeigt einen Ausschnitt des in Fig. 8 gezeigten Terzkreises. Diatonische Tonarten wie beispielsweise C-Dur oder a-Moll werden im Terzkreis durch ein einziges zusammenhängendes Kreissegment dargestellt bzw. abgebildet. Als Beispiel zeigt Fig. 9 ein solches Kreissegment 400, das der Tonart C-Dur bzw. a-Moll entspricht. Das Kreissegment 400 ist zu beiden Seiten durch den Symmetrieton D der Tonart begrenzt. Durch die Mitte des Kreissegmentes verläuft eine Symmetrieachse 405. Nimmt man dieses Kreissegment 400 aus dem Terzkreis heraus und klappt es wie einen Fächer so weit auf, dass sich die beiden geraden Seiten berühren, so ergibt sich exakt das in den vorherigen Abschnitten beschriebene Symmetriemodell. Fig. 9 zeigt somit eine Darstellung einer diatonischen Tonart im Terzkreis.

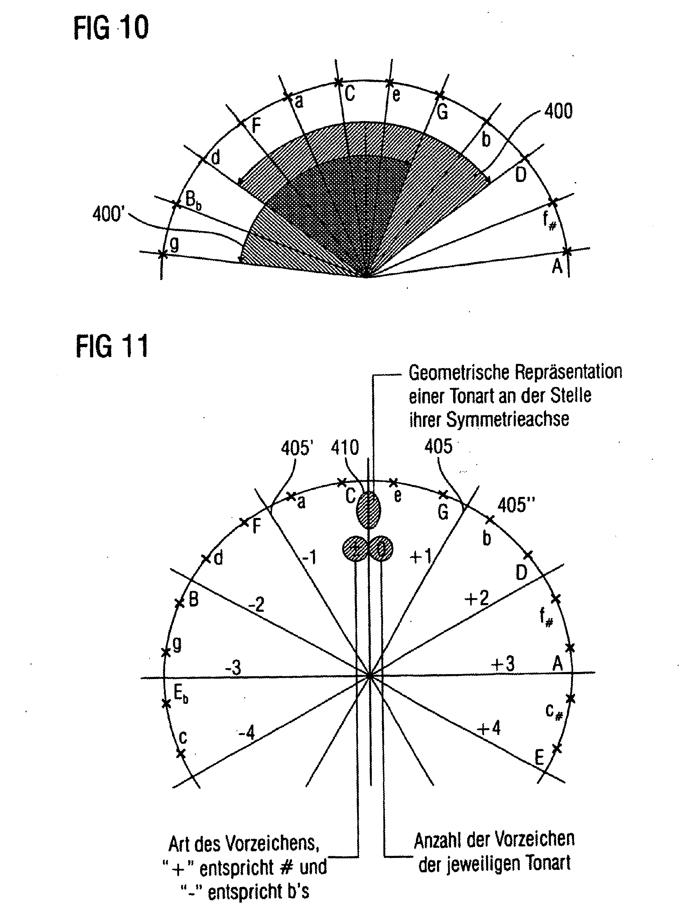

In Fig. 10 werden die Gemeinsamkeiten zweier benachbarter Tonarten illustriert. Zu diesem Zweck ist in Fig. 10 das schon in Fig. 9 gezeigte Kreissegment 400, das der Tonart C-Dur bzw. a-Moll entspricht, zusammen mit einem weiteren Kreissegment 400' dargestellt, das der Tonart F-Dur entspricht. Benachbarte Tonarten wie C-Dur und F-Dur liegen also im Terzkreis direkt nebeneinander. Bei der in Fig. 10 gewählten Darstellung liegen gemeinsame Töne also in einem durch überlappende Kreissegmente repräsentierten Bereich.

Fig. 11 illustriert an einem Ausschnitt des Terzkreises, dass die Symmetrieachse einer diatonischen Tonart, beispielsweise die Symmetrieachse 405 der Tonart C-Dur, genau durch einen Schwerpunkt 410 des die Tonart repräsentierenden Kreissegmentes 400 verläuft. Mit anderen Worten liegt der Schwerpunkt 410 des Bereichs 400 einer diatonischen Tonart (in Fig. 11 der Tonart C-Dur) an der Stelle der Symmetrieachse 405. Aus diesem Grund ist es sinnvoll, Tonarten wie C-Dur oder a-Moll nicht an der Stelle ihres Grundtones, also der Töne C bzw. a, zu repräsentieren, sondern an der Stelle ihrer Symmetrieachse 405.

Der Terzkreis eignet sich weiterhin hervorragend, um Verwandtschaftsbeziehungen zwischen Tonarten darzustellen. Verwandte Tonarten, d. h. Tonarten, die viele gemeinsame Töne besitzen bzw. aufweisen, sind im Terzkreis benachbart dargestellt. Tonarten, die sehr wenig miteinander zu tun haben, sind im Terzkreis weit entfernt positioniert. Ausgehend von der Symmetrieachse 405 der Tonart C-Dur bzw. a-Moll kann daher auch die Art und die Anzahl der zu einer Tonart gehörenden Anzahl von Vorzeichen leicht bestimmt werden. So ist beispielsweise in Fig. 11 auch eine Symmetrieachse 405' der Tonart F-Dur eingezeichnet, die in dem Terzkreis gegenüber der Symmetrieachse 405 um 30˚ gegen den Uhrzeigersinn gedreht ist. Die Tonarten C-Dur und F-Dur unterscheiden sich bezüglich der sieben Töne der zugrundeliegenden diatonischen Tonleiter nur geringfügig. Es wird nur der Ton b bzw. H durch den um eine kleines Sekunde unterhalb liegenden Halbton ersetzt, so dass die Tonart F-Dur im Vergleich zu der Tonart C-Dur ein zusätzliches Vorzeichen (b) aufweist. Eine entsprechende Überlegung gilt auch für die Tonart G-Dur, die durch eine Symmetrieachse 405" repräsentiert wird. Im Unterschied zu der Tonart F-Dur weist die Tonart G-Dur als Vorzeichen ein # auf. Entsprechend ist die Symmetrieachse 405" für die Tonart G-Dur gegenüber der Symmetrieachse 405 für die Tonart C-Dur in dem Terzkreis um 30˚ im Uhrzeigersinn gedreht.

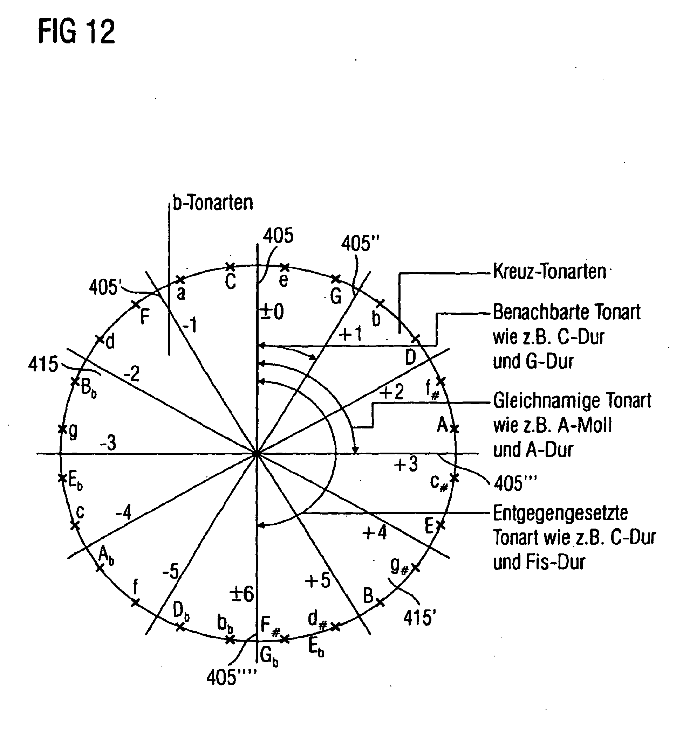

Diese Überlegung lässt sich für alle weiteren Tonarten durchführen, wie dies auch in Fig. 12 dargestellt ist. Somit belegen alle b-Tonarten die linke Hälfte des Kreises bzw. des Terzkreises. Diese Tonarten weisen alle ein negatives Vorzeichen (-) auf. Die Kreuztonarten, die ein positives Vorzeichen (+) aufweisen, belegen die rechte Hälfte 415' des Kreises bzw. Terzkreises. Gleichnamige Tonarten, wie etwa a-Moll und A-Dur, sind im Abstand von 90˚ im Terzkreis positioniert, wie dies ein Vergleich der Symmetrieachsen 405 und 405''' zeigt. Weiterhin illustriert der Terzkreis, dass Tonarten, die sehr wenig miteinander zu tun haben, weit voneinander entfernt positioniert sind. So sind z. B. entgegengesetzte Tonarten, wie C-Dur mit der Symmetrieachse 405 und Fis-Dur mit einer Symmetrieachse 405"" auch exakt entgegengesetzt, also in einem Winkelabstand von 180˚ positioniert. Fig. 12 zeigt somit, dass der Terzkreis Verwandtschaftsbeziehungen zwischen Tonarten sehr gut abbilden kann.

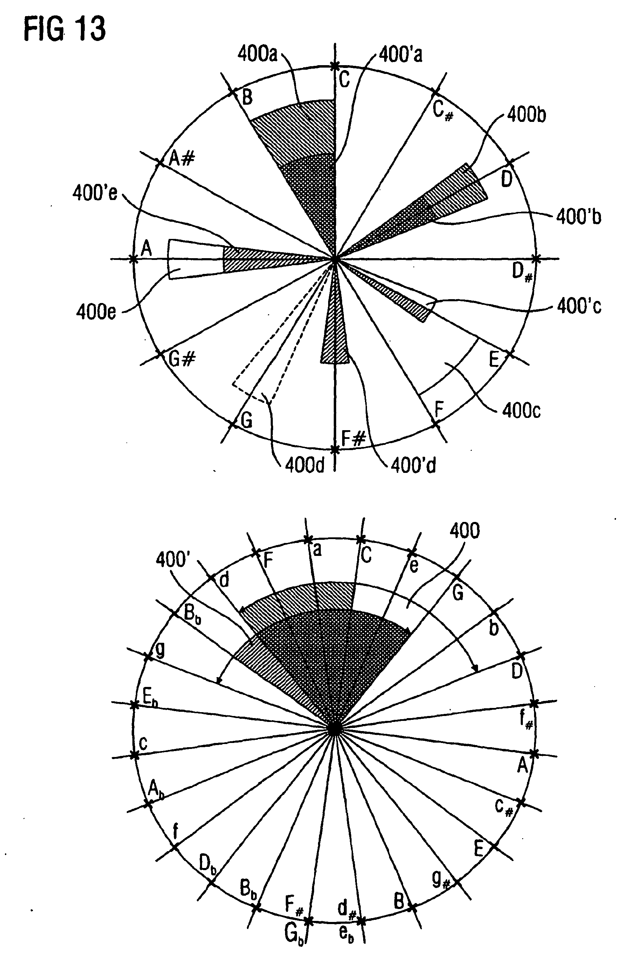

Fig. 13 illustriert, dass im Gegensatz zu anderen Basistonanordnungen, wie z. B. einer chromatischen Anordnung, die in Fig. 13 links dargestellt ist, gemeinsame Töne benachbarter Tonarten im Terzkreis lückenlos nebeneinander liegen, wie dies die Fig. 13 rechts illustriert. So ist in Fig. 13 auf der rechten Seite das zu der Tonart C-Dur gehörende Kreissegment 400 und das zu der Tonart F-Dur gehörende Kreissegment 400' dargestellt. Die Darstellung auf der rechten Seite von Fig. 13 entspricht also der einer Terzanordnung bzw. der Terzkreisanordnung. Dieser Anordnung stellt Fig. 13 eine chromatische Basistonanordnung links gegenüber. Die einzelnen Segmente 400a - 400e, sowie die Kreissegmente 400'a - 400'e entsprechen den Kreissegmenten 400 bzw. 400', wie sie in Fig. 13 rechts dargestellt sind. Fig. 13 zeigt somit, dass der Terzkreis im Vergleich zu einer chromatischen Basistonanordnung Verwandtschaftsbeziehungen zwischen benachbarten Tonarten signifikant besser darstellt.

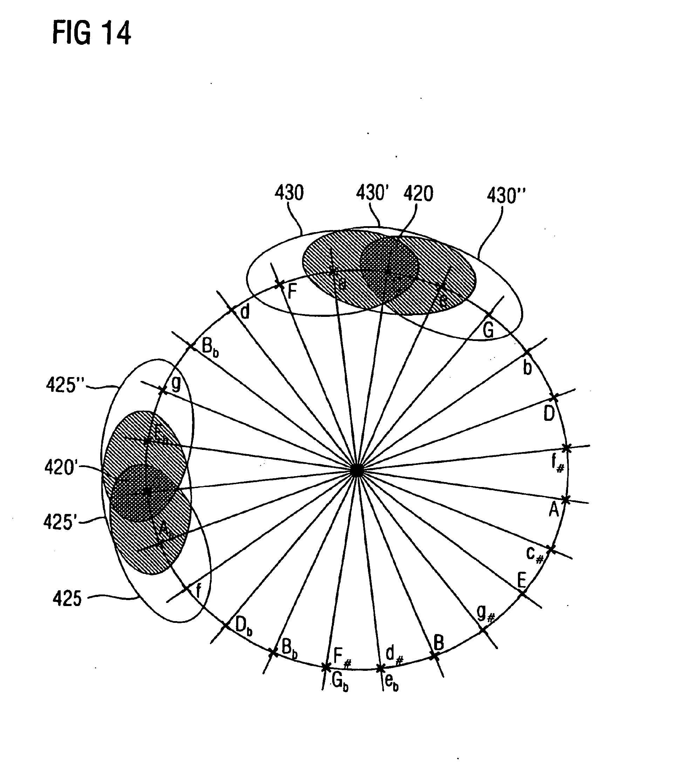

Fig. 14 zeigt, dass das Prinzip der sechsfachen Tonverwertung im Terzkreis perfekt abgebildet bzw. dargestellt wird. Fig. 14 zeigt am Beispiel des Tons bzw. der Tonigkeit C Riemanns Prinzip von der sechsfachen Tonverwertung. Nach diesem Prinzip kann ein Ton Grundton, Terz und Quinte sowohl eines Moll-Akkordes als auch eines Dur-Akkordes sein. Der Ton bzw. die Tonigkeit C erscheint im Terzkreis an zwei Positionen 420, 420'. Genauer gesagt taucht der Ton C in einem Dur-Kontext (C-Dur), was der Position 420 entspricht, und in einem Moll-Kontext (c-Moll), was der Position 420' entspricht, auf. Der Ton C ist hierbei Bestandteil der Akkorde f-Moll (Bereich 425), As-Dur (Bereich 425') und c-Moll (Bereich 425"). Des weiteren ist der Ton C Bestandteil der Akkorde F-Dur (Bereich 430), a-Moll (Bereich 430') und C-Dur (Bereich 430"). Damit spiegelt das Symmetriemodell Riemanns Prinzip von der sechsfachen Tonverwertung wider. Wie Fig. 14 zeigt, können diese Zusammenhänge sehr einfach aus dem Terzkreis hergeleitet werden. Es bleibt noch zu erwähnen, dass weiterhin die Grundtöne von Dur-Akkorden und parallelen Moll-Akkorden direkt nebeneinander liegen.

Eine weitere Positionierungsalternative für den Terzkreis und das Symmetriemodell (Symmetriekreis) besteht darin, den Terzkreis und/oder das Symmetriemodell jeweils um eine in den Figuren horizontal verlaufende Achse zu spiegeln, so dass im Falle des Symmetriemodells der Tonikabereich einer bestimmten (Dur-) Tonart unten zu liegen kommt, während der verminderte Bereich nach oben wandern würde. Dies würde verschiedene didaktische Vorteile bieten. Insbesondere ist es so möglich, eine Pendelanalogie zwischen einem (abendländischen) Musikstück und einer Beschreibung beispielsweise im Symmetriemodell durchzuführen. Ein (gedämpftes) Pendel wird in eine Richtung ausgelenkt, schwingt dann eine Weile und kommt dann irgendwann zur Ruhe. Je stärker das Pendel zu einer Seite ausgelenkt wird, desto stärker schwingt es ebenfalls in die andere Richtung.

Ein Pendel, das beispielsweise in einem Mittelpunkt des Symmetriemodells, wie es beispielsweise in Fig. 7 dargestellt ist, das jedoch um die horizontale Achse gespiegelt ist, aufgehängt ist, hängt anfangs nach unten ausgelenkt im Tonikabereich. Wird es zu einer Schwingung angeregt, beginnt es zu schwingen und endet nach einer Weile dann wieder im Tonikabereich. Je stärker hierbei das Pendel beispielsweise in den Subdominantbereich ausgelenkt wird, desto stärker schwingt es anschließend in den Dominantbereich. Viele harmonische Verläufe sehr populärer Akkordfolgen innerhalb der abendländischen Musik folgen hierbei dem Prinzip, dass auf Akkorde, die im Subdominantbereich positioniert sind, sehr oft Akkorde folgen, die entsprechend entgegengesetzt im Dominantbereich liegen. Auch beginnen und enden viele Lieder und Musikwerke im Tonikabereich, was die Analogie zu einem schwingenden Pendel, wie es oben beschrieben ist, eindrucksvoll vervollständigt.

Auch wenn im Rahmen der vorliegenden Anmeldung der Terzkreis, wie er beispielsweise in Fig. 8 dargestellt ist, und das Symmetriemodell, wie es beispielsweise in Fig. 7 dargestellt ist, immer einheitlich beschrieben und dargestellt sind, kann selbstverständlich auch eine horizontal und/oder vertikal gespiegelte Positionierungsvariante der Basistöne im Tonbereich verwendet werden. Darüber hinaus kann auch eine um einen beliebigen Winkel gedrehte Anordnung der Basistöne und/oder eine um eine beliebige Achse in der Ebene gespiegelte Positionierungsvariante der Basistöne verwendet werden. Auch wenn die Darstellung der Ausführungsbeispiele im Rahmen der vorliegenden Anmeldung im Allgemeinen auf eine Anordnung der Basistöne im Symmetriemodell (vgl. Fig. 7) und dem Terzkreis (vgl. Fig. 8) basieren, ist dies nicht als einschränkend zu verstehen. Gespiegelte oder gedrehte Basistonanordnungen können so beispielsweise im Rahmen einer Bedieneinrichtung einer erfindungsgemäßen Vorrichtung zum Erzeugen eines Notensignals oder im Rahmen eines Ausgabefeldes einer Vorrichtung zur Ausgabe von einem eine Tonigkeit anzeigenden Ausgabesignal zum Einsatz kommen.

**Mathematische Modellbeschreibung**

*Tonigkeit*

Wie bereits in den einführenden Abschnitten der vorliegenden Anmeldung erläutert wurde, spricht man von eine Tonigkeit, wenn bei einem Ton vernachlässigt werden kann, zu welcher Oktave er gehört. Auf dem Klavier sind die zwölf Tonigkeiten D, Dis, E, F, Fis, G, Gis, A, Ais, B, C und Cis definiert, wobei bei dieser Aufzählung auf die Angabe enharmonischer Verwechslungen an dieser Stelle der Klarheit wegen keinen Wert gelegt wurde. Jeder Tonigkeit t wird ein Grundindex $m_t$ und ein erweiterter Index $n_t$ zugeordnet. Der Grundindex $m_t$ und der erweiterte Index $n_t$ sind beides ganze Zahlen, wobei Z die Menge der ganzen Zahlen darstellt. Es gilt:

$$0 \leq m_t \leq 11, \quad m_t \in \mathbf{Z} \qquad (1)$$

$$-\infty < n_t < +\infty, \quad n_t \in \mathbf{Z} \qquad (2)$$

Der Grundindex $m_t$ ist eine einmalige bzw. eindeutige Durchnummerierung aller 12 Tonigkeiten. Der erweiterte Index $n_t$ erfasst den Fakt, dass die Tonigkeiten logisch einen Kreis bilden bzw. periodisch angeordnet werden können, auf dem nach der letzten Tonigkeit wieder die erste Tonigkeit folgt. Deshalb ist es auch wünschenswert, dass man den erweiterten Index $n_t$ unendlich weiterzählen kann. Jede Tonigkeit besitzt dadurch viele erweiterte Indizes. Mit Hilfe der nachfolgenden Rechenvorschriften lassen sich Grundindex und erweiterter Index in einander umrechnen:

$$n_t = m_t + k \cdot 12, \quad k \in \mathbf{Z} \tag{3}$$

$$m_t = \left[(n_t \bmod 12) + 12\right] \bmod 12 \tag{4}$$

Eine wichtige Frage ist, welche Tonigkeit t mit welchem Grundindex $m_t$ versehen wird. Stand der Technik ist hierbei, den Ton bzw. die Tonigkeit C mit dem Grundindex $m_t = 0$ zu versehen, um den Fakt auszudrücken, dass dieser Ton der Grundton der einfachsten und vorzeichenlosen Tonart C-Dur ist. An dieser Stelle wird jedoch im Rahmen der vorliegenden Anmeldung eine andere Definition verwendet, die für die nachfolgenden Berechnungen zu einigen Vereinfachungen führt: Wir ordnen den Grundindex $m_t = 0$ nicht dem Ton C zu, sondern dem Ton D, weil der Ton D der Symmetrieton der vorzeichenlosen Tonart C-Dur ist und somit auch den geometrischen Schwerpunkt der Tonart im Terz- und Symmetriekreis bildet. Dadurch ergibt sich folgende Indexzuordnung bzw. Zuordnung von Grundindizes $m_t$ zu den Tonigkeiten t, die in der folgenden Tabelle 1 dargestellt ist. Es gilt:

| Tonigkeit t | D | Dis | E | F | Fis | G | Gis | A | Ais | B | C | Cis |
|---|---|---|---|---|---|---|---|---|---|---|---|---|
| Grund-index $m_t$ | 0 | 1 | 2 | 3 | 4 | 5 | 6 | 7 | 8 | 9 | 10 | 11 |

*Terzkreis*

Der Terzkreis besteht aus 24 Tönen im Abstand von großen und kleinen Terzen. Diese Töne werden als Realtöne r bezeichnet, weil sie tatsächlich erklingende Töne repräsentieren. Um die Realtöne r geometrisch auf dem Terzkreis platzieren zu können, ist eine Hinzunahme von Hilfstönen h erforderlich. Zwei benachbarte Hilfstöne haben einen Halbtonabstand (Sekunde) und besitzen ähnlich wie die Tonigkeiten einen Grundindex $m_h$ und einen erweiterten Index $n_h$. Zwei benachbarte Hilfsströme weisen also die erweiterte Indizes $n_h$ und $(n_h+1)$ auf. Ähnlich zu dem vorhergehenden Abschnitt gilt:

$$-42 \leq m_h < +42 \tag{5}$$

$$-\infty < n_h < +\infty \tag{6}$$

Die Hilfstöne h werden dazu verwendet, um das hinter dem Terzkreis liegende, aus 84 Elementen bestehende Halbtonraster zu definieren: Der Grundindex $m_h$ der Hilfstöne h läuft nicht wie bei den Tonigkeiten von 0 bis 11, sondern von -42 bis +41, wie Gleichung 5 zeigt. Hilfstöne, die zur Definition von Tonarten mit negativem Vorzeichen (b-Tonarten) beitragen, erhalten dadurch ein negatives Vorzeichen. Hilfstöne, die zur Definition von Tonarten mit positiven Vorzeichen (Kreuz-Tonarten bzw. #-Tonarten) beitragen, besitzen ein positives Vorzeichen. Der Grundindex $m_h$ und der erweiterte Index $n_h$ können nach folgender Vorschrift ineinander umgerechnet werden:

$$n_h = f_1(m_h) = m_h + 84 \cdot k, \quad k \in \mathbf{Z} \tag{7}$$

$$m_h = f_2(n_h) = \left\{ 84 + \left[\left(n_h + \frac{84}{2}\right) \bmod 84\right] \right\} \bmod 84 - \frac{84}{2} \tag{8}$$

Jedem Hilfston h mit dem erweiterten Index $n_h$ wird eine Tonigkeit t mit dem erweiterten Index der Tonigkeit $n_t$ zugeordnet. Durch die Definition aus Tabelle 1 ist keine Umrechnung der Index $n_h$ und $n_t$ ineinander nötig. Es gilt vielmehr für die Tonigkeit t eines Hilfstons h mit dem erweiterten Index $n_h$, dass der erweitere Index $n_t$ der Tonigkeit t mit dem erweiterten Index $n_h$ des Hilfstons übereinstimmt. Es gilt also die Gleichung

$$n_t \ (n_h) \ = \ n_h \qquad\qquad (8a)$$

Die Umrechnung des erweiterten Index $n_t$ in den Grundindex $m_t$ der Tonigkeiten t erfolgt dann nach Gleichung 4. Die nachfolgende Tabelle 2 zeigt beispielhaft die Zuordnung von Tonigkeiten t mit dem erweiterten Index $n_t$ zu Hilfstönen h mit dem erweiterten Index $n_h$ bzw. die umgekehrte Zuordnung:

| $n_h$ | -42 | -41 | ... | 0 | ... | 40 | 41 | 42 |
|---|---|---|---|---|---|---|---|---|
| $n_t = n_h$ | -42 | -41 | ... | 0 | ... | 40 | 41 | 42 |
| $m_t = f_3(n_t)$ | 6 | 7 | ... | 0 | ... | 4 | 5 | 6 |
| T | Gis | A | ... | D | ... | Fis | G | Gis |

Geometrisch kann jeder Hilfston h mit dem erweiterten Index $n_h$ auch als Vektor $\vec{h}_{n_h}$ repräsentiert bzw. präsentiert werden. Dieser Vektor $\vec{h}_{n_h}$ weist gegenüber einem Nullvektor einen Winkel $\alpha$ auf. Die Berechnung des Winkels $\alpha$ erfolgt dabei so, dass der Hilfston h mit dem erweiterten Index $n_h = 0$ den Winkel $0°$ erhält. Dem Hilfston h mit dem erweiterten Index $n_h = 0$ wird ein Vektor $\vec{h}_0$ zugeordnet. Der Vektor $\vec{h}_0$ wird deshalb als Nullvektor bezeichnet. Dem Hilfston h mit dem erweiterten Index $n_h = 0$ ist somit die Tonigkeit bzw. der Ton D zugeordnet.

Neben dem Winkel $\alpha$ wird jedem Hilfston auch eine Länge bzw. ein Betrag zugeordnet, die im Folgenden auch als Energie s des Hilfstons bezeichnet wird. Mit anderen Worten findet sich die Energie s des Hilfstons h in Form des Betrags des Vektors $\vec{h}_{n_h}$ wieder. Es gilt:

$$\vec{h}_{n_h} \ = \ s \cdot e^{j\alpha} \ = \ s \cdot e^{j2\pi \frac{n_h}{84}} \qquad\qquad (9)$$

wobei das Formelzeichen j die imaginäre Einheit ist. Es gilt also

$$j \ = \ \sqrt{-1}, \qquad j^2 \ = \ -1 \qquad\qquad (9a)$$

Neben den Hilfstönen h gibt es noch die Realtöne r. Die Realtöne sind die 24 tatsächlich auf dem Terzkreis vorhandenen Töne und bilden eine Untermenge der Menge der Hilfstöne $M_h$. Jeder Realton r ist entweder Grundton eines Dur-Akkordes (+) oder Grundton eines Moll-Akkordes (-). Aus diesem Grund kann die Menge der Realtöne $M_r$ in eine Teilmenge $M_{r+}$ und $M_{r-}$ unterteilt werden. Es gilt:

$$M_{r\pm} \ := \ \left\{ h_{n_h} \middle| n_h \ = \ 7k \pm 2, \ k \ \in \ \mathbf{z} \right\} \qquad\qquad (10)$$

Mit Hilfe der bisher gelegten mathematischen Grundlagen ist es auch möglich, Tongemische im Terzkreis zu repräsentieren. Jedem Realton r wird hierbei ein Vektor $\vec{r}$ zugeordnet. Eine Summe zweier Realtöne $r_a$ und $r_b$ im Terzkreis lässt sich so durch die Summe der zu den beiden Realtönen $r_a$ und $r_b$ gehörenden Vektoren $\vec{r}_a$ und $\vec{r}_b$ realisieren. Das Ergebnis einer solchen Summation ist der sogenannte Summenvektor $\vec{r}_{sum}$, der auf den geometrischen Schwerpunkt der beiden Töne zeigt:

$$\vec{r}_{sum} \;=\; \vec{r}_a \;+\; \vec{r}_b \qquad\qquad (11)$$

Jede Tonigkeit t findet sich auf dem Terzkreis in Form zweier Realtöne r wieder, nämlich einmal als Grundton eines Dur-Akkords $r_{nr+}$ und als Grundton eines Moll-Akkords $r_{nr-}$. Gleichung 12 zeigt eine Rechenvorschrift, mit der zu einer gegebenen Tonigkeit t mit einem erweiterten Index $n_t$ die zugehörigen Terzkreis-Realtöne $r_{nr-}$ und $r_{nr+}$ gefunden werden können.

$$n_{nr\pm} \;=\; f(n_t) \;=\; 7^2 n_t \;\pm\; 12 \qquad\qquad (12)$$

Wir hatten gesagt, dass eine Menge von Realtönen im Terzkreis durch einen Summenvektor $\vec{r}_{sum}$ beschrieben werden kann. Weiterhin hatten wir festgestellt, dass jede Tonigkeit t sich in Form zweier Realtöne $r_{nr-}$ und $r_{nr+}$ im Terzkreis wieder findet. Deshalb ist es möglich, eine Tonigkeit t mit einem erweiterten Index $n_t$ durch einen Summenvektor

$$\vec{r}_{sum} \;=\; \vec{r}_{nr-} \;+\; \vec{r}_{nr+} \qquad\qquad (12a)$$

im Terzkreis zu repräsentieren. Es gilt:

$$
\begin{aligned}
\vec{r}_{sum} \;&=\; \vec{r}_{nr-} \;+\; \vec{r}_{nr+} \\[4pt]
&=\; e^{j2n\frac{nr-}{84}} \;+\; e^{j2n\frac{nr+}{84}} \\[4pt]
&=\; e^{j2n\frac{7^2 n_t - 12}{84}} \;+\; e^{j2n\frac{7^2 n_t + 12}{84}} \\[4pt]
&\approx\; 1.25 \cdot e^{j2n\frac{7^2 n_t}{84}}
\end{aligned}
\qquad\qquad (13)
$$

Der Faktor 1.25 ergibt sich für alle Tonigkeiten und kann deshalb vernachlässigt werden. Mit den Zusammenhängen aus Gleichung 13 ist es möglich, eine Menge von Tonigkeiten $M_t$ durch einen Terzkreissummenvektor $\vec{r}_{sum}$ zu repräsentieren. Es gilt:

$$\vec{r}_{sum} \;=\; f_4(M_t) \;=\; \sum \vec{r}_{sum_t} \quad mit \quad \vec{r}_{sum_t} \;=\; s_{n_t} \cdot e^{j2n\frac{7^2 n_t}{84}}, \; n_t \in M_t \qquad (14)$$

Aus dem Terzkreis-Summenvektor wiederum lässt sich die Tonart bzw. die Vorzeichenzahl v und die Art der Vorzeichen ableiten. Der Terzkreis-Summenvektor weist einen Winkel $\alpha$ auf, der die Beziehung

$$\alpha \;=\; \frac{2n n_{h_{sum}}}{84} \qquad\qquad (15a)$$

erfüllt, wobei $n_{hsum}$ den "erweiterter Index" desjenigen Terzkreishilftones repräsentiert, auf den Summenvektor $\vec{r}_{sum}$ zeigt. Es folgt:

$$n_{h_{sum}} = \frac{84\alpha}{2\pi} \qquad (15b)$$

so dass für die Zahl der Vorzeichen v gilt:

$$v = \frac{n_{h_{sum}}}{7} = \frac{84\alpha}{14\pi} = \alpha\frac{6}{\pi} \qquad (15c)$$

Interessant ist auch, dass der zu einer Tonigkeit t gehörende Terzkreis-Summenvektor $\vec{r}_{sum}$ identisch zu dem Symmetrievektor der durch die Tonigkeit repräsentierten Tonart ist. So gilt beispielsweise für die Tonigkeit D:

$$\vec{r}_{sum}(t = D) = \vec{h}_0 \qquad (15d)$$

*Symmetriekreis*

Die mathematische Beschreibung des Symmetriekreises erfolgt ähnlich zur Beschreibung des Terzkreises. Die nachfolgenden Ausführungen gelten nur für vorzeichenlose diatonische Tonarten wie C-Dur oder a-Moll. Um die folgenden Ausführungen auch für transponierte Versionen darstellen zu können, muss ein sogenannter Transpositions-faktor $\tau$ eingeführt werden, um den Fakt zu erfassen, dass der Symmetriekreis auf eine bestimmte diatonische Tonart bezogen ist. Der Symmetriekreis bzw. der Kadenzkreis des Symmetriemodells enthält sieben Realtöne $r_m$ im Abstand von kleinen und großen Terzen. Diese sind auf einem Halbtonraster bestehend aus 24 Hilfstönen h platziert. Jeder der Hilfstöne h besitzt ebenfalls einen Grundindex $m_h$ und einen erweiterten Index $n_h$, mit Hilfe dessen ein Hilfston h auf dem Terzkreis eindeutig identifiziert werden kann. Es gilt:

$$-12 \leq m_h < +12 \qquad (16)$$

$$-\infty < n_h < +\infty \qquad (17)$$

Die Indizierung der Hilfstöne h im Terzkreis ist so gewählt, dass Hilfstöne h mit negativem Index, genauer gesagt mit negativem Grundindex $m_h$, zum Subdominantbereich gehören und Hilfstöne h mit positivem Index bzw. Grundindex $m_h$ zum Dominantbereich. Ein betragsmäßig sehr kleiner Indexbetrag $|m_h|$, zeigt an, dass der Realton r nahe am Tonikabereich bzw. dem tonalen Zentrum ist. Der Betrag des Index $|m_h|$ ist ein Maß dafür, wie weit ein Ton vom Tonikabereich bzw. dem tonalen Zentrum entfernt ist. Damit lassen sich der Grundindex $m_h$ und der erweiterter Index $n_h$ nach folgender Vorschrift ineinander umrechnen:

$$n_h = f_5(m_h) = m_h + 24 \cdot k, \quad k \in \mathbf{Z}, \tau \in \mathbf{Z} \qquad (18)$$

$$m_h = f_6(n_h) = \left\{24 + \left[\left(n_h + \frac{24}{2}\right) \bmod 24\right]\right\} \bmod 24 - \frac{24}{2} \qquad (19)$$

Die Zuordnung einer Tonigkeit t mit einem erweiterten Index $n_t$ zu einem Hilfston h mit einem erweiterten Index $n_h$ erfolgt in gleicher Art und Weise wie beim Terzkreis: Durch die gewählte Indizierung der Tonigkeiten nach Tabelle 1 ist keine Umrechnung der Indizes der Tonigkeiten $n_t$ in die Indizes der Hilfstöne des Symmetriekreises $n_h$ erforderlich. Es gilt:

$$n_h = n_t \qquad\qquad (20)$$

Die Realtöne des Symmetriekreises r sind eine Untermenge der Hilfstöne. Die Realtöne des Symmetriekreises können in drei Gruppen eingeteilt werden: In Realtöne, die den Grundton eines

1. Dur-Akkords bilden ($r_{n+}$),

2. eines Moll-Akkords ($r_{n-}$) oder

3. eines verminderten Akkords ($r_{n0}$)

bilden. Die Menge der Realtöne $M_r$ ist folgendermaßen aufgebaut: :

$$M_r := M_{r\pm} \cup M_{r0}$$

$$M_{r\pm} := \left\{ h_n, n = 7k \pm 2, |k| \leq 1 \right\} \qquad (21)$$

$$M_{r0} := \left\{ h_{12} \right\}$$

Jeder Hilfston h mit dem erweiterten Index $n_h$ lässt sich auch als Vektor $\vec{h}_{nh}$ darstellen. Auch dieser Vektor $\vec{h}_{nh}$ weist einen Winkel $\alpha$ auf, der dabei so gewählt wird, dass der Symmetrieton der durch den Symmetriekreis repräsentierten Tonart $h_0$ den Winkel 0 erhält. Der Vektor $h_0$ wird deshalb auch als Nullvektor bezeichnet. Auch in diesem Fall wird wiederum der Betrag bzw. die Länge des Vektors als Energie s bezeichnet. Mit anderen Worten wird die Energie des Tones mit dem Formelzeichen s umschrieben:

$$\vec{h}_{nh} = s \cdot e^{j\alpha} = s \cdot e^{j2n\frac{n_h}{24}} \qquad (22)$$

Eine Menge gegebener Tonigkeiten $M_t$ kann im Symmetriekreis ebenfalls durch einen Summenvektor $\vec{r}_{sum}$ beschrieben werden. Der Symmetriekreis enthält nicht alle Töne, sondern nur die Töne der gewählten diatonischen Tonart. Möchte man eine Menge gegebener Tonigkeiten $M_t$ auf dem Terzkreis repräsentierten, so muss man zunächst die Schnittmenge $M_t \cap M_r$ aus den gegebenen Tonigkeiten $M_t$ und den auf dem Symmetriekreis vorhandenen Realtönen bzw. der Menge der auf dem Symmetriekreis vorhandenen Realtönen $M_r$ bilden. Für diese Schnittmenge kann man anschließend den Summenvektor $\vec{r}_{sum}$ bilden.

$$\vec{r}_{sum} = f_r(M_t) = \sum \vec{r}_n \text{ mit } \vec{r}_n = s_n \cdot e^{2n\frac{n}{24}}, n \in M_t \cap M_r \qquad (23)$$

**Symmetriemodellbasierte und terzkreiabasierte Harmonieanalyse**

*Terzkreisbasierte Harmonieanalyse*

Mit Hilfe einer terzkreisbasierten Tonartanalyse, wie sie im folgenden Abschnitt näher erläutert wird, können wertvolle Informationen über inhaltliche Merkmale eines Audio- bzw. Tonsignals erhalten werden. Genauer gesagt kann nach Gleichung 13 eine beliebige Menge von Tonigkeiten in Form eines Summenvektors $\vec{r}_{sum}$ zusammengefasst und

beschrieben werden. Dieser liefert wertvolle Aufschlüsse über inhaltliche Merkmale des zugrundeliegenden Audio- bzw. Tonsignals.

Wie bereits im Zusammenhang mit Gleichung 15a - 15c erläutert wurde, zeigt der Winkel $\alpha$ des Summenvektors $\vec{r}_{sum}$ an, in welcher Tonart sich ein Musikstück zu einem bestimmten Zeitpunkt befindet. So besitzt beispielsweise der Summenvektor für die Tonigkeiten der C-Dur-Tonleiter den Winkel $\alpha = 0$. Dies entspricht genau dem Punkt auf dem Terzkreis bzw. ist genau an der Stelle, an der sich der Symmetrieton und damit die Repräsentation der Tonart C-Dur befindet.

Der Betrag des Summenvektors $|\vec{r}_{sum}|$ ist darüber hinaus ein Schätzmaß, welches beschreibt, wie sicher es ist, dass eine bestimmte diatonische Tonart vorliegt bzw. wie definiert der tonale Kontext ist. Ist der Betrag sehr groß, dann ist es ziemlich sicher, dass die Tonigkeiten zu einer bestimmten Tonart gehören. Mit anderen Worten wächst mit steigendem Betrag des Summenvektors $|\vec{r}_{sum}|$ die Wahrscheinlichkeit, dass die Tonigkeiten zu einer bestimmten Tonart gehören. Ist der Betrag hingegen sehr klein, dann liegen entweder nur sehr wenige unterschiedliche Tonigkeiten vor, so dass die Tonart nicht sicher bestimmt werden kann, oder die Tonigkeiten gehören zu ganz unterschiedlichen Tonarten.

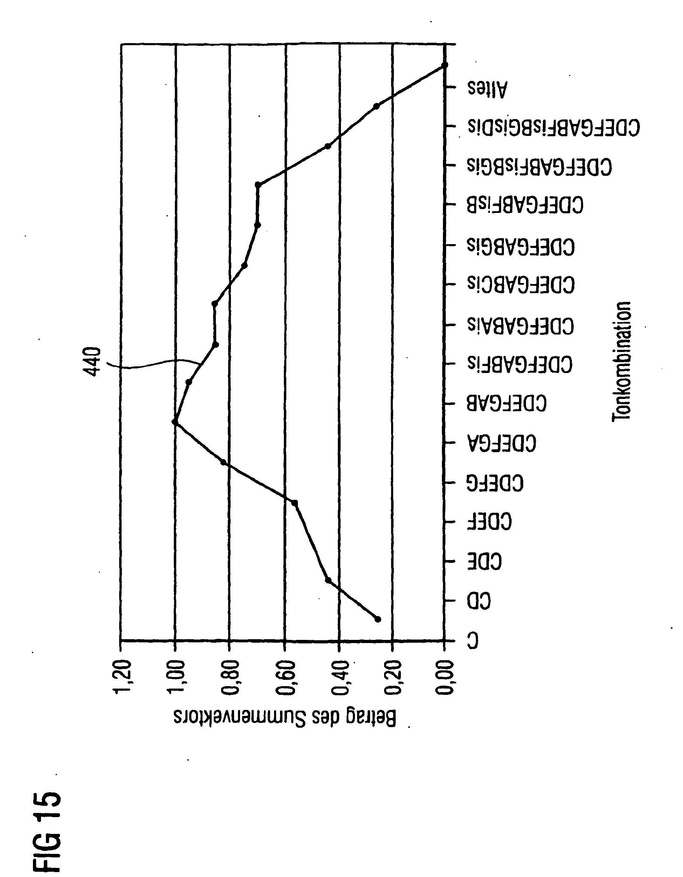

Fig. 15 zeigt ein Beispiel für die Definiertheit des tonalen Kontexts bei verschiedenen Tonkombinationen. Genauer gesagt zeigt Fig. 15 einen Verlauf 440 des Betrages des Summenvektors für verschiedene auf der Abszisse eingetragene Tonkombinationen bzw. Tonigkeitskombinationen. Der Betrag des Summenvektors $|\vec{r}_{sum}|$ wird so lange größer bzw. verharrt im Wesentlichen bei seiner Länge, solange der Menge von Tonigkeiten tonarteigene Tonigkeiten hinzugefügt werden. So wächst der Betrag des Summenvektors ausgehend von der einzelnen Tonigkeit C durch Hinzunehmen weiterer C-Dur-tonleitereigenen Tonigkeiten, bis dieser einen maximalen Wert bei einer Tonigkeitskombination CDEFGA erreicht. Ein Hinzunehmen der ebenfalls C-Dur-eigenen Tonigkeit B bzw. H resultiert nur in einer geringfügigen Abnahme. Das Hinzunehmen weiterer, tonartfremder Tonigkeiten bewirkt jedoch eine deutliche Abnahme des Betrages des Summenvektors. Der Betrag des Summenvektors nimmt also wieder ab, sobald tonartfremde Tonigkeiten hinzukommen. Das heißt, je größer der Betrag des Summenvektors ist, mit desto höherer Wahrscheinlichkeit kann man davon ausgehen, dass eine bestimmte Tonart vorliegt. Der Betrag des Summenvektors ist damit ein Maß für die Definiertheit des tonalen Kontextes.

Der Summenvektor liefert darüber hinaus Informationen über Tonartwechsel bzw. Modulationen: Eine Tonart nimmt auf dem Terzkreis einen Bereich von 24 Halbtonschritten ein. Dies entspricht einem Winkel von 4/7 n. Bleibt ein Musikstück in den Grenzen einer diatonischen Tonart, so bewegt sich der Summenvektor $\vec{r}_{sum}$ in einem Kreissegment, dass diesen Öffnungswinkel nicht überschreitet. Verlässt der Summenvektor $\vec{r}_{sum}$ dagegen ein solches Kreissegment, dann liegt wahrscheinlich ein Tonartwechsel vor.

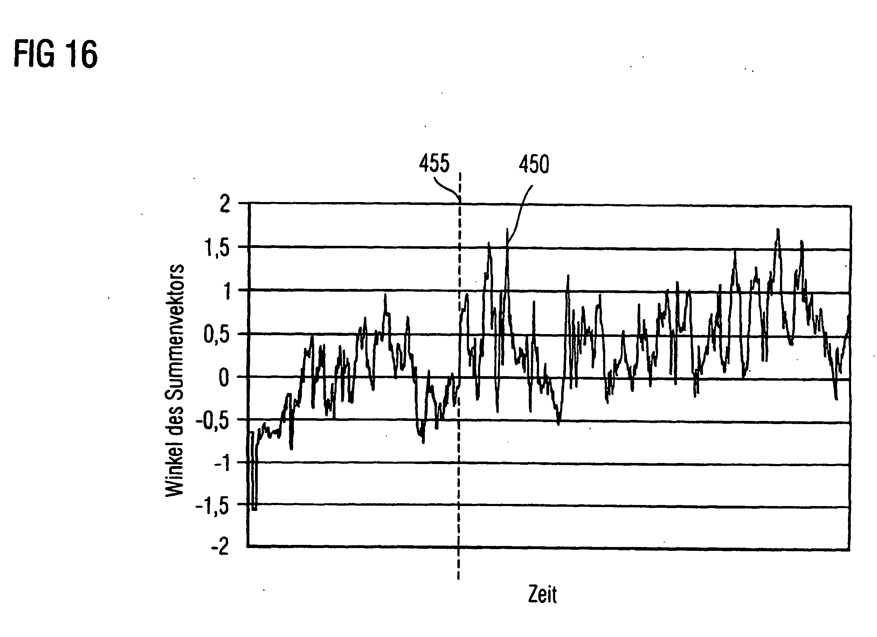

Fig. 16 zeigt so einen Verlauf des Winkels des Terzkreis-Summenvektors $\vec{r}_{sum}$ bei einem Stück von Bach. Genauer gesagt zeigt Fig. 16 einen Verlauf 450 des Winkels des Summenvektors $\vec{r}_{sum}$ für die ersten zehn Sekunden von Bachs Brandenburgischem Konzert Nr. 1, Allegro. Akkordwechsel und Tonartwechsel sind anhand größerer Winkeländerungen zu erkennen. Ein Beispiel hierfür stellt der Zeitpunkt, der mit einer gestrichelten Linien 455 gekennzeichnet ist, dar. Die durch einen Winkel repräsentierte Tonart kann mit Hilfe von den Gleichungen 15a - 15c ermittelt werden.

Der Summenvektor $\vec{r}_{sum}$ ermöglicht es darüber hinaus, Analysefehler bei der Harmonieanalyse und der Tonartanalyse zu korrigieren. Modulationen in benachbarte Tonarten sind wahrscheinlicher als Modulationen in nicht benachbarte Tonarten. Seltene kurzzeitige Ausreißer des Winkels des Terzkreis-Summenvektors zeigen an, dass mit hoher Wahrscheinlichkeit ein Analysefehler vorliegen muss.

Weiterhin ist es möglich, mit Hilfe des Summenvektors $\vec{r}_{sum}$ zwischen tonaler und nichttonaler. Musik zu unterscheiden. Bei nichttonaler Musik ist der Betrag des Summenvektors sehr klein. Bei tonaler Musik dagegen wird er als Funktion der Zeit, wobei über die gesamte bereits verstrichene Spieldauer des Musikstücks integriert bzw. aufsummiert wird, immer länger.

*Symmetriemodellbasierte Harmonieanalyse*

Wie im letzten Abschnitt erläutert wurde, wird zur Analyse tonartübergreifender Zusammenhänge der Terzkreis bzw. die terzkreisbasierte Harmonieanalyse verwendet. Mit Hilfe des Terzkreises kann so beispielsweise die zu einem Zeitpunkt verwendete Tonart aus einem Tonsignal bzw. Audiosignal bzw. Audiodaten bestimmt werden. Ist die Tonart bestimmt bzw. gegeben, so kann das Symmetriemodell bestimmt bzw. eingesetzt werden. Dieses wiederum eignet sich sehr gut, um Zusammenhänge innerhalb einer Tonart zu bestimmen. Auch im Rahmen der symmetriemodellbasierten Harmonieanalyse wird der in dem Abschnitt über die mathematische Modellbeschreibung des Symmetriemodells eingeführte Summenvektor $\vec{r}_{sum}$ verwendet.

Aus dem Winkel des Summenvektors $\vec{r}_{sum}$ lässt sich der momentane Akkord abschätzen, da dieser auf den geometrischen Schwerpunkt bzw. das tonale Zentrum der zu einem Zeitpunkt gespielten Tonigkeiten zeigt. Darüber hinaus können aus dem Winkel des Summenvektors $\vec{r}_{sum}$ Akkordwechsel bestimmt bzw. analysiert werden. Eine plötzliche Änderung des Winkels des Summenvektors lässt auf einen Akkordwechsel schließen.

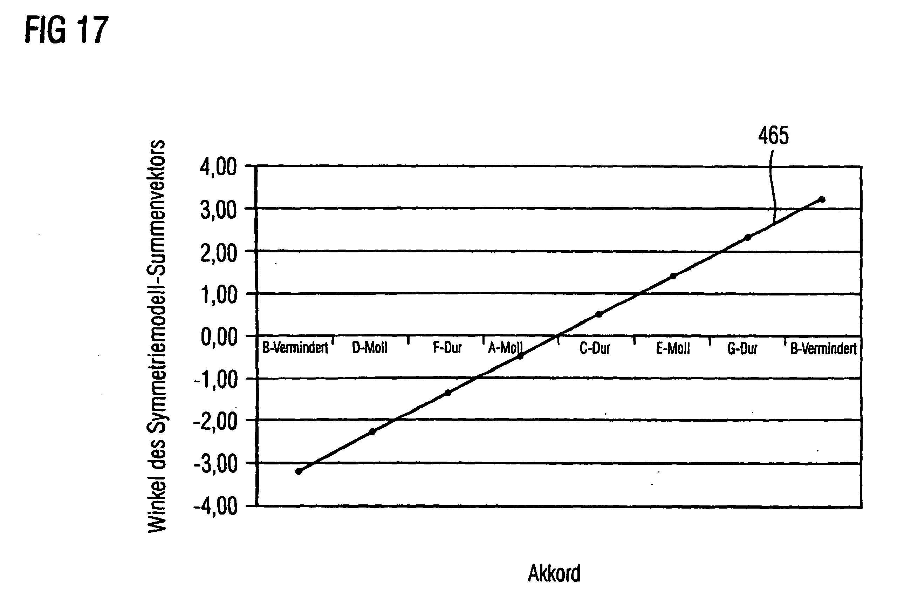

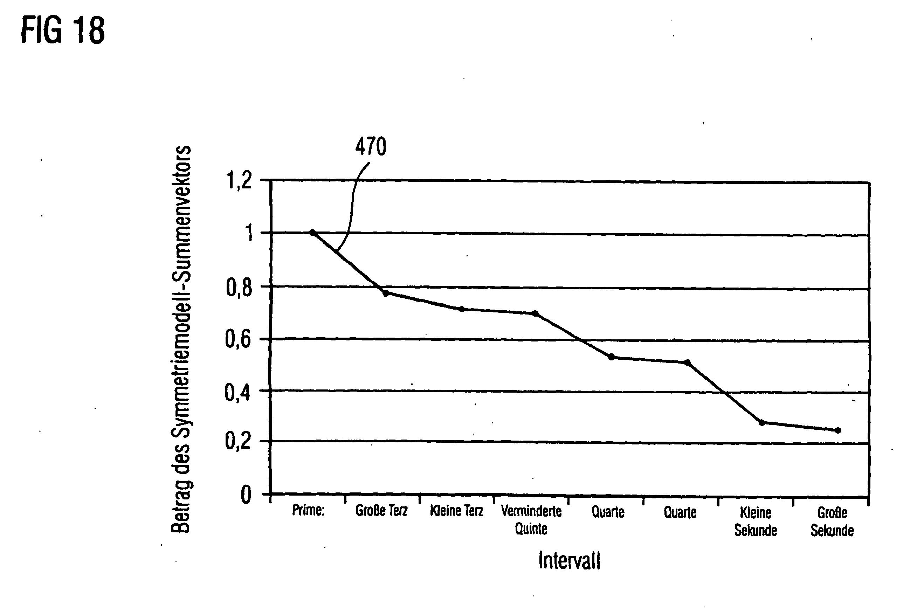

Der Winkel des Symmetriekreis-Summenvektors gibt weiterhin Aufschluss, ob eine Tonkombination tendenziell dem Subdominantbereich, dem Tonikabereich oder dem Dominantbereich zugeordnet werden kann. Fig. 17 zeigt so einen Verlauf 465des Winkels des Symmetriekreis-Summenvektors (im Bogenmaß) für verschiedene Akkorde. Fig. 17 zeigt, dass eine Tonkombination dem Subdominantbereich zuzuordnen ist, wenn der Winkel ein negatives Vorzeichen besitzt. Besitzt der Winkel dagegen ein positives Vorzeichen, so ist die Tonkombination dem Dominantbereich zuzuordnen. Je größer der Winkel der Tonkombination betragsmäßig ist, desto stärker ragt die Tonkombination in den entsprechenden Bereich hinein. Eine Ausnahme hiervon stellt der Dreiklang B-vermindert bzw. H-vermindert dar, dem in Fig. 17 die Winkel $\pm n$ zugeordnet sind. Hieran spiegelt sich der besondere Charakter des Dreiklangs B-vermindert bzw. H-vermindert wider, der den Subdominantbereich und den Dominantbereich miteinander verbindet, wie er in oben zitierter Diplomarbeit von David Gatzsche dargelegt wird. Ist der Betrag des Winkels hingegen sehr klein, dann lässt dies darauf schließen, dass die Tonkombination dem Tonikabereich angehört. Darüber hinaus illustriert der Verlauf 465 aus Fig. 18 ebenfalls das Auflösungsbestreben verschiedener Akkorde in Bezug auf die Grundtonart C-Dur bzw. a-Moll. Fig. 18 zeigt also den Winkel des Symmetriekreis-Summenvektors für unterschiedliche Dreiklänge, wobei dem Symmetrie kreis die Tonart C-Dur bzw. a-Moll zugrundegelegt ist.

Aus dem Betrag des Symmetriekreis-Summenvektors $|\vec{r}_{sum}|$ lässt sich die wahrgenommene Konsonanz bzw. Dissonanz, also die Annehmlichkeit einer gegebenen Tonkombination von Tonigkeiten abschätzen. Je länger der Vektor ist, als desto annehmlicher bzw. konsonanter wird die analysierte Tonkombination empfunden. Entsprechend wird eine Tonkombination als dissonanter bzw. unannehmlicher empfunden, je kürzer der Symmetriemodell-Summenvektor ist. Mit anderen Worten, je kürzer der Vektor ist, desto dissonanter bzw. unannehmlicher ist die Wahrnehmung der betreffenden Tonkombination.

Fig. 18 zeigt so einen Verlauf 470 des Betrages des Symmetriekreis-Summenvektors $|\vec{r}_{sum}|$ für verschiedene Intervalle, also für je zwei Tonigkeiten, die verschiedene Intervalle bzw. Tonintervalle zueinander aufweisen. Hierbei ist die Anordnung der Intervalle auf der Abszisse von Fig. 18 in abnehmender Konsonanz bzw. Annehmlichkeit der betreffenden Intervalle gewählt worden. Fig. 18 zeigt so, dass der Betrag des Symmetriekreis-Summenvektors mit abnehmender Konsonanz bzw. Annehmlichkeit stetig kleiner wird. Der Betrag des Winkels des Symmetriekreises-Summenvektors $\vec{r}_{sum}$ kann alsoals ein Schätzmaß für ein Auflösungsbestreben einer bestimmten Tonkombination im Rahmen eines vorhandenen tonalen Kontexts (Tonart) interpretiert bzw. gesehen werden. Fig. 18 illustriert dies anhand des Verlaufs 470 des Betrags des Symmetriekreis-Summenvektors $|\vec{r}_{sum}|$ für unterschiedliche Tonintervalle. Mit anderen Worten, der Verlauf 470 illustriert so, dass der Betrag des Symmetriekreis-Summenvektors $|\vec{r}_{sum}|$ ausgehend von als konsonant bzw. angenehm empfundenen Intervallen zu weniger konsonant bzw. annehmlich empfundenen Intervallen der Betrag des Symmetriekreis-Summenvektors kontinuierlich abnimmt.

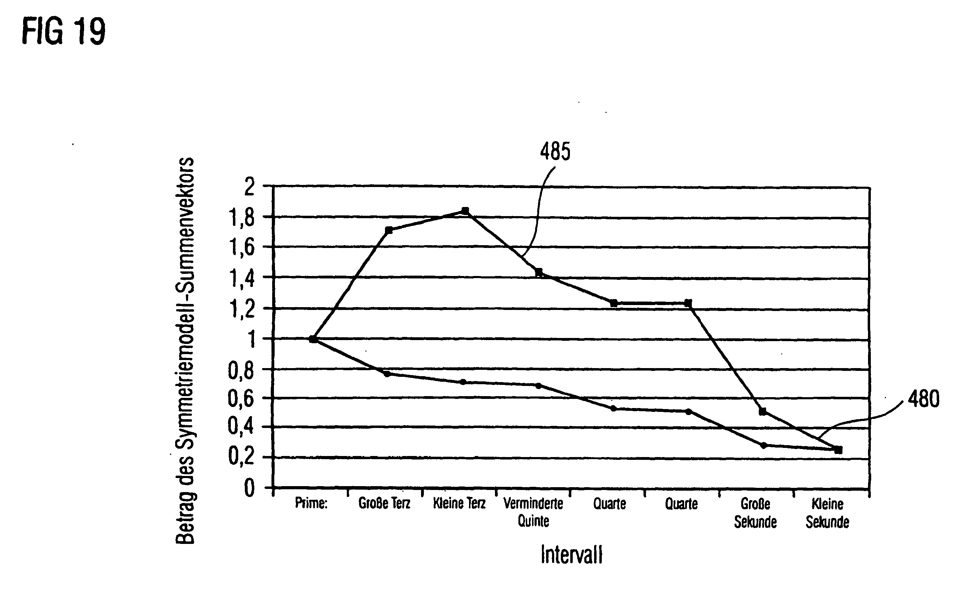

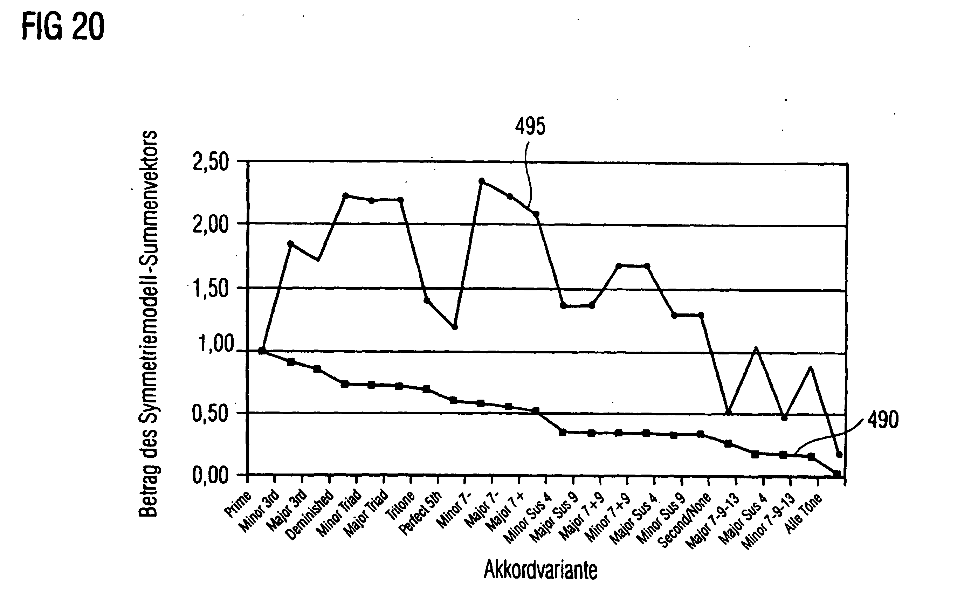

Fig. 19 zeigt einen Verlauf 480 des Betrages des Symmetriemodell-Summenvektors $|\vec{r}_{sum}|$ für verschiedene Intervalle, bei dem die Gesamtenergie auf 1 normiert ist. Hierbei liegt der Berechnung des Verlaufs 480, aber auch den in den Fig. 19 und 20 weiteren gezeigten Verläufen jeweils ein Vektor zugrunde, der die Energien der 12 Tonigkeiten bzw. der 12 Halbtöne unter Vernachlässigung der Oktavierung enthält. In diesem Zusammenhang wird unter einer Normierung auf die Energie 1 verstanden, dass jede der Halbtonenergien des Vektors mit einem Faktor derart multipliziert wird, dass die Summe der Energien aller Halbtöne aus dem Halbtonvektor, also die Summe der Komponenten des betreffenden Vektors, den Wert 1 ergibt. Ist beispielsweise der folgende Halbtonvektor gegeben,

| D | Dis | E | F | Fis | G | Gis | A | Ais | B | C | Cis |
|---|-----|---|---|-----|---|-----|---|-----|---|---|-----|
| 0 | 0,2 | 0 | 0,3 | 0 | 0 | 0 | 0 | 0 | 0 | 0 | 0 |

so ergibt die Summe alle Energien, also der Komponenten des Halbtonvektors, den Wert 0,5. Durch Multiplikation aller Komponenten des Halbtonvektors mit einem Faktor 2 (= 1/0,5) ergibt sich der folgende Halbtonvektor, dessen Energie auf den Wert 1 summiert ist.

| D | Dis | E | F | Fis | G | Gis | A | Ais | B | C | Cis |
|---|-----|---|---|-----|---|-----|---|-----|---|---|-----|
| 0 | 0,4 | 0 | 0,6 | 0 | 0 | 0 | 0 | 0 | 0 | 0 | 0 |

Die Summe aller Energien ergibt nun also den Wert 1.

Darüber hinaus zeigt Fig. 19 einen weiteren Verlauf 485 des Betrages des Symmetriemodell-Summenvektors bzw. des Symmetriekreis-Summenvektors für die gleichen Intervalle, wobei die Gesamtenergie in diesem Fall nicht normiert ist. Auch in Fig. 19 ist die Anordnung der Intervalle auf der Abszisse so gewählt, dass diese in absteigender Reihenfolge der empfundenen Konsonanz bzw. Annehmlichkeit der betreffenden Intervalle angeordnet sind. Insbesondere der Verlauf 480 zeigt, dass der Betrag des Symmetriekreis-Summenvektors bzw. Symmetriemodell-Summenvektors eine Abschätzung bzw. ein Schätzmaß für die Konsonanz bzw. Annehmlichkeit verschiedener Intervalle darstellt, da dieser, wie der Verlauf 480 zeigt, mit abnehmender Konsonanz der betreffenden Intervalle einen monoton fallenden Verlauf zeigt. Der Verlauf 485 zeigt tendenziell den gleichen Effekt, wobei aufgrund der Tatsache, dass bei einem Primabstand nur eine einzelne Tonigkeit betroffen ist, der Betrag des Symmetriekreis-Summenvektors zwangsläufig kleiner ist als ein Betrag des Symmetriekreis-Summenvektors, dem zwei unterschiedliche Tonigkeiten zugrunde liegen. Als Folge steigt der Verlauf 485 ausgehend von dem Primabstand als Intervalle zunächst an, bevor er einen zu dem Verlauf 480 ähnlichen weiteren Verlauf aufweist.

Ähnlich zu den in Fig. 19 gezeigten Verläufen 480, 485 zeigt auch Fig. 20 zwei Verläufe 490, 495 des Betrages des Symmetriemodell-Summenvektors für, unterschiedliche, nahezu beliebige Tonkombinationen. Im Unterschied zu Fig. 19, in der nur jeweils Intervalle, also Tonkombination maximal zweier Tonigkeiten, gezeigt sind, sind in Fig. 20 auf der Abszisse verschiedene Akkordvarianten gemäß einer abnehmenden Konsonanz bzw. Annehmlichkeit beginnend mit einem Primabstand bis zu einem Erklingen aller Tonigkeiten dargestellt. Dem Verlauf 490 liegt ähnlich dem Verlauf 480 aus Fig. 19 eine Normierung der Gesamtenergie auf 1 zugrunde, während dem Verlauf 495, ähnlich wie dem Verlauf 485 aus Fig. 19, eine entsprechende Normierung der Gesamtenergie nicht zugrunde liegt.

Der Verlauf 490 zeigt mit abnehmender Konsonanz bzw. Annehmlichkeit der betreffenden Akkordvariante einen monoton fallenden Verlauf des Betrages des Symmetriekreis-Summenvektors auf. Ausgehend von einem Wert 1 im Falle einer Prime fällt so der Verlauf 490 kontinuierlich auf einen Wert von etwa 0, wenn alle Tonigkeiten berücksichtigt werden. Dementsprechend verdeutlicht der Verlauf 490 die Eignung des Betrag des Symmetriekreis-Summenvektors als Schätzmaß für die Beurteilung der Konsonanz bzw. Annehmlichkeit verschiedener Tonkombinationen. Hierbei zeigt der Verlauf 490 klar, dass eine Tonkombination bzw. Tonigkeitskombination um so konsonanter bzw. annehmlicher empfunden bzw. wahrgenommen wird, je größer der Betrag des betreffenden Symmetriekreis-Summenvektors ist. Im Unterschied zu dem Verlauf 490 zeigt der Verlauf 495, ähnlich wie der Fig. 485 aus Fig. 19, ein etwas komplizierteres Verhalten, was darauf zurückzuführen ist, dass bei den verschiedenen Akkordvarianten eine unterschiedliche Anzahl von Tonigkeiten betroffen ist.

Die Fig. 19 und 20 zeigen darüber hinaus, dass aus dem Betrag des Summenvektors sich auch die harmonische Definiertheit des momentanen Akkordes ableiten lässt. Je größer der Betrag des Vektors ist, desto sicherer kann man davon ausgehen, dass ein harmonisch klingender Akkord im Tongemisch vorliegt.

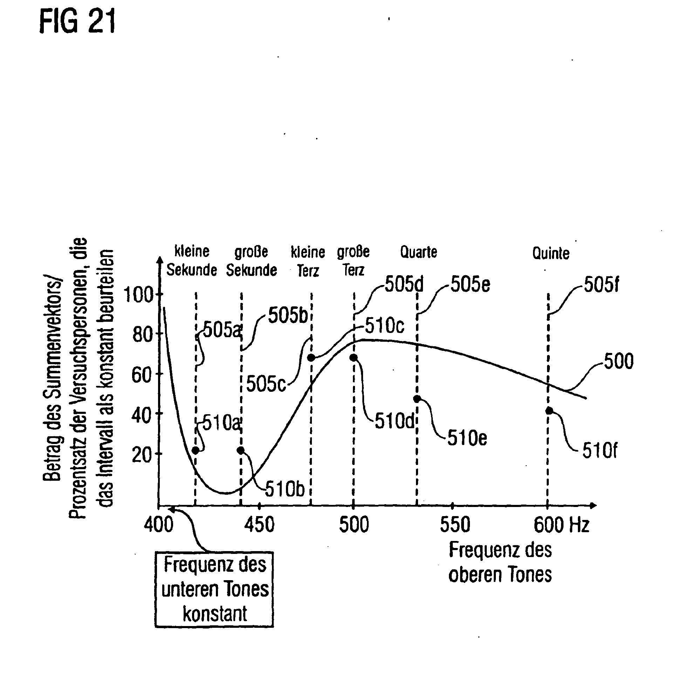

Fig. 21 zeigt ein Ergebnis einer Bewertung von simultanen Intervallen hinsichtlich ihrer Konsonanz nach einer psychometrischen Untersuchung von R. Plomb und W. Levelt, (R. Plomb und W. Levelt, Tonal Consonance and Critical Bandwidth, 3. Accoust. Soc. Am. **38,** 548 (1965) und Guerino Mazzola, Die Geometrie der Töne - Elemente der mathematischen Musiktheorie, Birkhäuser-Verlag, 1990. Genauer gesagt zeigt Fig. 21 einen Verlauf 500, der einen Prozentsatz der Versuchspersonen bezeichnet, die ein Intervall als konsonant beurteilten in Abhängigkeit von einer Frequenz eines oberen Tons im Rahmen der psychometrischen Untersuchung von Plomb und Levelt. Im Rahmen der psychometrischen Untersuchung von Plomb und Levelt wurde hierbei den Versuchspersonen gleichzeitig neben dem oberen Ton, dessen Frequenz verändert wurde, auch ein zweiter, unterer Ton vorgespielt, dessen Frequenz konstant bei 400 Hz gehalten wurde.

Neben dem Verlauf 500 sind in Fig. 21 auch sechs Frequenzen des oberen Tons durch vertikale, gestrichelte Linien 505a - 505f markiert, die bezogen auf die konstante Frequenz des unteren Tons von 400 Hz den Intervallen einer kleinen Sekunde (505a), einer großen Sekunde (505b), einer kleinen Terz (505c), einer großen Terz (505d), einer Quarte (505e) und einer Quinte (505f) entsprechen. Der Verlauf 500 zeigt mit steigender Frequenz des oberen Tons ausgehend von der Frequenz des unteren Tons, also einem Primabstand, einen signifikanten Rückgang, der im Bereich der vertikalen Markierungen 505a und 505b, also im Bereich der Intervalle einer kleinen und einer großen Sekunde, liegt, ein Minimum von unter 10 % annimmt. Anschließend steigt der Verlauf 500 wiederum an, bis er im Bereich der Markierung 505d, also im Bereich der großen Terz, ein Maximum erreicht. Mit weiter wachsender Frequenz zeigt der Verlauf 500 einen sanft abfallenden weiteren Verlauf.

In Fig. 21 sind außerdem für die durch die sechs vertikalen Linien markierten Frequenzen bzw. Intervalle 505a - 505f jeweils die Längen 510a - 510f des Symmetriekreis-Summenvektors bzw. des Symmetriemodell-Summenvektors für die entsprechenden Intervalle eingezeichnet. Es zeigt sich, dass die den Längen des Symmetriemodell-Summenvektors entsprechenden Markierungen 510a - 510f den Verlauf des Verlaufs 500 gut nachbilden. Es zeichnet sich also ab, dass das Symmetriemodell, und insbesondere die Analyse auf Basis des Symmetriemodells, bestehende Untersuchungen zum Thema Konsonanz und Dissonanz bestätigt bzw. mit diesem in Einklang steht, was die Eignung des Symmetriemodells vor Analyse von Audiosignalen, Audiodaten und Toninformationen nachweist. Dies zeigt, dass eine Analyse auf Basis des Symmetriemodells mit Hilfe des Summenvektors wichtige Informationen über eine Folge von Tönen bzw. Tonkombinationen oder auch Musikstücken liefert.

Die Vorrichtung zur Analyse von Audiodaten stellt weiteren Komponenten so ein auf dem Summenvektor basierendes Analysesignal zur Verfügung. Wie die im Folgenden erläuterten Ausführungsbeispiele zeigen werden, kann das von der Vorrichtung zur Analyse von Audiodaten bereitgestellte Analysesignal einer Anzeigevorrichtung 200 zugeführt werden, die basierend auf dem Analysesignal die Informationen, die der Summenvektor umfasst, graphisch, in Textform, mechanisch oder auf andere Art und Weise darstellt.

**Symmetriemodellbasierte und terzkreisbasierte Musikinstrumente**

In den folgenden Abschnitten werden weitere Ausführungsbeispiele der erfindungsgemäßen Vorrichtung zum Erzeugen eines Notensignals auf eine manuelle Eingabe, und weitere Ausführungsbeispiele der Vorrichtungen zur Ausgabe von einem eine Tonigkeit anzeigenden Ausgabesignal beschrieben. Die im Folgenden beschriebenen Ausführungsbeispiele der erfindungsgemäßen Vorrichtung zum Erzeugen eines Notensignals umfassen unter anderem symmetriemodellbasierte und terzkreisbasierte Musikinstrumente.

Die bisher gelegten und in den vorangegangenen Abschnitten erläuterten Grundlagen stellen hierfür die Ausgangspunkte dar, um neuartige Musikinstrumente in Form von Ausführungsbeispielen der vorliegenden Erfindung zu beschreiben. Mit anderen Worten sind die gelegten Grundlagen hervorragend geeignet, um die im weiteren Verlauf beschriebenen, neuartigen Musikinstrumente entwickeln zu können.

Zunächst wird in den folgenden Abschnitten in Form eines Blockschaltbildes ein prinzipieller Aufbau für ein Musikinstrument vorgestellt, das auf Basis der bisher vorgestellten Grundlagen arbeitet. Dieses Instrumentenprinzip, das durch das Blockschaltbild realisiert wird, setzt die in den einführenden Abschnitten zu den Themen Synthese sinnvoll klingender Tonkombinationen und Analyse vorhandener Tonkombinationen zusammengefasste Konzepte um. Die wesentlichen Merkmale bzw. Eigenschaften der erfindungsgemäßen Musikinstrumente werden im Folgenden zusammengefasst.

Das erfindungsgemäße Konzept für Musikinstrumente (Instrumentenkonzept) basiert auf einem logischen Grundsystem, das die geometrische Positionierung von Basistönen in einem Tonraum erlaubt, die in Form der in den einleitenden Abschnitten der vorliegenden Anmeldung beschriebenen Zuordnungsfunktion realisiert ist und im Rahmen der Steuereinrichtung 120 implementiert sein kann. Optional erlaubt das Instrumentenkonzept darüber hinaus die Definition einer räumlichen Tonverteilungsfunktion bzw. die Definition einer räumlichen Einzeltonverteilungsfunktion. Als weitere Option kann eine Selektionsgewichtungsfunktion im Rahmen des erfindungsgemäßen Instrumentenkonzepts eingeführt werden. Weiterhin bietet die erfindungsgemäße Vorrichtung 100 zum Erzeugen eines Notensignals, also ein erfindungsgemäßes Instrument, eine Bedieneinrichtung bzw. eine Benutzerschnittstelle an, die es ermöglicht, einen Eingabewinkel oder einen Eingabewinkelbereich bzw. einen Raumausschnitt des logischen Tonraums in Form eines Eingabesignals zu definieren bzw. zu selektieren. Die Auswahl des Raumausschnittes wird dann als Eingabesignal der Steuereinrichtung zugeführt, die basierend auf dem Eingabesignal und der Zuordnungsfunktion ein Notensignal erzeugt, das dann optional an einen Klangerzeuger gesendet werden kann.

Die Anordnung der Basistöne bzw. der Tonigkeiten im Tonraum folgt einer Anordnung mit kleinsten Tonabständen, die einer großen oder einer kleinen Terz entsprechen. Als besonders sinnvoll haben sich in diesem Zusammenhang das Folgen der Vorgaben des Terzkreises und/oder des Symmetriemodells bzw. des Symmetriekreises bzw. des Kadenzkreises gezeigt. Hierdurch ist es möglich, mit einer extrem geringen Anzahl an Basistönen und einer daraus folgenden Anzahl an Bedienelementen bzw. Eingabeeinrichtungen sinnvolle Tonkombinationen zu erzeugen. Das erfindungsgemäße Instrumentenkonzept ist deshalb insbesondere sehr gut für den pädagogischen Bereich geeignet. Darüber hinaus ist es aber auch geeignet, um sehr schnell und effizient Notensignale zu erzeugen, die über einen angeschlossenen Klangerzeuger zum Erzeugen harmonisch bzw. konsonant klingender Begleitungen oder Improvisationen herangezogen werden können. Diese sehr schnelle und sehr einfache Eingabe zusammen mit der pädagogischen Eignung des erfindungsgemäßen Instrumentenkonzepts ermöglicht es so, Menschen mit einer geringen musikalischen Vorbildung spielerisch an die Musik heranzuführen.

Das erfindungsgemäße Instrumentenkonzept kann so beispielsweise das stufenlose Überblenden von Klangkombinationen in andere Klangkombinationen ermöglichen, ohne dass ungewollte Dissonanzen entstehen. Dies erfolgt im Wesentlichen auf Basis der geometrischen Benachbarung bzw. Anordnung sinnvoller Basistöne und der Eingabe eines Benutzers in Form eines Eingabewinkels oder eines Eingabewinkelbereichs. Optional kann hierbei durch Einführen der räumlichen Verteilungsfunktion bzw. der räumlichen Einzeltonverteilungsfunktion, die einzelnen Basistönen zugeordnet ist, sowie der optionalen Möglichkeit, den selektierten Ausschnitt im Tonraum stufenlos in seiner Position, Ausdehnung und räumlichen Gewichtung verändern zu können, das Instrumentenkonzept weiter verfeinert werden.

Das Instrumentenkonzept sieht optional ein Analyseteil vor, der in der Lage ist, Audioinformationen, Audiodaten und Toninformationen anderer Instrumente zu analysieren und in den eigenen Tonraum zu mappen bzw. abzubilden. Die aktiven Töne anderer Instrumente können dann auf einer Vorrichtung 200 zur Ausgabe von einem eine Tonigkeit anzeigenden Ausgabesignal markiert bzw. hervorgehoben werden. Durch die geometrische Anordnung der Ausgabefeldradialrichtungen bzw. der Ausgabebereiche zusammenhängender Basistöne im Tonraum und auf der Bedienoberfläche des Instrumentes ist es mit einem Mindestmaß an musikalischem Verständnis möglich, passende Begleitmusik zu einem gegebenen Tonsignal zu erzeugen.

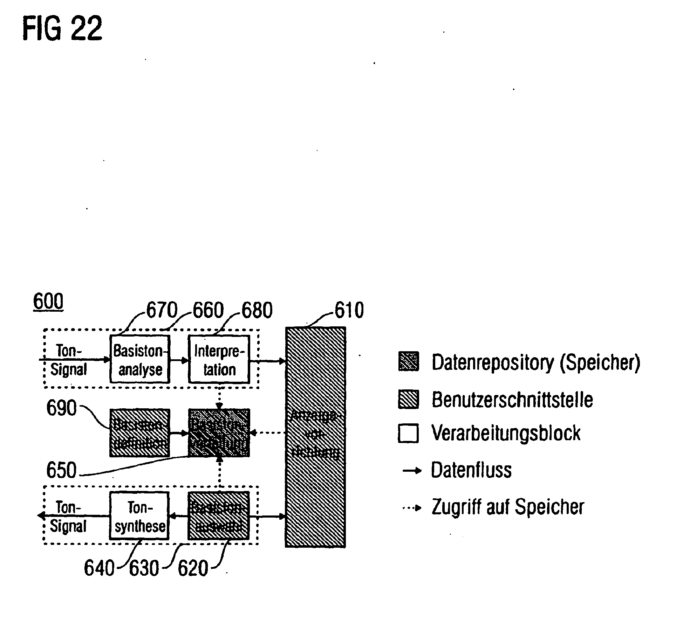

Fig. 22 zeigt ein Blockschaltbild eines erfindungsgemäßen Musikinstrument bzw. Symmetriekreisinstrument 600 als System, das eine erfindungsgemäße Vorrichtung zum Erzeugen eines Notensignals auf eine manuelle Eingabe hin und eine Vorrichtung zur Ausgabe von einem eine Tonigkeit anzeigenden Ausgabesignal umfasst. Genauer gesagt weist das Musikinstrument 600 eine Anzeigevorrichtung 610 auf, bei der es sich um eine Vorrichtung zur Ausgabe von einem eine Tonigkeit anzeigenden Ausgabesignal handelt. Darüber hinaus weist das Musikinstrument 600 eine in Fig. 22 auch als Basistonauswahl bezeichnete erfindungsgemäße Bedienvorrichtung 620 als Vorrichtung zum Erzeugen eines Notensignals auf eine manuelle Eingabe hin auf. Die Bedienvorrichtung 620 ist Teil eines Synthesezweigs 630, der außer der Bedienvorrichtung 620 einen Klangerzeuger 640 zur Synthese von Tönen (Tonsynthese) umfasst. Die Bedienvorrichtung 620 ist hierbei sowohl mit der Anzeigevorrichtung 610 als auch dem Klangerzeuger 640 gekoppelt. Die Bedienvorrichtung 620 umfasst eine Bedieneinrichtung, um es einem Benutzer zu ermöglichen, einen Eingabewinkel oder einen Eingabewinkelbereich zu definieren und als Eingabesignal eine Steuereinrichtung, die ebenfalls die Bedienvorrichtung 620 umfasst, bereitzustellen. Darüber hinaus kann die Bedienvorrichtung 620 der Anzeigevorrichtung 610 optional ein entsprechendes Signal übrschritten, so dass die Anzeigevorrichtung 610 auf dem Ausgabefeld den vom Benutzer definierten Eingabewinkel oder Eingabewinkelbereich darstellen kann. Alternativ oder ergänzend kann die Bedienvorrichtung 620 selbstverständlich der Anzeigevorrichtung 610 auch die erzeugten Notensignale zur Verfügung stellen, so dass die Anzeigevorrichtung die den Notensignalen entsprechenden Tönen bzw. Tonigkeiten auf dem Ausgabefeld darstellen kann. Darüber hinaus ist die Bedienvorrichtung 620 mit einem optionalen Speicher (Datenrepository) 650 zur Speicherung einer Basistonverteilung gekoppelt.

Hierdurch ist es der Bedienvorrichtung 620 möglich, auf die in dem Speicher 650 abgelegte Basistonverteilung zuzugreifen. Die Basistonverteilung kann in dem Speicher 650 beispielsweise als Zuordnungsfunktion abgelegt sein. Der Klangerzeuger 640 ist außerdem mit einem Ausgang des Musikinstruments 600, beispielsweise einem Lautsprecher oder einem Anschluss, über den Tonsignale übertragen werden können, gekoppelt. Hierbei kann es sich beispielsweise um einen Line-In-Anschluss, einen Midi-Anschluss (Midi = musical instrument digital interface = digitale Schnittstelle für Musikinstrumente), Anschlüsse für digitale Tonsignale, andere Anschlüsse oder auch einen Lautsprecher oder ein anderes Sound-System handeln.

Neben dem Synthesezweig 630 weist das Musikinstrument 600 auch eine Vorrichtung zur Analyse von Audiodaten als einen Analysezweig 660 auf. Dieser umfasst eine Basistonanalysevorrichtung bzw. Halbtoneranalysevorrichtung 670 und eine Interpretationsvorrichtung 680, die miteinander gekoppelt sind: Darüber hinaus empfängt die Basistonanalysevorrichtung 670 über einen Eingang ein Tonsignal. Die Interpretationsvorrichtung 680 ist mit der Anzeigevorrichtung 610 gekoppelt und kann über eine entsprechende Kopplung auch auf den Speicher 650 und die in dem Speicher abgelegte Basistonverteilung zugreifen. Diese Kopplung, also die Kopplung der Interpretationsvorrichtung 680 und des Speichers 650, ist optional. Ebenso ist die Kopplung zwischen der Bedienvorrichtung 620 und dem Speicher 650 optional. Darüber hinaus kann der Speicher 650 optional auch so mit der Anzeigevorrichtung 610 verbunden sein, dass diese ebenfalls auf die in dem Speicher 650 abgelegte Basistonverteilung zugreifen kann.

Neben den bereits beschriebenen Verbindungen des Speichers 650 mit der Interpretationsvorrichtung 680, der Anzeigevorrichtung 610 und der Bedienvorrichtung 620 kann dieser optional mit einer Basistondefinitionseingabevorrichtung 690 verbunden werden, so dass ein Benutzer über die Basistondefinitionsvorrichtung 690 die Basistonverteilung in dem Speicher 650 beeinflussen, verändern oder neu programmieren kann. Die Anzeigevorrichtung 610, die Bedienvorrichtung 620 und die Basistondefinitionseingabevorrichtung 690 stellen somit Benutzerschnittstellen dar. Die Basistonanalysevorrichtung 670, die Interpretationsvorrichtung 680 und der Klangerzeuger 640 stellen somit Verarbeitungsblöcke dar.

Die Basistonanalysevorrichtung 670 umfasst im Fall des in Fig. 22 dargestellten Musikinstruments 600 zwei Einrichtungen, die in Fig. 22 nicht dargestellt sind und innerhalb der Basistonanalysevorrichtung 670 miteinander verbunden sind. Hierbei handelt es sich im Einzelnen um eine Halbtonanalyseeinrichtung, die die der Basistonanalysevorrichtung 670 bereitgestellten Tonsignale bzw. Audiodaten bezüglich einer Lautstärkeinformationsverteilung über eine Menge von Halbtönen zu analysieren, und um eine Tonigkeitsanalyseeinrichtung, die basierend auf der Lautstärkeinformationsverteilung eine Tonigkeits-Lautstärkeinformationsverteilung über der Menge der Tonigkeiten aus der Lautstärkeinformationsverteilung der Halbtonanalyseeinrichtung bildet.

Während heutige Synthesizer vor allem auf zwei Dinge spezialisiert sind, nämlich Amplitudenverläufe und Frequenzverläufe von Einzelton zu modellieren, und daher nur unzureichende Methoden bieten, um komplexe Harmonien zu erzeugen, ineinander zu überführen oder sonstig zu verarbeiten, schließt das in Fig. 22 gezeigte Musikinstrument 600 die genannten Lücken. Dem System bzw. Musikinstrument 600 liegt als Kern des Konzeptes die Basistonverteilung im Tonraum zugrunde, die durch die Zuordnungsfunktion definiert bzw. gegeben ist. Bei dem in Fig. 22 gezeigten Musikinstrument 600 kann die Basistonanordnung bzw. die Definition der Zuordnungsfunktion in dem Speicher 650 abgelegt sein oder werden. Diese ist entweder in Form des Terzkreises oder des Symmetriemodells fest vorgegeben oder kann über die Benutzerschnittstelle der Basistondefinitionseingabevorrichtung 690 frei gestaltet werden. So ist es denkbar, beispielsweise über die Basistondefinitionseingabevorrichtung 690 eine bestimmte Zuordnungsfunktion aus einer Mehrzahl von Zuordnungsfunktionen auszuwählen, oder auch auf die konkrete Ausgestaltung der Zuordnungsfunktion direkten Einfluss zu nehmen. Aufgrund der in Fig. 2 gezeigten optionalen Kopplungen der Interpretationsvorrichtung 680, der Anzeigevorrichtung 610 und der Bedienvorrichtung 620 steht die betreffende Basistonverteilung etwa in Form der Zuordnungsfunktion diesen drei Komponenten des Musikinstruments 600 zeitgleich zur Verfügung.

Wird dem Musikinstrument 600 über seinen Eingangsanschluss ein Tonsignal zur Verfügung und damit der Basistonanalysevorrichtung 670 bereitgestellt, analysiert die Halbtonanalyseeinrichtung der Basistonanalysevorrichtung 670 zunächst bezüglich einer Lautstärkeinformationsverteilung über einer Menge von Halbtönen. Anschließend bestimmt die Tonigkeitsanalyseeinrichtung der Basistonanalysevorrichtung 670 auf Basis der Lautstärkeinformationsverteilung eine Tonigkeits-Lautstärkeinformationsverteilung über der Menge der Tonigkeiten. Diese Tonigkeits-Lautstärkeinformationsverteilung wird dann der Interpretationsvorrichtung 680, bei der es sich um die Vektorberechnungseinrichtung handelt, die für jeden Halbton oder für jede Tonigkeit einen zweidimensionalen Zwischenvektor bestimmt, basierend auf den zweidimensionalen Zwischenvektoren einen Summenvektor berechnet, wobei die einzelnen Zwischenvektoren basierend auf der Lautstärkeinformationsverteilung oder der Tonigkeits-Lautstärkeinformationsverteilung bezüglich ihrer Länge gewichtet werden. Anschließend gibt die Interpretationsvorrichtung 680 ein Analysesignal an die Anzeigevorrichtung 610 aus, das auf dem Summenvektor basiert. Alternativ oder ergänzend kann die Interpretationsvorrichtung 680 der Anzeigevorrichtung 610 ein Anzeigesignal zur Verfügung stellen, das Informationen bezüglich der Lautstärkeinformationsverteilung oder der Tonigkeits-Lautstärkeinformationsverteilung aufweist.

Die Anzeigevorrichtung 610 kann dann auf Basis des Analysesignals und/oder des Anzeigesignals die dem eingehenden Tonsignal entsprechenden Tonigkeiten auf einem Ausgabefeld der Anzeigevorrichtung 610 durch Hervorheben von Ausgabefeldradialrichtungen oder durch Hervorheben von Ausgabebereichen dem Benutzer mitteilen. Hierbei kann die Anzeigevorrichtung 610 die Darstellung auf dem Ausgabefeld basierend auf der in dem Speicher 650 abgelegten Basistonverteilung vornehmen.

Der Benutzer des Musikinstruments 600 kann dann über die Bedienvorrichtung 620 einen Eingabewinkel oder einen Eingabewinkelbereich definieren, so dass die Bedienvorrichtung 620 mit Hilfe ihrer Steuereinrichtung hieraus und optional basierend auf der in dem Speicher 650 abgelegten Basistonverteilung in Form der Zuordnungsfunktion Notensignale erzeugt und dem Klangerzeuger 640 zur Verfügung stellt. Der Klangerzeuger 640 erzeugt dann basierend auf den Notensignalen der Bedienvorrichtung 620 seinerseits Tonsignale, die an dem Ausgang des Musikinstruments 600 ausgegeben werden.

Mit anderen Worten stellt der optionale Speicher 650 mit der in ihm abgelegten Basistonverteilung und der Möglichkeit, über die Basistondefinitionseingabevorrichtung 690 diese zu verändern, zentrale Komponenten des erfindungsgemäßen Musikinstruments 600 dar. Ein weiterer wichtiger Bestandteil ist die Anzeigevorrichtung 610. Diese stellt den Tonraum und die darin enthaltenen Basistöne dar, markiert ausgewählte oder analysierte Töne oder bildet auch die räumliche Tonverteilungsfunktion bzw. die räumliche Einzeltonverteilungsfunktion und/oder die Selektionsgewichtungsfunktion ab. Weiterhin sieht das Konzept des Musikinstruments 600 den Analysezweig 660 und den Synthesezweig 630 vor. Der Analysezweig 660 ist in der Lage, die innerhalb von Tonsignalen (beispielsweise Audiosignale oder Midi-Signale) transportierten Basistöne zu analysieren und entsprechend der Basistonverteilung zu interpretieren, im Tonraum zu markieren und über die Anzeigevorrichtung 610 anzuzeigen. Diese Funktionalität kann z. B. verwendet werden, damit ein Musiker B eine passende Begleitung zu einem von Musiker A gelieferten Audiosignal erzeugen kann. Neben dem Analysezweig 660 gibt es noch den Synthesezweig 630. Dieser enthält eine Schnittstelle zur Auswahl von Basistönen, nämlich die Bedienvorrichtung 620, die auch als Basistonauswahl in Fig. 22 bezeichnet ist. Die selektierten Töne werden an die Tonsynthese, also den Klangerzeuger 640, übertragen, welcher ein entsprechendes Tonsignal generiert. Bei dem Klangerzeuger 640 kann es sich um einen Midigenerator, um eine Begleitautomatik oder um einen Klangsynthesizer handeln. Das hier vorgestellte Klangsynthese- und Analysekonzept bietet viele interessante Möglichkeiten, welche noch in den nachstehenden Ausführungsbeispielen näher erläutert und beleuchtet werden.

Grundsätzlich ist es möglich, dass die Interpretationsvorrichtung 680, die Anzeigevorrichtung 610 und die Bedienvorrichtung 620 auf unterschiedliche Basistonverteilungen, die in dem Speicher 650 abgelegt sind, zurückgreift. So ist es beispielsweise denkbar, dass die Anzeigevorrichtung 610 eine Darstellung verwendet, die das Symmetriemodell bzw. den Kadenzkreis exakt nachbildet, dass also bezogen auf den Winkel der Abstand zweier benachbarter Tonigkeiten davon abhängt, ob der kleinste Tonabstand eine kleine Terz oder eine große Terz ist. Gleichzeitig kann die Bedienvorrichtung 620 auf Basis einer Zuordnungsfunktion operieren, bei der die sieben Tonigkeiten des Symmetriekreises bzw. des Kadenzkreises bezogen auf den Winkel äquidistant verteilt sind.

Fig. 22 zeigt also in Form eines Blockschaltbildes ein sehr allgemeines Prinzip eines technischen Systems zur Realisierung des erfindungsgemäßen Klangsynthesekonzepts und Analysekonzepts.

In den folgenden Abschnitten wird die Selektion des aktiven Raumausschnitts durch den Benutzer, also die Definition des Eingabewinkels oder des Eingabewinkelbereichs näher betrachtet. In diesem Zusammenhang werden einige Ausführungsbeispiele der Bedieneinrichtung vorgestellt und näher erläutert. Hierbei erfolgen die nachfolgenden Erläuterungen anhand einer dem Symmetriemodell folgenden Basistonanordnung. Diese können jedoch ohne Einschränkung auch auf den Terzkreis oder eine andere Anordnung der Basistöne bzw. Tonigkeiten, die durch eine entsprechende Zuordnungsfunktion abgedeckt wird, übertragen werden.

Hierbei wird der aktive Raumausschnitt im Symmetriemodell, im Terzkreis und anderen erfindungsgemäßen Anordnungen der Basistöne, die durch die Zuordnungsfunktionen abgedeckt werden, über einen einzelnen Eingabewinkel oder über ein Kreissegment definiert. Dies kann beispielsweise über einen Startwinkel und einen Öffnungswinkel und gegebenenfalls optional auch über einen Radius erfolgen. Der Begriff des "aktiven Raumausschnitts" umfasst hierbei auch den Fall, dass der Öffnungswinkel des Kreissegments verschwindet bzw. einen Öffnungswinkel der Größe 0° aufweist, so dass der aktive Raumausschnitt auch nur aus einem einzelnen Eingabewinkel bestehen kann. In diesem Fall stimmen folglich der Startwinkel und der Eingabewinkel überein.

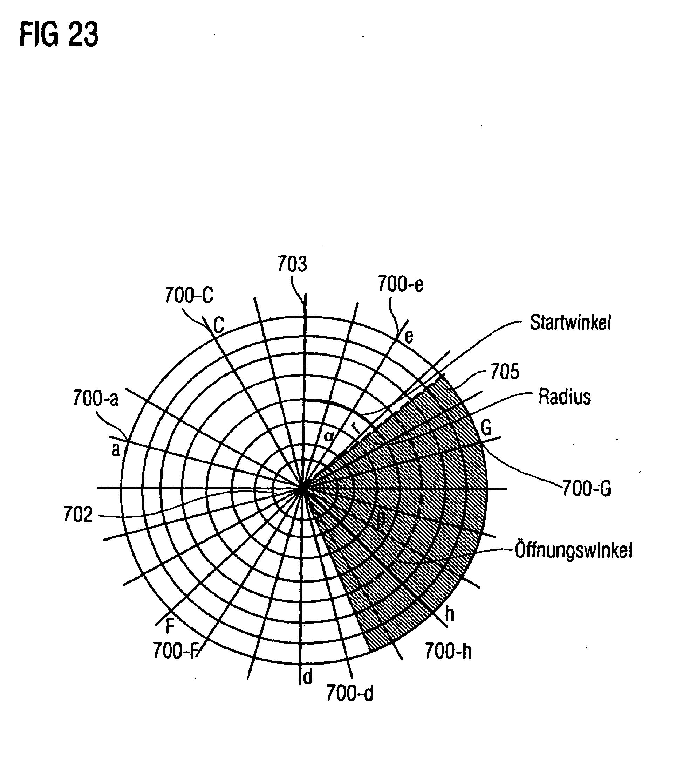

Fig. 23 zeigt ein Ausführungsbeispiel einer Darstellung auf einem Ausgabefeld einer Bedieneinrichtung einer Vorrichtung zum Erzeugen eines Notensignals auf eine manuelle Eingabe hin. Genauer gesagt zeigt Fig. 23 eine Darstellung auf dem Ausgabefeld der Bedieneinrichtung, wenn es sich beispielsweise bei der Bedieneinrichtung um einen Touchscreen oder eine andere berührungsempfindliche Fläche handelt, die gleichzeitig auch eine Darstellung durch eine Anzeige bzw. auf dem Ausgabefeld ermöglicht. Technisch kann dies so realisiert werden, dass zwischen dem Ausgabefeld und einem Benutzer ein berührungsempfindliches Feld positioniert wird, auf dem der Benutzer einzelne Punkte bzw. Bereiche durch Berühren anwählen kann. Das berührungsempfindliche Feld ist in diesem Fall mit einer Erfassungseinrichtung gekoppelt, die eine Lokalisierung des Bereichs ermöglicht, den der Benutzer berührt. Die Erfassungseinrichtung ist mit einer Feldauswerteeinrichtung gekoppelt, die aus dem Ort der Berührung bezogen auf einen Mittelpunkt oder einen zentralen Punkt des berührungsempfindlichen Feldes einen Winkel oder einen Winkelbereich als Eingabesignal der Steuereinrichtung der erfindungsgemäßen Vorrichtung zum Erzeugen eines Notensignals bereitstellt. Auf dem hinter dem berührungsempfindlichen Feld angeordneten Ausgabefeld kann eine mit dem Ausgabefeld gekoppelte Ausgabefeldsteuereinrichtung eine Darstellung erzeugen, wie sie beispielsweise in Fig. 23 gezeigt ist und die dem Benutzer eine Eingabe von einem Eingabewinkel oder einem Eingabewinkelbereich über das berührungsempfindliche Feld erleichtert bzw. überhaupt erst ermöglicht.

Auf dem in Fig. 23 gezeigten Ausgabefeld wird zu diesem Zweck in Anlehnung an das Symmetriemodell eine Darstellung von sieben Tonigkeiten 700-C, 700-e, 700-G, 700-h, 700-d, 700-F und 700-a gezeigt. Darüber hinaus wird auf dem Ausgabefeld auch der Mittelpunkt des berührungsempfindlichen Feldes 702 dargestellt.

Berührt nun der Benutzer auf dem berührungsempfindlichen Feld einen Punkt, so liefert die Erfassungseinrichtung der Feldauswerteeinrichtung ein Signal, das den Ort der Berührung durch den Benutzer auf dem berührungsempfindlichen Feld anzeigt. Aus den Koordinaten des Mittelpunkts des berührungsempfindlichen Feldes 702 und dem Ort der Berührung durch den Benutzer (dargestellt durch seine Koordinaten) bestimmt die Feldauswerteeinrichtung bezogen auf eine Vorzugsrichtung des berührungsempfindlichen Feldes 703, die auch auf dem Ausgabefeld dargestellt werden kann, einen Winkel, der zugleich als Eingabewinkel der Steuereinrichtung der erfindungsgemäßen Vorrichtung zum Erzeugen eines Notensignals bereitgestellt werden kann.

Berührt der Benutzer einen zweiten Punkt auf dem berührungsempfindlichen Feld oder bewegt seinen Finger auf dem berührungsempfindlichen Feld zu einem zweiten Punkt, kann die Erfassungseinrichtung der Feldauswerteeinrichtung entsprechende Signale bereitstellen, so dass die Feldauswerteeinrichtung bezogen auf den zweiten Punkt, den der Benutzer berührt hat oder an dem der Benutzer seine Bewegung auf dem berührungsempfindlichen Feld unterbrochen hat, einen zweiten Winkel analog bestimmen. Auf Basis dieser beiden Winkel kann die Feldauswerteeinrichtung einen Eingabewinkelbereich β bestimmen und als Eingabesignal der Steuereinrichtung der erfindungsgemäßen Vorrichtung zum Erzeugen eines Notensignals bereitstellen.

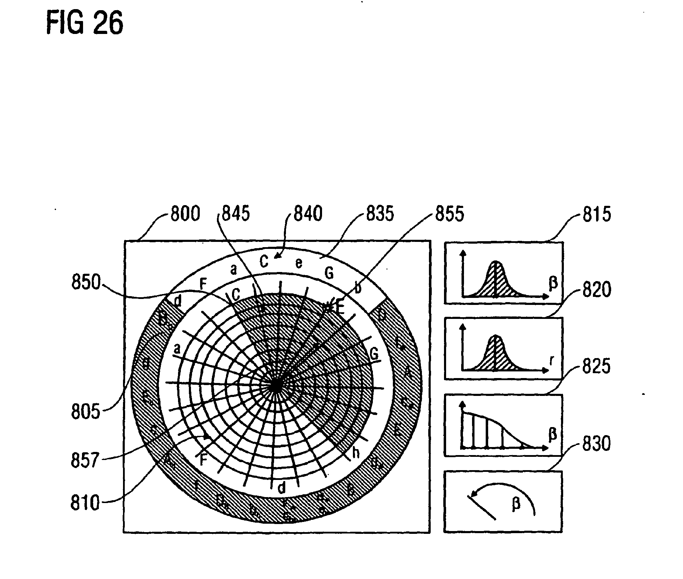

Das Ausgabefeld dieser Bedieneinrichtung kann gleichzeitig das Ausgabefeld einer Vorrichtung zur Ausgabe von einer Tonigkeit anzeigen und Ausgabesignal darstellen. In diesem Fall kann so optional auf dem in Fig. 23 gezeigten Ausführungsbeispiel neben dem Eingabewinkel auch eine Ausgabefeldradialrichtung des Ausgabefeldes bezogen auf den Mittelpunkt 702 hervorgehoben, also markiert werden, wenn der Anzeigensteuereinrichtung des Ausgabefeldes der Vorrichtung zur Ausgabe von einem eine Tonigkeit anzeigenden Ausgabesignals ein entsprechendes Eingangssignal zur Verfügung gestellt wird. Ein entsprechendes Beispiel stellt hierfür das HarmonyPad, das im Zusammenhang mit Fig. 26 diskutiert wird, dar.. Die in Fig. 23 gezeigte Darstellung basiert auf dem Symmetriemodell für die Tonarten C-Dur bzw. a-Moll. Fig. 23 zeigt ein selektiertes Kreissegment 705, das zwischen den Tönen bzw. den Tonigkeiten e und G beginnt und zwischen den Tönen h und d endet. Das Kreissegment 705 ist hierbei über den Startwinkel α und den Öffnungswinkel β definiert. Optional ist es darüber hinaus möglich, das Kreissegment ebenfalls über einen Radius r näher zu spezifizieren. Im Fall des in Fig. 23 gezeigten Kreissegments 705 sind also die Töne G und h vollständig markiert und werden daher beispielsweise im Fall des erfindungsgemäßen Musikinstruments 600 aufgrund des Klangerzeugers 640 vollständig zu hören sein. Die Töne e und d sind zwar nicht durch das Kreissegment 705 abgedeckt, können jedoch je nach Aussehen ihrer räumlichen Einzeltonverteilungsfunktion bzw. der räumlichen Tonverteilungsfunktion mit einer identischen Lautstärke, leiser oder überhaupt nicht zu hören sein. Fig. 23 illustriert also das neuartige Instrumentenkonzept, das die Auswahl des aktiven Tonraumausschnittes über die Definition eines Kreissegments durch einen Startwinkel, Öffnungswinkel und optional durch einen Radius vorsieht. Dies wiederum ermöglicht es, auch mit sehr beschränkten Eingabemöglichkeiten sinnvolle harmonische Zusammenhänge zu definieren.

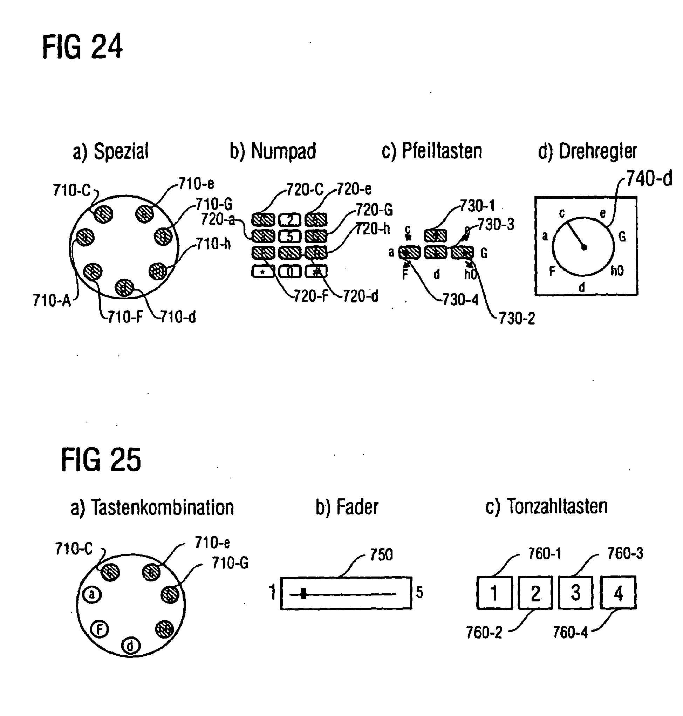

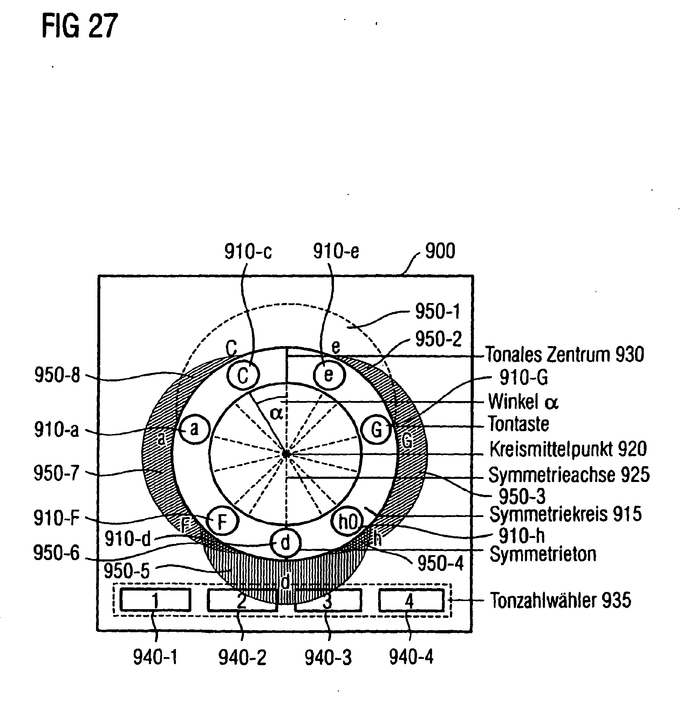

Fig. 24 zeigt verschiedene Möglichkeiten, mit Hilfe von Hardwareelementen den Startwinkel α des selektierten Kreissegments des Symmetriemodells zu definieren. Fig. 24A zeigt hierbei eine spezielle Anordnung von sieben Tasten 710-C, 710-e, 710-G, 710-h, 710-d, 710-F und 710-a, die vereinfacht ausgedrückt den Tonigkeiten C, e, G, h0, d, F und a zugeordnet sind. Genauer gesagt sind die sieben Tasten 710-C bis 710-a einer Mehrzahl von Winkeln zugeordnet, deren wiederum über die Zuordnungsfunktion die entsprechenden Tonigkeiten zugeordnet sind. Die geometrische Anordnung der Tasten auf der Bedienoberfläche bzw. der Bedieneinrichtung erfolgt der Anordnung der Basistöne im Tonraum entsprechend. Damit bilden die sieben Tasten 710-C bis 710-a die Zuordnungsfunktion der Tonart C-Dur bzw. a-Moll des Symmetriekreises räumlich nach. Eine genauere Beschreibung dieser speziellen geometrischen Anordnung von Tasten bzw. Eingabeeinrichtungen wird weiter unten im Zusammenhang mit Fig. 27 näher erläutert.

Ist bereits eine fixe Tastenanordnung vorgegeben, kann eine sinnvolle Zuordnung der Basistöne zu einzelnen Tasten erfolgen. Ein Beispiel hierfür ist in Fig. 24B anhand einer Zehnertastatur (Numpads) gegeben. In diesem Fall kann beispielsweise der Taste 720-C, der gewöhnlich die Ziffer 1 zugeordnet ist, ein Eingabewinkel zugeordnet werden, der der Tonigkeit C entspricht. Entsprechend kann der Taste 720-e, der gewöhnlich die Ziffer 3 zugeordnet ist, ein Eingabewinkel zugeordnet werden, der über die Zuordnungsfunktion der Tonigkeit e entspricht. Entsprechendes gilt auch für die Tasten 720-G (Ziffer 6), 720-h (Ziffer 9), 720-d (Ziffer 8), 720-F (Ziffer 7) und 720-a (Ziffer 4). Durch die Einfachheit des Symmetriemodells ist es möglich, auch mit einer extrem geringen Anzahl von Tasten auszukommen, wie Fig. 24B zeigt.

Fig. 24C zeigt eine Alternative, bei der zum Teil mehr als eine Taste gedrückt werden muss. Im Vergleich zu der in Fig. 24B gezeigten Variante benötigt diese Variante eine noch geringere Anzahl von Tasten, nämlich beispielsweise die vier Cursortasten 730-1, 730-2, 730-3 und 730-4 einer gewöhnlichen PC-Tastatur. In diesem Fall kann beispielsweise durch Drücken der Taste 730-3 ein Eingabewinkel oder auch ein Startwinkel $\alpha$ definiert werden, der einer Tonigkeit d über die Zuordnungsfunktion zugeordnet ist. Werden die Cursortasten 730-1 und 730-4 beispielsweise gleichzeitig gedrückt, so kann dieser Tastenkombination ein Eingabewinkel oder Startwinkel $\alpha$ zugeordnet werden, der einer Tonigkeit C zugeordnet ist. Weitere Tastenkombinationen und die ihnen zugeordneten Tonigkeiten sind in Fig. 24c angegeben.

Auch mit Hilfe eines einfachen Drehreglers 740 kann der Startwinkel $\alpha$ bzw. der Eingabewinkel definiert werden, wie Fig. 24D zeigt. Die in Fig. 24 gezeigten Beispiele für die Auswahl des Startwinkels des aktiven Bereichs des Symmetriemodells können selbstverständlich auch auf andere Anordnungen der Tonigkeiten bzw. Basistöne im Tonraum übertragen werden. Fig. 24 zeigt also vier Ausführungsbeispiele, bei denen mit Hilfe von Hardwaretasten oder anderen Hardwareelementen der Startwinkel $\alpha$ oder der Eingabewinkel definiert werden können.

Alle in Fig. 24 gezeigten Hardwareelemente zur Definition des Startwinkels $\alpha$ des selektierten Kreissegments können mit einer entsprechenden Erfassungseinrichtung oder Auswerteeinrichtung gekoppelt werden, so dass auf ein Betätigen eines der Hardwareelemente die Erfassungseinrichtung oder Auswerteeinrichtung der Steuereinrichtung der erfindungsgemäßen Vorrichtung zum Erzeugen eines Notensignals für eine manuelle Ausgabe hin, ein entsprechendes Eingabesignal, das den Eingabewinkel umfasst, bereitstellen kann.

Hierbei stellen die in Fig. 24A, 24B und 24C dargestellten Tasten, berührungsempfindliche Felder oder Taster, Beispiele für diskrete Hardwareelemente bzw. Schaltelemente dar. Hierbei wird im Rahmen der vorliegenden Anmeldung unter einem diskreten Hardwareelement bzw. einem diskreten Schaltelement ein Schaltelement verstanden, das nicht eine quasi-kontinuierliche Eingabe von Orten bzw. Winkeln ermöglicht. Diese Erläuterungen bezüglich der Erfassungseinrichtung bzw. Auswerteeinrichtung gelten auch für die in Fig. 25 gezeigten Hardwareelemente.

In diesem Zusammenhang ist es wichtig darauf hinzuweisen, dass die Bedieneinrichtung die Zuordnungsfunktion räumlich nachbilden kann. Dies stellt jedoch nur eine Möglichkeit dar, ist also insbesondere nicht zwingend. Darüber hinaus ist es auch wichtig, dass die Zuordnungsfunktion ihrerseits nicht notwendigerweise eine bestimmte Anordnung der Tonigkeiten bzw. Basistöne im Tonraum beschreibt bzw. nachbildet. So ist es durchaus denkbar, beispielsweise das Musikinstrument 600 in einem Modus arbeiten zu lassen, dem das Symmetriemodell einer bestimmten Tonleiter zugrunde liegt, dass also beispielsweise die Anzeigevorrichtung 610 das betreffende Symmetriemodell optisch wiedergibt, während die Bedienvorrichtung 620 einen Drehregler wie den in Fig. 24D dargestellten umfasst, bei dem die Anordnung der die Tonigkeit anzeigenden Beschriftungen beispielsweise äquidistant bezogen auf den Winkelbereich des ganzen Winkels erfolgt.

Fig. 25 zeigt drei Ausführungsbeispiele, wie die Eingabe des Öffnungswinkels $\beta$ erfolgen kann. Im Falle einer Tastenanordnung oder einer Schaltflächenanordnung, bei der jeder Taste oder Schaltfläche ein Winkel zugeordnet ist, dem über die Zuordnungsfunktion wiederum eine Tonigkeit zugeordnet ist, kann der Öffnungswinkel $\beta$ dadurch definiert werden, dass mehrere benachbarte Tasten oder Schaltflächen gedrückt werden. In diesem Falle ergibt sich der Startwinkel und der Öffnungswinkel jeweils aus den "äußeren" gedrückten und benachbarten Tasten. Ein Beispiel hierfür ist in Fig. 25A dargestellt, das die spezielle Tastatur aus Fig. 24A zeigt. Bei dem in Fig. 25A gezeigten Beispiel sind die drei Tasten 710-C, 710-e und 710-G gedrückt, so dass sich der Startwinkel aus dem der Taste 710-C zugeordneten Winkel ergibt und der Öffnungswinkel sich aus der Differenz der den Tasten 710-G und 710-C zugeordneten Winkeln ergibt. Durch das Drücken mehrerer benachbarter Tontasten kann also der Öffnungswinkel hierbei schrittweise erhöht werden.

Fig. 25B zeigt ein weiteres Ausführungsbeispiel zur Eingabe des Öffnungswinkels $\beta$, die eine stufenlose Veränderung des Öffnungswinkels über einen Fader bzw. einen Schieberegler 750 ermöglicht. Hierdurch kann bei dem in Fig. 25B gezeigten Beispiel eine stufenlose Veränderung des Öffnungswinkels $\beta$ erfolgen, die einer Änderung des Öffnungswinkels zwischen einem und fünf Tönen entspricht.

Fig. 25C zeigt eine weitere Ausführungsform eine Eingabeeinrichtung zur Definition des Öffnungswinkels β. Fig. 25C zeigt eine Anordnung vierer Tonzahltasten 760-1 bis 760-4, mit deren Hilfe der Öffnungswinkel bzw. die Anzahl der gleichzeitig zu spielenden Töne bzw. Tonigkeiten je nach Ausführung auch fest eingestellt werden kann. Die Zahl der Tonzahltasten 760-1 bis 760-4 kann hierbei variiert werden. Im Fall des Symmetriemodells liegt diese typischerweise zwischen 2 und 7, vorzugsweise zwischen 3 und 5. Im Fall des Terzkreises sind auch mehr als 7 Tonzahltasten denkbar. Somit zeigt Fig. 25 insgesamt mehrere Möglichkeiten zur Definition des Öffnungswinkels des aktiven Kreissegments im Symmetriemodell mit Hilfe von Hardwareelementen.

Eine kombinierte Eingabe von Startwinkel α und Öffnungswinkel β kann auch mit Hilfe eines Joysticks erfolgen. So kann beispielsweise aus der Neigungsrichtung des Joysticks der Startwinkel α und aus der Neigungsstärke der Öffnungswinkel β oder der Radius r des Kreissegmentes abgeleitet werden. Statt der Neigungsachse des Joysticks kann auch der Neigungswinkel und die Neigungsstärke des Kopfes verwendet werden. Dies ist z. B. für Begleitinstrumente für Querschnittsgelähmte interessant, dies im weiteren Verlauf der vorliegenden Anmeldung noch näher ausgeführt wird.

Sehr komplexe Möglichkeiten zur Definition des aktiven Kreissegmentes bieten bildschirmbasierte Eingabemethoden. In diesem Fall kann das Symmetriemodell oder der Terzkreis auf einem Bildschirm oder einem Touchscreen abgebildet werden. Das aktive Kreissegment kann mit Hilfe einer Maus, durch Berühren des Touchscreens oder einer anderen Art einer berührungsempfindlichen Fläche ausgewählt werden. Dabei kann auf Möglichkeiten wie Drag-and-Drop, Ziehen, Klicken, Tippen oder andere Gesten zurückgegriffen werden.

Ein solches Anwendungs- und Ausführungsbeispiel stellt das sogenannte HarmonyPad dar. Das HarmonyPad ist eine spezielle Bedieneinrichtung oder auch Instrument zum Erzeugen, Verändern und Überblenden von Akkorden. Die Oberfläche des HarmonyPads kann auch verwendet werden, um die in terzkreisbasierten und symmetriekreisbasierten Musikinstrumenten enthaltenen Synthesizer und Klangerzeuger zu programmieren und deren Bedienoberfläche zu konfigurieren. Genauer gesagt stellt das HarmonyPad somit ein System dar, das sowohl eine erfindungsgemäße Vorrichtung zum Erzeugen eines Notensignals auf eine manuelle Eingabe hin wie auch eine Vorrichtung zur Ausgabe von einem eine Tonigkeit anzeigenden Ausgabesignal umfasst.

Fig. 26 zeigt ein Ausführungsbeispiel einer Bedienoberfläche bzw. Benutzeroberfläche des HarmonyPads. Diese kann auf einem berührungsempfindlichen Bildschirm (Touchscreen) abgebildet werden und weist verschiedene Elemente auf, die im Folgenden erläutert werden.

Technisch gesehen ähnelt das HarmonyPad, dessen Bedienoberfläche in Fig. 26 dargestellt ist, dem in Fig. 23 gezeigten Ausführungsbeispiel einer Darstellung auf einer Bedieneinrichtung, so dass auf die dort beschriebenen Erläuterungen hiermit zurückgegriffen werden kann. Genauer gesagt bedeutet dies, dass die Darstellung aus Fig. 26 auf einem Ausgabefeld einer Vorrichtung zur Ausgabe von einem einer Tonigkeit anzeigenden Ausgabesignal erfolgen kann. Die Bedieneinrichtung der erfindungsgemäßen Vorrichtung zum Erzeugen eines Notensignals auf eine manuelle Eingabe hin, umfasst in diesem Fall ein zwischen dem Benutzer und dem Ausgabefeld angeordnetes berührungsempfindliches Feld, das mit einer Erfassungseinrichtung gekoppelt ist. Die Erfassungseinrichtung wiederum ist mit einer Auswerteeinrichtung gekoppelt, die auf Basis eines von der Erfassungseinrichtung gelieferten Signals das Eingabesignal der Bedieneinrichtung der erfindungsgemäßen Vorrichtung zum Erzeugen eines Notensignals an die Steuereinrichtung derselben übermittelt. Die Funktionsweise des berührungsempfindlichen Feldes, der Erfassungseinrichtung und der Auswerteeinrichtung stimmt in diesem Fall mit der im Zusammenhang mit Fig. 23 beschriebenen Funktionsweise der entsprechenden Elemente überein.

Zunächst weist die mögliche Bedienoberfläche bzw. Oberfläche eine Harmoniefläche 800 auf, die einen Terzkreis 805 und das Symmetriemodell 810 umfasst. Das Symmetriemodell 810 ist hierbei konzentrisch in der Mitte des Terzkreises angeordnet bzw. abgebildet. Der Terzkreis 805 und das Symmetriemodell 810 weisen also einen gemeinsamen Mittelpunkt 812 auf. Der Mittelpunkt 812 stellt gleichzeitig die Ausgabefeldmitte des Ausgabefeldes des Symmetriemodells 810 bzw. des Symmetriekreises 810 des Symmetriemodells dar. Ausgehend von diesem Mittelpunkt 812 können eine oder mehrere Ausgabefeldradialrichtungen hervorgehoben, hier also optisch hervorgehoben bzw. erleuchtet werden. Das Symmetriemodell 810 wird dabei auf der Bedienoberfläche des HarmonyPads im Bereich der Harmoniefläche 800 so dargestellt, wie dies auch im Zusammenhang mit Fig. 7 näher erläutert wurde und worauf hiermit verwiesen wird. Darüber hinaus wird der Terzkreis 805, wie dies bereits im Zusammenhang mit Fig. 8 erläutert wurde, auf der Harmoniefläche 800 des HarmonyPads dargestellt. Auch auf diese Beschreibung wird hiermit verwiesen.

Rechts neben der Harmoniefläche 800 sind vier Eingabefelder bzw. Eingabemöglichkeiten (z. B. Schaltflächen) 815, 820, 825 und 830 untereinander angeordnet. Hierbei ermöglicht das Eingabefeld 815 ein Editieren, Ändern, Festlegen oder Definieren der räumlichen Einzeltonverteilungsfunktion und damit auch der räumlichen Tonverteilungsfunktion. Mit Hilfe der Schaltfläche 820 kann ein Benutzer des HarmonyPads eine Umkehrungsgewichtungsfunktion definieren, editieren oder beeinflussen, mit Hilfe der Schaltfläche 825 entsprechend die Selektionsverteilungsfunktion und mit Hilfe der Schaltfläche 830 den Öffnungswinkel β des aktiven Raumausschnitts bzw. der selektierten Fläche.

Die in Fig. 26 gezeigte Oberfläche des HarmonyPads ist, wie es bereits das erfindungsgemäße Musikinstrument 600 gezeigt hat, mit einem Klangerzeuger verbindbar, der die Benutzereingaben in hörbare Audiosignale umwandeln kann. Die folgenden Bedienbeispiele zeigen einige der Möglichkeiten, die das HarmonyPad bietet.

Auswahl der Tonart: Die aktuelle Tonart wird durch ein Berühren des Terzkreises 805 gewählt. In Fig. 26 ist C-Dur und a-Moll als aktuelle Tonart ausgewählt. Dies ist an dem erhellt dargestellten Bereich 835 des Terzkreises ersichtlich, der die Menge der diesen Tonarten zugeordneten Tonigkeiten auf dem Terzkreis umfasst, wie dies bereits im Zusammenhang mit der Beschreibung des Terzkreises im Rahmen der Beschreibung der Positionierungsvarianten von Basistönen im Tonraum erläutert wurde. Um nun eine andere Tonart einzustellen, muss der Benutzer des HarmonyPads den Terzkreis 805 an einer entsprechenden Stelle berühren, bei der es sich beispielsweise um den Schwerpunkt bzw. das tonale Zentrum der zugehörigen Tonleiter handeln kann. Im Fall der Tonleitern C-Dur bzw. a-Moll würde es sich in diesem Fall also beispielsweise um einen Bereich 840 handeln, der bezogen auf die in Fig. 26 gezeigte Ausrichtung des HarmonyPads ausgehend von einem Zentrum des Terzkreises auf dem Terzkreis 805 direkt senkrecht oberhalb des Zentrums zwischen den eingetragenen Tonigkeiten C und e angeordnet ist. Der Terzkreis 805 "dreht sich" dann so, dass die neu gewählte Tonart oben in dem erhellt dargestellten Bereich 835 erscheint. Genauer gesagt wird also die Anordnung bzw. die Zuordnung der Winkel zu den Tonigkeiten des Terzkreises auf dem Terzkreis 805 so angepasst, dass die Menge der Tonigkeiten der neu gewählten diatonischen Tonleiter in dem erhellt dargestellten Bereich 835 erscheint. Weiterhin wird die Bezeichnung der Basistöne im Symmetriemodell 810 dahingehend verändert bzw. umgeschaltet, dass nicht mehr die Töne der Tonart C-Dur, sondern die Töne der neu gewählten Tonart erscheinen.

Alternativ ist es beispielsweise auch möglich, dass der erhellte Bereich 835 entsprechend der neu gewählten Tonart verschoben wird, so dass eine Neuorientierung des Terzkreises entfallen kann. Der Terzkreis 805 stellt somit ein Ausführungsbeispiel einer zusätzlichen Bedieneinrichtung dar, mit deren Hilfe eine Auswahl einer Zuordnungsfunktion aus einer Mehrzahl von Zuordnungsfunktionen durch den Benutzer erfolgen kann, um die erfindungsgemäße Vorrichtung zum Erzeugen eines Notensignals bzw. ihre Steuereinrichtung beispielsweise zwischen verschiedenen Tonarten hin- und herschalten lassen zu können.

Auswahl des zu spielenden Akkordes: Um einen bestimmten Akkord bzw. eine bestimmte Tonkombination erklingen zu lassen, muss zunächst der Öffnungswinkel β des zu selektierenden Kreissegmentes bzw. der aktive Raumausschnitt bestimmt werden. Dies kann beispielsweise graphisch über das Eingabefeld 835 bzw. das zugehörige Fenster erfolgen. Alternativ oder ergänzend kann dies selbstverständlich auch über ein angeschlossenes Hardwareinterface oder über eine Eingabeeinrichtung, wie sie im Zusammenhang mit Fig. 25 beschrieben wurde, erfolgen. Ist der Öffnungswinkel β spezifiziert, kann die Selektionsgewichtungsfunktion über das Eingabefeld 825 graphisch editiert werden. Nun kann durch Berühren einer Stelle auf dem Symmetriekreis bzw. dem Symmetriemodell 810 der Startwinkel α und optional auch der Radius r des zu selektierenden Kreissegmentes bestimmt werden. Das selektierte Kreissegment wird auf dem Symmetriekreis 810 als markierter Bereich 845 hervorgehoben dargestellt. Hierbei kann sowohl im Bereich des Eingabefeldes 825 als auch auf dem Symmetriemodell 810 im Rahmen des markierten Bereichs 845 die eingestellte Selektionsgewichtungsfunktion mit Hilfe von Transparenzeffekten veranschaulicht werden.

Blenden zwischen Akkorden: In Fig. 26 ist momentan der Akkord C-Maj-7 ausgewählt, wie der markierte Bereich 845 zeigt. Dazu ist der entsprechende Öffnungswinkel β über das Eingabefeld 830 spezifiziert worden und der Benutzer hat den Winkel, der dem Grundton C zugeordnet ist, auf dem HarinonyPad berührt. Um den C-Maj-7-Akkord in einen a-Moll-7-Akkord zu überblenden, muss einfach nur der Finger des Benutzers nach links auf den Winkel gezogen werden, der dem Ton bzw. der Tonigkeit a zugeordnet ist. Dadurch wird der Startwinkel α des selektierten Kreissegmentes vom Ton C auf den Ton a verschoben. Entsprechend der Verschiebung des selektierten Kreissegments wird der C-Dur-Akkord in einen a-Moll-Akkord weich oder auch instantan überblendet. Blenden zwischen Umkehrungen: Optional bietet das HarmonyPad die Möglichkeit, den Radius des selektierten Kreissegments zur Wahl verschiedener Akkordumkehrungen heranzuziehen bzw. zu interpretieren. Hierdurch ist es möglich, durch eine Veränderung des Radius r eine gezielte Oktavierung einzelner Basistöne zu erreichen. Hierbei wird im Rahmen der vorliegenden Anmeldung unter einer Oktavierung eines Tons oder einer Tonigkeit eine Festlegung bzw. Bestimmung einer Oktavlage verstanden. Die Angabe einer Oktavierung legt so beispielsweise fest, zu welcher Oktave ein Ton mit einer bestimmten Tonigkeit gehört. Mit Hilfe der Oktavierung wird also festgelegt, welche der Töne C, C', C'', C''',... erklingen bzw. der der Tonigkeit C zugeordnet werden sollen. Mit anderen Worten bestimmt die Oktavierung eine Grundfrequenz eines Tons in Form eines Faktors $2^o$ mit einer ganzen Zahl o, die auch Oktavierungsparameter genannt wird.

So weist beispielsweise der Kammerton a eine Grundfrequenz von 440 Hz auf. Soll nun beispielsweise statt des Kammertons a ein Ton der Tonigkeit a eine Oktave höher erklingen, so muss der Oktavierungsparameter o = 1 gesetzt werden, so dass die neue Grundfrequenz des Tons 880 Hz ergibt. Entsprechend liegt die Grundfrequenz eines Tons der Tonigkeit a eine Oktave unterhalb des Kammertons a (o = -1) bei 220 Hz.

Ist beispielsweise auf dem HarmonyPad, die Grundstellung des C-Dur-Akkordes selektiert, so kann beispielsweise die erste Umkehrung dieses Akkordes dadurch erreicht werden, dass der Finger des Benutzers entlang einer radial gerichteten C-Linie 850, die von dem Zentrum des Symmetriekreises radial nach außen unter einem Winkel führt, der der Tonigkeit C zugeordnet ist, in Richtung des Kreismittelpunktes bzw. des Zentrums gezogen bzw. bewegt wird. Dadurch wird der Radius r des selektierten Kreissegmentes verkleinert und die Grundstellung des C-Dur-Akkordes langsam in die erste Umkehrung überführt. Über einen angeschlossenen Klangerzeuger kann der Benutzer dann die erste Umkehrung des C-Dur-Akkordes hören.

Hierbei versteht man unter einer Umkehrung eines Akkordes eine Anordnung der Töne eines Akkordes derart, dass der erklingende Ton mit der niedrigsten Grundfrequenz nicht mehr notwendigerweise auch der Grundton, beispielsweise im Falle eines C-Dur-Akkordes also der Ton C bzw. die Tonigkeit C, ist. Im Falle eines C-Dur-Akkordes stellt so eine Anordnung der erklingenden Töne mit aufsteigender Frequenz in der Reihenfolge E-G-C beispielsweise die erste Grundstellung dar. Darüber hinaus sind selbstverständlich auch andere Zuordnungen des Radius r bei einer bestimmten Oktavierung eines Tons bzw. einer Tonigkeit oder auch einer bestimmten Umkehrung eines Akkords denkbar.

Genauso, wie die räumliche Einzeltonverteilungsfunktion über das Eingabefeld 815 editierbar bzw. definierbar ist, kann so durch Einführen einer optionalen Umkehrungsverteilungsfunktion, die über das Eingabefeld 820 editierbar bzw. definierbar ist, eine Oktavierung der erklingenden Töne beeinflusst werden. So ist es möglich, basierend auf der gewählten Umkehrungsverteilungsfunktion einzelnen Tönen zu einer bestimmten Tonigkeit Lautstärkeinformationswerte zuzuordnen, so dass beispielsweise bei Auswahl der Tonigkeit C über den aktiven Raumausschnitt mehr als ein Ton der entsprechenden Tonigkeit erklingt. Ebenso ist es denkbar, dass die Umkehrungsverteilungsfunktion dazu verwendet wird, basierend auf der Eingabe des Radius r durch den Benutzer verschiedene Umkehrungen der betreffenden Tonkombination bzw. des betreffenden Akkordes über einen angeschlossenen Klangerzeuger erklingen zu lassen. Um dies zu ermöglichen, bietet die Oberfläche des HarmonyPads das entsprechende Fenster bzw. Eingabefeld 820 an.

Blenden zwischen Einzeltönen und Akkorden: Das HarmonyPad kann beispielsweise mit einer Midi-Schnittstelle oder einer anderen Steuerungsschnittstelle ausgestattet werden. Mit Hilfe dieser Midi-Schnittstelle oder der Steuerschnittstelle kann nun optional ein Controller, beispielsweise ein Fußcontroller, ein Fußtaster, ein Joystick oder eine anderes Eingabeeinrichtung, angeschlossen werden. Es ist nun möglich, die Daten dieser Eingabeeinrichtung (Fußcontroller) auf den Öffnungswinkel β zu routen bzw. diesen durch die Eingabe über den Fußcontroller beeinflussbar auszulegen. Das heißt, dass von dem Benutzer mit dem Fußcontroller der Öffnungswinkel als Winkelparameter gesteuert werden kann. Vorzugsweise ermöglicht es der Fußcontroller, eine quasi-kontinuierliche Eingabe von Daten, die beispielsweise der Fußstellung des Benutzers zugeordnet werden, zu ermöglichen. Hierdurch kann der Benutzer den öffnungswinkel β mit Hilfe des Fußcontrollers innerhalb vorbestimmter oder variabler Grenzen beeinflussen. Tritt nun der Benutzer den Fußcontroller so, dass er sich am unteren Anschlag befindet, kann beispielsweise diese Fußstellung einem Öffnungswinkel von 0˚ zugeordnet werden. Berührt nun der Benutzer das HarmonyPad im Bereich des Symmetriemodells 810 an der Stelle des Tones bzw. der Tonigkeit C, erklingt über den angeschlossenen Klangerzeuger nur der Ton C bzw. ist zu hören, da der Öffnungswinkel β = 0˚ beträgt. Bewegt nun der Benutzer den Fußcontroller langsam in Richtung des oberen Anschlages, ist es möglich, den Öffnungswinkel β entsprechend zu vergrößern, so dass die zusätzlichen Töne bzw. Tonigkeiten e, G und h in dem in Fig. 26 gezeigten Fall nach und nach hinzugenommen und eingeblendet werden.

Finden von Tönen, die zu vorhandenen Tönen passen (Improvisation): Optional kann das HarmonyPad (ebenso wie das erfindungsgemäße Musikinstrument 600) mit einer Analysefunktionalität ausgestattet werden, welche in Form von Audiosignalen oder Midisignalen vorhandene Tonsignale bzw. Audiodaten analysiert und die entsprechenden Basistöne auf der Oberfläche des HarmonyPads (Padoberfläche) durch eine entsprechende Hervorhebung markiert. Fig. 26 zeigt dies am Beispiel einer optischen Markierung 855 der Tonigkeit e auf, dem Symmetriemodell 810. In diesem Fall ist dem HarmonyPad als Eingangssignal ein Audiosignal oder ein Midisignal zur Verfügung gestellt worden, das einen Ton mit einer Tonigkeit e aufweist. Möchte ein Musiker als Benutzer zu dem gegebenen Signal bzw. dem Eingangssignal passende Begleittöne finden, so muss er nur ein Kreissegment selektieren, das die markierten Töne einschließt oder in der Nähe der markierten Töne liegt.

Darüber hinaus ist es ebenfalls optional möglich, mit Hilfe des HarmonyPads das Ergebnis eine Analyse von Audiodaten, die dem HarmonyPad in Form des Analysesignals zur Verfügung gestellt werden können, graphisch darzustellen. Neben einer Markierung bzw. Hervorhebung der in einem Audiosignal umfassten Tonigkeiten durch eine Hervorhebung einzelner Ausgabefeldradialrichtungen des Symmetriemodells 810 oder größerer, zusammenhängender Bereiche auf dem Symmetriemodell 810, kann so auch der in Form des Analysesignals zur Verfügung gestellte Summenvektor auf dem Ausgabefeld 810 dargestellt werden. Hierbei kann der Winkel des Summenvektors ausgehend von der Ausgabefeldmitte bzw. dem Zentrum des Symmetriemodells 810 durch eine Hervorhebung einer Ausgabefeldradialrichtung angezeigt werden. Hierdurch ist es möglich, während des Erklingens eines Musikstücks, quasi in Echtzeit den Schwerpunkt bzw. damit das tonale Zentrum zeitaufgelöst auf dem HarmonyPad darzustellen, so dass ein begleitender Musiker basierend hierauf spielen kann.

Optional ist es darüber hinaus möglich, die auf Basis des Winkels des Summenvektors hervorgehobene Ausgabefeldradialrichtung nicht als Ganzes hervorzuheben, sondern basierend auf der Länge des Summenvektors ausgehend von der Ausgabefeldmitte nur einen Teil der betreffenden Ausgabefeldradialrichtung hervorzuheben. Hierdurch kann dem Benutzer zusätzlich die Länge des Summenvektors $|\vec{r}_{sum}|$ optisch auf seinem Bedienfeld angezeigt werden. Wie im Zusammenhang mit der Analyse von Audiodaten erläutert wurde, kann der Benutzer so die gespielte Musik, über die er beispielsweise improvisiert, besser einordnen, da der Betrag des Summenvektors unter anderem ein Schätzmaß für den tonalen Kontext der erklingenden Musik ist.

Optional ist es durchaus auch möglich, mit Hilfe eines Eingangswertintegrators die eingehenden Audiosignale zeitlich solange aufzuintegrieren, bis der Betrag bzw. die Länge des sich ergebenden Summenvektors ein (zeitlich lokales) Maximum erreicht. Da, je nach zugrundegelegter Basistonanordnung im Tonraum, Maxima wiederum Akkorde im Falle des Symmetriemodells oder Tonartwechsel im Falle des Terzkreises indizieren, kann basierend auf den so aufintegrierten Audiodaten ebenfalls die Darstellung auf dem HarmonyPad entsprechend angepasst werden. So ist es beispielsweise denkbar, auf Basis des aufintegrierten Audiosignals die dem Symmetriemodell 810 zugrundeliegende diatonische Tonleiter zu bestimmen und auf dem Symmetriemodell 810 anzuzeigen.

Fig. 26 zeigt somit eine mögliche Bedienoberfläche des HarmonyPads, die viele optionale Komponenten, wie beispielsweise das Eingabefeld 820 für die Umkehrungsverteilungsfunktion umfasst. Selbstverständlich sind auch andere geometrische Anordnungen als die in Fig. 26 gezeigte möglich. Darüber hinaus kann selbstverständlich auch das Ausgabefeld 810 nicht auf Basis des Symmetriemodells, sondern auf Basis des Terzkreises operieren. Das HarmonyPad stellt somit gleichzeitig aufgrund seiner Ausführung als Touchscreen und der damit verbundenen Möglichkeit zur Dateneingabe über ein Berühren der Oberfläche des Touchscreens und zur Ausgabe über die Anzeigefläche des Touchscreens ein Ausführungsbeispiel dar, das die erfindungsgemäße Vorrichtung zum Erzeugen eines Notensignals auf eine manuelle Eingabe hin mit der Vorrichtung zur Ausgabe von einem eine Tonigkeit anzeigenden Ausgabesignal kombiniert.

Das HarmonyPad stellt also ein Ausführungsbeispiel der erfindungsgemäßen Vorrichtung zum Erzeugen eines Notensignals mit einem berührungsempfindlichen Bildschirm (Touchscreen) dar. Alternativ oder ergänzend zu den beschriebenen Möglichkeiten, den Startwinkel $\alpha$ und den Öffnungswinkel $\beta$ über die Harmoniefläche 800 und das Eingabefeld 835 zu bestimmen, kann dies auch durch ein Berühren des Touchscreens im Bereich des Symmetriemodells 810 erfolgen. So ist es beispielsweise denkbar, dass der Startwinkel $\alpha$ und der Öffnungswinkel $\beta$ aus zwei von dem Benutzer des HarmonyPads nacheinander ausgeführten Berührungen des Symmetriemodells 810 abgeleitet wird. So kann beispielsweise der Benutzer durch ein erstes Berühren des Touchscreens im Bereich des Symmetriemodells 810 den Startwinkel $\alpha$ festlegen und durch ein weiteres Berühren des Touchscreens im Bereich des Symmetriemodells 810 den zugehörigen Öffnungswinkel. Dabei kanne die Bedieneinrichtung des HarmonyPads den Öffnungswinkel $\beta$ beispielsweise durch einfach Differenzbildung eines Winkels, der aus der zweiten Berührung des Benutzers auf dem Touchscreen abgeleitet wird, und dem Startwinkel $\alpha$ bestimmen. Die Bedieneinrichtung der erfindungsgemäßen Vorrichtung zum Erzeugen eines Notensignals, also dem HarmonyPad, übermittelt dann der Steuereinrichtung einen Eingabewinkelbereich auf Basis des ausgewählten Startwinkels und des Öffnungswinkels.

Ebenso ist es möglich, dass der Benutzer zwei Punkte auf dem Symmetriemodell 810 berührt, aus denen die Bedieneinrichtung auf Basis der Position des Mittelpunkts 812 des Symmetriemodells 810 zwei Winkel bestimmt. Wird nun nicht, wie oben geschildert, auf Basis der Reihenfolge der Eingabe der beiden Winkel der Startwinkel und der Öffnungswinkel bestimmt, bietet es sich beispielsweise alternativ an, den Winkelbereich als Eingabewinkelbereich der Steuereinrichtung bereitzustellen, der bezogen auf die beiden Winkel und einen vollen Kreisumfang kleiner als 180˚ bzw, $\pi$ ist. Darüber hinaus ist es möglich, falls nur ein Winkel eingegeben worden ist, falls also der Benutzer das Symmetriemodell 810 nur an einem Punkt oder an einer Stelle berührt hat, der Steuereinrichtung einen Eingabewinkelbereich auf Basis eines vorbestimmten oder von dem Benutzer zuvor definierten Öffnungswinkel $\beta$ zu übergeben. Dies kann beispielsweise durch den Benutzer über die Eingabefläche 835 erfolgen. Einen möglichen vorbestimmten Öffnungswinkel $\beta$ stellt der Öffnungswinkel $\beta = 0˚$ dar, so dass in diesem Fall der Eingabewinkelbereich nur den Startwinkel umfasst bzw. dass in diesem Fall nur ein Eingabewinkel an die Steuereinrichtung übermittelt wird.

Eine weitere Möglichkeit, den Startwinkel $\alpha$ und den Öffnungswinkel $\beta$ mit Hilfe eines Touchscreens, also beispielsweise des HarmonyPads, zu bestimmen, besteht darin, dem Benutzer ein "Ziehen" auf dem Symmetriemodell 810 zu ermöglichen. In diesem Fall werden wiederum durch das "Ziehen" des Fingers auf dem HarmonyPad zwei Winkel bezogen auf den Mittelpunkt 812' des Symmetriemodells 810 bestimmt, aus denen analog zu den oben geschilderten Fällen der Startwinkel $\alpha$ und der Öffnungswinkel $\beta$ bestimmt werden kann.

Wird hingegen der Öffnungswinkel $\beta$ von dem Benutzer nicht über das Symmetriemodell 810, sondern beispielsweise über das Eingabefeld 835 festgelegt, so besteht die Möglichkeit für den Benutzer, durch ein Bewegen des Fingers auf dem Touchscreen zwischen einzelnen Tönen oder einzelnen Akkorden zu überblenden. In diesem Fall bestimmt die Bedieneinrichtung abhängig von dem Ort der Berührung auf dem Symmetriemodell 810 bezogen auf den Mittelpunkt 812 des Symmetriemodells 810 eine Winkel, der beispielsweise den Startwinkel $\alpha$ des Eingabewinkelbereichs darstellt. Verschwindet hingegen der Öffnungswinkel $\beta$ ($\beta = 0˚$), so kann der Benutzer durch ein Bewegen des Fingers über dem Touchscreen zwischen einzelnen Tönen überblenden.

Ein weiteres Ausführungsbeispiel stellt ein Musikinstrument für Kleinkinder dar. Genauer gesagt wird in den folgenden Abschnitten ein neuartiges Spielzeug beschrieben, mit dem Kleinkinder sinnvolle harmonische Klänge erzeugen können. Das Instrument ist so konzipiert, dass sich Zusammenhänge zwischen den geometrischen Positionen der Bedienelemente und musiktheoretischen Grundlagen ergeben. Durch spielerischen Umgang mit dem Instrument wird das Kind mit musiktheoretischen Zusammenhängen vertraut. Dies wiederum kann das spätere Erlernen eines (anderen) Instrumentes oder das musikalische Verständnis deutlich erleichtern.

Die sich hierbei ergebende Problemstellung besteht darin, dass heutige Eingabeinstrumente für Musik und harmonische Klänge, wie z. B. Moll-Dreiklänge oder Dur-Dreiklänge, entweder sehr kompliziert und nur nach einer gewissen Einübungszeit bedienbar oder sehr unflexibel sind. Pädagogisch-musiktheoretische Prinzipien sind in der Regel sehr undurchsichtig. Wie die Beschreibung dieses Ausführungsbeispiels zeigen wird, stellt das hier beschriebene Musikinstrument für Kleinkinder eine solche Eingabemethode dar, die so einfach ist, dass selbst Kleinkinder oder stark behinderte Personen musikalisch kreativ sein können.

Fig. 27 zeigt eine Darstellung einer Bedieneinrichtung 900 für ein Musikinstrument für Kleinkinder. Hierbei folgt der Aufbau des Instrumentes bzw. der Bedieneinrichtung 900, genauer gesagt einer Anordnung von Tonigkeiten.

Die Bedienvorrichtung 900 löst das oben dargestellte Problem der Möglichkeit für Kleinkinder und stark behinderte Personen, musikalisch kreativ sein zu können. Die in Fig. 27 dargestellte Bedieneinrichtung bzw. Bedienschnittstelle 900 weist mehrere, diskrete Bedienelemente (z.B. Tasten oder andere diskrete berührungsempfindliche Flächen) auf, die im Folgenden einzeln erläutert werden. Das Musikinstrument bzw. die Bedieneinrichtung 900 weist sieben Tontasten 910-C, 910-e, 910-G, 910-h, 910-d, 910-F und 910-a auf. Die sieben Tontasten sind mit einer nicht in Fig. 27 gezeigten Auswerteeinrichtung gekoppelt, die der Steuereinrichtung der erfindungsgemäßen Vorrichtung zum Erzeugen eines Notensignals auf eine manuelle Eingabe hin ein Eingabesignal bereitstellt, das einen Eingabewinkel umfasst, der der gedrückten Tontaste durch die Auswerteeinrichtung zugeordnet ist, umfasst. Werden mehrere Tontasten gedrückt, so kann die Auswerteeinrichtung, ein Eingabesignal erzeugen, das beispielsweise mehr als einen Eingabewinkel umfasst. Ergänzend oder alternativ kann die Auswerteeinrichtung auch so ausgebildet sein, dass wenn zwei benachbarte Tontasten gedrückt werden, also beispielsweise die Tontasten 910-e und 910-G, das Eingabesignal den Eingabewinkelbereich umfasst, der durch die beiden äußeren unmittelbar benachbarten, gedrückten Tontasten zugeordnet sind. In dem geschilderten Fall würde also die Auswerteeinrichtung ein Eingabesignal erzeugen, das den Eingabewinkelbereich umfasst, der durch den Winkel, der der Tontaste 910-e begrenzt wird, und durch den Winkel, der der Tontaste 910-G zugeordnet ist, begrenzt wird. Drückt das Kind eine Tontaste, dann erklingt ein Ton.

Jetzt besteht die Frage: Warum gibt es genau sieben Tasten? Die Antwort ist folgende: Die in abendländischen Breitengraden gebräuchlichste Tonleiter ist die sogenannte diatonische Tonleiter, wie dies bereits in den einführenden Abschnitten der vorliegenden Anmeldung erläutert wurde. Diese Tonleiter verfügt über sieben Töne. Auf dem Klavier entsprechen sieben benachbarte weiße Tasten exakt der diatonischen Tonleiter für C-Dur bzw. a-Moll. Eine wesentliche Neuerung dieses Instrumentes bzw. der Bedieneinrichtung 900 gegenüber einem Klavier oder anderen vergleichbaren Musikinstrumenten besteht in der Anordnung der Tontasten 910-C bis 910-a auf der Bedienoberfläche:

Auf dem Klavier sind die Tontasten in Halbtonschritten und Ganztonschritten angeordnet. Dadurch ergibt sich die Tonreihenfolge bzw. Tonigkeitsreihenfolge C-D-E-F-G-A-(B bzw. h)-C. Auf dem hier beschriebenen Instrument 900 sind die Tasten jedoch in Terzabständen angeordnet: Begonnen bei dem Ton D wechseln sich immer kleine und große Terzen ab. Dadurch ergibt sich folgende Tonreihenfolge bzw. Tonigkeitsreihenfolge: D-F-A-C-E-G-(B bzw. H)-D.

Die Tontasten 910-C bis 910a sind nicht wie beim Klavier auf einer Linie angeordnet, sondern ringförmig auf einem Kreis bzw. Ring 915, nämlich dem Symmetriekreis des Symmetriemodells. Grundsätzlich sind hier auch andere oval/kreisförmige Anordnungen, wie sie in den einführenden Abschnitten der vorliegenden Anmeldung definiert wurden, denkbar. Der Kreis weist einen Kreismittelpunkt 920 auf. Durch den Kreismittelpunkt 920 des Kreises geht eine vertikal verlaufende, gedachte Achse 925, die im Folgenden als Symmetrieachse bezeichnet wird. Mit Hilfe der Achse 925 kann jede Tontaste 910-C bis 910-a durch einen Winkel $\alpha$ zwischen der Symmetrieachse 925 und einer Verbindungslinie zwischen der betreffenden Tontaste und dem Kreismittelpunkt 920 repräsentiert werden.

Die weißen Tasten auf dem Klavier sind gleich breit, egal ob zwei benachbarte Tasten einen Ganztonschritt oder einen Halbtonschritt repräsentieren. Bei dem erfindungsgemäßen Musikinstrument bzw. der Bedieneinrichtung 900 werden die Tasten nicht in gleichen Abständen bzw. aufgrund der kreisförmigen Anordnung Winkeln angeordnet, sondern in einem (Winkel-) Abstand, der dem Tonabstand bzw. Tonsprung zwischen den beiden Tontasten entspricht. Das heißt, dass zwei benachbarte Tasten, denen ein (kleinster) Tonabstand einer großen Terz entspricht, auf dem Kreis bzw. dem Symmetriekreis 915 weiter voneinander entfernt angeordnet sind als zwei Tontasten, denen ein (kleinster) Tonabstand zugeordnet ist, der einer kleinen Terz entspricht. Somit repräsentieren die Abstände der einzelnen Tontasten zueinander den (kleinsten) Tonabstand der zugeordneten Töne bzw. Tonigkeiten.

Die genaue Anordnung bzw. Positionierung der Tontasten wird folgendermaßen berechnet: Zunächst wird der Symmetriekreis 915 in 24 Segmente unterteilt, die insgesamt also zwei Oktaven entsprechen. Jedes dieser Segmente repräsentiert einen Halbtonschritt., Der öffnungswinkel eines solchen Halbtonsegmentes beträgt demnach 360˚, 24 = 15˚. Eine große Terz entspricht vier Halbtönen, eine kleine Terz entsprechend drei Halbtönen. Dadurch ergeben sich folgende Tastenabstände auf dem Kreis: Wenn der tonale Abstand, also der (kleinste) Tonabstand, zwischen zwei benachbarten Tontasten eine große Terz ist, dann beträgt der von den beiden Tontasten aufgespannte Winkel 4 x 15˚ = 60˚. Beträgt der tonale Abstand zweier benachbarter Tontasten eine kleine Terz, dann beträgt der Abstand 3 x 15˚ = 45˚.

Die Tasten bzw. die diskreten Bedieneinrichtungen werden anschließend folgendermaßen auf dem Kreis bzw. der oval/kreisförmigen Anordnung positioniert bzw. angeordnet: Die Taste 910-d, die der Tonigkeit d entspricht, wird unten auf dem Kreis mittig angeordnet, also unter einem Winkel $\alpha$ = 180˚ gezogen auf den Kreismittelpunkt 920 und eine Nullrichtung, die in Fig. 27 senkrecht nach oben verläuft. Davon entfernen sich die anderen Töne sowohl nach links, also im Uhrzeigersinn, als auch nach rechts, also gegen den Uhrzeigersinn, symmetrisch. Die nachfolgende Tabelle 3 zeigt so ein Beispiel für die genauen Winkel der Tontasten 910-C bis 910-a. Es ist jedoch wichtig an dieser stelle darauf hinzuweisen, dass auch eine abweichende Verteilung bezüglich der Winkel möglich ist.

| Tontaste | Winkel $\alpha$ | Bezugszeichen |
|---|---|---|
| e | +030˚ | 910-e |
| G | +075.˚ | 910-G |
| b0 bzw. h0 | +135˚ | 910-h |
| d | $\pm$180˚ | 910-d |
| F | -135˚ | 910-F |
| a | -075˚ | 910-a |
| C | -030˚ | 910-C |

Um die Anordnung der Tontasten 910-C bis 910-a besser zu veranschaulichen, sind eine Mehrzahl punktierter Orientierungslinien ausgehend von dem Kreismittelpunkt 920 in Fig. 27 eingezeichnet.

Der Ton D wird deshalb als Symmetrieton bezeichnet, da er der einzige Ton ist, der genau auf der Symmetrieachse liegt, und weil alle anderen Töne der Tonleiter spiegelsymmetrisch um diesen Ton angeordnet sind. Gegenüber dem Symmetrieton liegt das tonale Zentrum 930 (d = 0˚). Dies wird so bezeichnet, weil gebräuchliche Melodien in abendländischen Breitengraden meist mit Tönen beginnen und enden, die in der Nähe des tonalen Zentrums liegen.

Durch die zuvor beschriebene Anordnung der Bedienelemente bzw. Tontasten 910-C bis 910-a˚ erschließt sich implizit eine Reihe von musiktheoretischen Zusammenhängen, die momentan noch mühsam erlernt werden müssen. Durch spielerischen Umgang eines Kleinkindes mit dem Instrument hat dieses viel Spaß und lernt automatisch tonale Zusammenhänge mit geometrischen Positionen bzw. motorischen Bewegungen zu verknüpfen. Dadurch hat es das Kind später wesentlich einfacher, musiktheoretische Zusammenhänge zu erfassen. Es wird erwartet, dass sich das Instrument deshalb als hervorragendes Hilfsmittel bei der musikalischen Früherziehung in Kindergärten, Musikschulen und auch im privaten Bereich erweisen wird.

In den folgenden Abschnitten wird eine Darstellung von musiktheoretischen bzw. tonalen Zusammenhängen zusammengefasst bzw. wiederholt, die durch das Bedienkonzept der erfindungsgemäßen Bedienvorrichtung 900 vermittelt werden.

1. Das Kind lernt konsonante und dissonant klingende Tonkombinationen zuzuordnen. Dissonant klingende Tonkombinationen sind durch auf weit entfernt positionierte Tontastenkombinationen abrufbar, drückt das Kind benachbarte Tontasten, so ergeben sich konsonant klingende Tonkombfnationen. Je weiter zwei Tontasten voneinander entfernt sind, desto dissonant klingt die von ihnen erzeugte Tonkombination.

2. Das Kind lernt den Aufbau der gebräuchlichsten Dur-Akkorden und Moll-Akkorde. Eine Auswahl von Tönen, Akkorden und Harmonien, die das Kind durch Drücken benachbarter Tontasten erzeugen kann, sind im Folgenden angegeben: Das Drücken einer einzelnen Taste führt zum Erklingen eines einzelnen Tones der Tonleiter. Das Drücken von zwei benachbarten Tontasten führt zum Erklingen einer Terz. Das Drücken von drei benachbarten Tönen führt zum Erklingen eines Dur-, Moll- oder verminderten Dreiklanges. Das Drücken von vier benachbarten Tönen führt zum Erklingen eines Septakkordes. Das Drücken von fünf benachbarten Tontasten führt zum Erklingen eines 7-9er-Akkordes.

3. Im Gehirn des Kindes kommt es zum einen zur Verknüpfung einer geometrischen Position mit einem harmonischen Klangereignis und zum anderen werden motorische Ereignisse wie z. B. das Bewegen des Armes zu einer Taste mit funktionstheoretischen bzw. musiktheoretischen Zusammenhängen in Verbindung gebracht. Dies ist wahrnehmungspsychologisch gesehen sehr günstig. Das tonale Empfinden des Kindes bzw. sein Denken in Harmonien wird durch das Instrument wesentlich gefördert. Dies kann eine wertvolle Grundlage für das spätere Erlernen eines Instrumentes und für das Improvisieren sein.

4. Das Kind lernt den Aufbau von Dreiklängen und Vierklängen ganz einfach, da es sich zum einen die Einzeltöne anhören kann und gleichzeitig auch Akkorde anhören kann, indem es benachbarte Tontasten drückt. Voraussetzung ist natürlich, dass die Tontasten in einer Art und Weise realisiert sind, dass das Kind mehrere benachbarte Tontasten drücken kann.

5. Das Kind lernt spielend Dur-Akkorde und parallele Moll-Akkorde einander zuzuordnen. Dies ist dadurch möglich, weil die Tontasten des Dur-Akkordes und seines parallelen Moll-Akkordes benachbart auf dem Symmetriekreis angeordnet sind (Beispiel: C-Dur-Akkord: C-E-G und paralleler a-Moll-Akkord: A-C-E.)

6. Das Kind lernt automatisch die gemeinsamen Töne unterschiedlicher Akkorde kennen. Zum Beispiel haben der a-Moll-Akkord und der C-Dur-Akkord die zwei gemeinsamen Tontasten C und E. Auf dem Symmetriekreis 915 sind diese gemeinsamen Töne durch dieselben Tonigkeiten repräsentiert. Das Kind lernt weiterhin automatisch, aus welchen Akkorden sich Mischakkorde zusammensetzen. Beispielsweise wird der a-Moll-7-Akkord aus den Akkorden a-Moll und C-Dur zusammengesetzt.

7. Das Kind lernt dabei auch funktionstheoretische bzw. musiktheoretische Zusammenhänge: Die Tontasten von Tonikaakkorden (a-Moll und C-Dur) sind mittig angeordnet, die von Subdominantakkorden (F-Dur und d-Moll) links und die von Dominantakkorden (G-Dur und e-Moll) sind rechts des tonalen Zentrums 930 angeordnet.

8. Das Kind lernt empfinden, welche Töne bei gegebener Dur- bzw. Molltonart ein großes Auflösungsbestreben und welche Töne ein kleines Auflösungsbestreben besitzen. Die Töne, die ein kleines Auflösungsbestreben besitzen, sind in der Nähe des tonalen Zentrums 930 angeordnet, Töne die ein großes Äuflösungsbestreben besitzen, sind sehr weit weg von dem tonalen Zentrum 930 auf dem Symmetriekreis 915 platziert. Dazu ein Beispiel: Spielt man eine Melodie auf der C-Dur-Tonleiter und endet auf dem Ton h, so empfinden wir in der Regel, dass das Stück weitergehen muss, nämlich zum C bzw. der Terz C-E hin. Dieses Empfinden wird als Auflösungsbestreben bezeichnet.

9. Das Kind kann sehr einfach ableiten, mit welchen Akkorden es einen gegebenen Ton bei gegebener Tonart begleiten kann. Dazu muss es lediglich benachbarte Tontasten drücken, die den gegebenen Ton aufweisen. Ist z.B. der Ton C gegeben, dann kann das Kind diesen Ton mit den Tönen C-E-G (benachbart), A-C-E (benachbart), F-A-C (benachbart) oder D-F-A-C (benachbart) begleiten. Früher musste sich das Kind diese Varianten noch mühsam einprägen. Jetzt kann es sich die erlaubten Akkorde selber durch einfache geometrische Zusammenhänge herleiten, was einen signifikanten Vorteil der erfindungsgemäßen Bedienvorrichtung 900 darstellt.

Zusammenfassend kann gesagt werden, dass es momentan kein Instrument gibt, das so viele tonale und funktionelle musiktheoretische Zusammenhänge in einer derart kompakten Weise widerspiegelt.

Gerade in den ersten Lebensjahren ist ein Kleinkind meist nicht in der Lage, mehr als eine Tontaste gleichzeitig zu drücken. Um den Kind trotzdem die Möglichkeit zu geben, mit Hilfe des erfindungsgemäßen Musikinstruments bzw. der Bedienvorrichtung 900 nicht nur Einzeltöne zu erzeugen, sondern auch Akkorde und Harmonien spielen zu können, weist die Bedienvorrichtung einen (optionalen) Tonzahlwähler 935 mit einer Mehrzahl von Tonzahlwähltasten 940-1 bis 940-4 auf. Bei dem in Fig. 27 gezeigten Ausführungsbeispiel einer erfindungsgemäßen Vorrichtung zum Erzeugen eines Notensignals weist der Tonzahlwähler 935 vier Tonzahlwähltasten 940-1 bis 940-4 auf, die unterhalb des Symmetriekreises 915 angeordnet sind. Abweichend hiervon kann eine erfindungsgemäße Bedienvorrichtung 900 auch eine andere Zahl von Tonzahlwähltasten 940-1 bis 940-4 aufweisen. Typischerweise liegt die Zahl der Tonzahlwähltasten zwischen 2 und 7, vorzugsweise zwischen 2 und 5.

Der Tonzahlwähler 935 stellt somit eine Hilfe für das Kleinkind dar, mit dem das Kind in die Lage versetzt wird, mehrere Töne gleichzeitig erklingen zu lassen, obwohl das Kind eventuell nicht mehr als eine oder zwei Tontasten auf dem Instrument gleichzeitig drücken kann. Über den Tonzahlwähler 935 kann das Kind den Öffnungswinkel des aktiven Raumausschnitts verändern und damit einstellen, wie viele benachbarte Töne gleichzeitig beim Drücken einer Tontaste erklingen. Wie bereits erläutert, ist bei dem in Fig. 27 dargestellten Ausführungsbeispiel der Tonzahlwähler 935 über eine Reihe von Tonzahltasten 940-1 bis 940-4 realisiert. Drückt das Kind beispielsweise auf die Tonzahltaste 940-3, der ein Öffnungswinkel des aktiven Raumausschnitts zugeordnet ist, so dass durch einen angeschlossenen Klangerzeuger drei Töne erklingen, dann erklingt beim Drücken der Tontaste 910-C nicht nur der Ton C, sondern noch zwei benachbarte Töne, nämlich die Töne e und G. Dadurch kann das Kind also durch Drücken einer der Tasten 910-C bis 910-a den Startwinkel des aktiven Raumausschnitts bzw. des Eingabewinkelbereichs und durch Drücken einer der Tonzahltasten 940-1 bis 940-4 den Öffnungswinkel des Eingabewinkelbereichs bestimmen. Dadurch kann das Kind sich Dur-Dreiklänge und Moll-Dreiklänge anhören. Drückt es die Tontaste 910-a, dann hört es den a-Moll-Dreiklang. Wählt das Kind die Tonzahltaste 2, dann hört es kleine und große Terzen, wählt es die Tonzahltaste 4, dann kann es sich Septakkorde anhören. Hat das Kind beispielsweise die Tonzahltaste 940-3 für 3 Töne gewählt und drückt die beiden benachbarten Tasten 910-a und 910-C für die beiden Tonigkeiten a und C, dann erklingen gleichzeitig ein a-Moll-Akkord und ein C-Dur Akkord. Zusammen erklingt also ein a-Moll-7-Akkord, den diese Kombination von Tonigkeiten ergibt.

Hat das Kind eine Tonzahltaste größer 1 gedrückt, also beispielsweise die Tonzahltasten 940-2 bis 940-4, dann erklingen beim Drücken einer Tontaste mehrere Töne. Um dem Kind nun vermitteln zu können, um welche Töne es sich hierbei handelt, kann die erfindungsgemäße Bedieneinrichtung 900 mit einer Vorrichtung zur Ausgabe von einem eine Tonigkeit anzeigenden Ausgabesignal kombiniert werden. In diesem Fall kann das Spielzeug bzw. das Musikinstrument optional so realisiert werden, dass die Tasten 910-C bis 910-a gleichzeitig auch als Anzeigevorrichtung bzw. Ausgabebereiche dienen können, die durch eine Anzeigesteuereinrichtung so angesteuert werden, dass diese hervorgehoben werden. Dies kann beispielsweise durch eine steuerbare Beleuchtung aktiver Tontasten oder einer Realisierung der Tontasten auf einem Touchscreen oder durch Integration eines Displays, beispielsweise eines LCD-Displays, in die Tontasten erfolgen. Ist eine solche Möglichkeit integriert bzw. implementiert, dann passiert beispielsweise folgendes: Das Kind hat die Tonzahltaste 940-3 für drei Töne gewählt und drückt anschließend die Tontaste 910-C für den Ton C. Es erklingen die Töne C - E - G und gleichzeitig leuchten die Tontasten 910-C, 910-E und 910-G, also die Tontasten C - E - G auf, da diese in diesem Fall auch als Ausgabebereiche funktionieren. Dadurch kann das Kind optisch erkennen, welche Töne erklingen.

Da das Kind im Allgemeinen noch keine Notennamen kennt und auch eine Beschriftung der Tasten 910-C bis 910-a nicht lesen kann, bietet es sich an, die Tontasten optional mit einer Farbgebung und/oder mit Symbolen zu versehen. Eine mögliche Farbgebung ist in Fig. 27 angedeutet. Diese Farbgebung ist in Fig. 27 im Hintergrund angedeutet. Diese Farbgebung kann beispielsweise auf die Gehäuseoberfläche der erfindungsgemäßen Bedienvorrichtung 900 aufgebracht werden. Darüber hinaus ist es möglich, im Falle einer Darstellung auf einem Touchscreen, einem Bildschirm oder einer anderen Anzeigevorrichtung die eine Darstellung veränderlicher Farben ermöglicht, die Anzeigebereiche bzw. die Tontasten 910-C bis 910-a entsprechend der aktuell erklingenden Tonkombination farblich zu gestalten. Um dies zu verdeutlichen, sind in Fig. 27 acht Bereiche eingezeichnet 950-1 bis 950-8, denen die folgenden Farben zugeordnet sind: 950-1 Gelb, 950-2 Orange, 950-3 Hellrot, 950-4 Dunkelrot, 950-5 Violett, 950-6 Dunkelgrün, 950-7 Blau und 950-8 Hellgrün.

Diese Farbgebung orientiert sich an einem "Wärmeempfinden", wobei dem Subdominantbereich bläuliche Farben zugeordnet werden, da dieser mit "Kälte" in Verbindung gebracht wird. Dem Dominantbereich sind hierbei rötliche Töne zugeordnet, da dieser mit "Wärme" assoziiert wird. Dem Tonikabereich wird als "neutralem Bereich" die Farbe Gelb zugeordnet, während dem Bereich, in dem der Subdominantbereich und der Dominantbereich aneinander stoßen, Violett zugeordnet wird. Den Bereichen 950-2, 950-4, 950-6 und 950-8 werden hierbei die sich ergebenden Mischfarben zugeordnet. Die Tontasten 910-C bis 910-a können darüber hinaus mit Symbolen versehen werden, die Dur-Dreiklänge und Moll-Dreiklänge sowie den verminderten Dreiklang b0 bzw. h0 symbolisieren.

Die erfindungsgemäße Bedienvorrichtung 900 kann mit einem Klangerzeuger gekoppelt werden, um ein Musikinstrument bzw. Instrument zu realisieren. Eine einfache Variante besteht in der Ankopplung eines mechanischen Klangerzeugers, wie er beispielsweise auch bei Spieluhren zum Einsatz kommt. Eine weitere Möglichkeit besteht darin, eine weitere Steuerlogik zu implementieren, die Eingabeoptionen umsetzt und daraus Steuersignale für einen elektronischen Klangerzeuger, beispielsweise einen Synthesizer, bietet. Im Falle eines Kinderspielzeugs bzw. Musikinstruments für Kleinkinder bietet es sich an, die Klangerzeugung und Klangwiedergabe direkt in das Spielzeug bzw. das Instrument zu integrieren. Es ist auch denkbar, dass die Bedieneingaben optional zusätzlich direkt in Midi-Signale umgewandelt werden, und dass damit ein Midi-Klangerzeuger angesteuert wird. Darüber hinaus ist es möglich, dass der angekoppelte Klangerzeuger wiederum eine Begleitautomatik aufweist, die über das Spielzeug angesteuert wird.

Spielt man die Tonreihenfolge D-F-A-C-E-G-H-D auf einem Klavier, so liegt das zweite auftretende D dieser Reihe zwei Oktaven oberhalb des ersten D. Im Fall der erfindungsgemäßen Bedieneinrichtung 900 wird jedoch das erste D und das letzte D der Reihe durch dieselbe Tontaste 910-d repräsentiert. Dadurch ergibt sich an einer Stelle des Kreises 915 ein störender Tonhöhensprung. Dies kann beispielsweise dadurch vermieden werden, dass optional für jede Tontaste eine Liste mit unterschiedlichen Oktavierungen des zu der jeweiligen Tontaste gehörenden Tons bzw. Tonigkeit existiert. Diese Listen können beispielsweise in der Steuereinrichtung der erfindungsgemäßen Vorrichtung zum Erzeugen des Notensignals abgelegt sein. Drückt das Kind nun eine Tontaste, so wählt beispielsweise ein Zufallsgenerator aus der betreffenden Liste, die der Tontaste zugeordnet ist, eine beliebige Variante der möglichen Oktavierungen aus. Hierdurch ergibt sich der zusätzliche Lerneffekt, dass das Kind gleichzeitig lernt, dass Akkorde in verschiedenen Umkehrungsvarianten existieren können, da in dem beschriebenen Fall auch Basis einer Zufallszahl die Oktavierung eines jeden angewählten Tones bestimmt wird. Die Auswahl der jeweiligen Oktavierung kann auch unter anderen Gesichtspunkten erfolgen. So ist es denkbar, dass grundsätzlich eine vorbestimmte Oktavierung einer Tonigkeit gewählt wird, oder dass abhängig von den anderen gewählten Tonigkeiten die Oktavierungen der einzelnen Töne angepasst werden.

In den nachfolgenden Absätzen werden weitere Anwendungsszenarien und Ansätze für die in Fig. 27 gezeigte Bedieneinrichtung 900 geschildert. Bei einigen Anwendungsfeldern und Anwendungsgebieten kann eine Implementierung des optionalen Tonzahlwählers 935 entfallen.

Die erfindungsgemäße Bedieneinrichtung 900 kann beispielsweise mit einem Midi-Eingang und einem Midi-Ausgang ausgestastet werden. Hierdurch ist es möglich, die Bedieneinrichtung 900 zusammen mit einem auf einem Computer ablaufenden Lernprogrammen einzusetzen, um im pädagogischen Bereich eingesetzt zu werden. Hierdurch ist es möglich, pädagogische Konzepte umzusetzen. So ist es beispielsweise denkbar, dass das Lernprogramm musiktheoretische Zusammenhänge abfragt. Das Kind oder ein anderer Benutzer kann dann die erfindungsgemäße Bedieneinrichtung 900 als Eingabeinstrument zur Beantwortung der Fragen verwenden. Beispielsweise kann so der Computer das Kind z. B. nach dem parallelen Moll-Akkord bzw. Moll-Tonart zu einer bestimmten Dur-Tonart bzw. Dur-Akkord fragen. Hierzu kann der Computer auf der in Fig. 27 gezeigten Bedienvorrichtung 900, wenn sie auch als eine Vorrichtung zum Ausgeben von einem eine Tonigkeit anzeigenden Ausgabesignal ausgelegt ist, den Grundton der Dur-Tonart an der Bedienvorrichtung 900 aufleuchten. Das Kind muss jetzt wissen, dass der Grundton der parallelen Moll-Tonart im Terzkreis oder dem Symmetriekreis bzw. Symmetriemodell direkt links, also entgegen dem Uhrzeigersinn, neben dem Grundton der Dur-Tonart platziert ist und kann so die entsprechende Moll-Tonart herausfinden.

Ein Musikinstrument, das sowohl eine erfindungsgemäße Vorrichtung zum Erzeugen eines Notensignals auf eine manuelle Eingabe hin als auch eine Vorrichtung zur Ausgabe von einem eine Tonigkeit anzeigenden Ausgabesignal aufweist, kann beispielsweise auch zum Erlernen der improvisativen Liedbegleitung dienen. So kann das Instrument beispielsweise mit einem Keyboard über eine oder zwei Midi-Schnittstellen gekoppelt werden. Spielt ein erstes Kind auf dem Keyboard eine einfache Melodie, so können die Töne der Melodie zu dem erfindungsgemäßen Instrument, das auch als Symmetriekreisinstrument bezeichnet wird, des zweiten Kindes übertragen werden. Dort leuchten die entsprechenden Tontasten auf. Das zweite Kind kann jetzt eine passende Begleitung erzeugen, indem es die Tontasten in der Nähe der bereits aufgeleuchteten Tontaste drückt. Verfügt das Symmetriekreisinstrument über den optionalen Tonzahlwähler 935 oder eine andere Möglichkeit, einen solchen Eingabewinkelbereich zu definieren, dass ein angeschlossener Klangerzeuger mehr als einen Ton spielt, so kann das zweite Kind spielend das erste mehrstimmig begleiten.

Eine weitere Möglichkeit besteht darin, ein Symmetriekreisinstrument mit einer Melodieanalysevorrichtung zu koppeln, die als externe Komponente oder als Teil des Symmetriekreisinstruments ausgeführt sein kann. Im Falle einer externen Melodieanalysevorrichtung kann diese beispielsweise über Midi-Signale mit dem Symmetriekreisinstrument gekoppelt werden. In diesem Fall ergibt sich die Möglichkeit, dass ein Kind eine einfache Melodie beilspielsweise auf einer Flöte spielt. Die Melodie der Flöte wird über ein Mikrophon oder eine andere Klangaufnahmeeinrichtung mit Hilfe der Melodieanalysevorrichtung erkannt und in Midi-Signale umgewandelt und dem Symmetriekreisinstrument zur Verfügung gestellt, falls die Melodieanalysevorrichtung eine externe Komponente darstellt. Dieses Signal wird auf das Symmetriekreisinstrument des ersten Kindes gemappt bzw. übertragen und dort dargestellt. Dadurch kann das erste Kind nun eine passende Begleitung zu der Melodie der Flöte erzeugen, indem es Tontasten drückt, die wiederum in der Nähe der aufleuchtenden Tontasten liegen.

Das Symmetriekreisinstrument kann darüber hinaus optional ausgelegt werden, um beispielsweise an einem Midi-Ausgang Steuersignale bereitzustellen, um eine Begleitautomatik zu steuern. Das Instrument ist in diesem Fall also als Steuerung für herkömmliche Begleitautomatiken denkbar. Der Winkel und der Öffnungswinkel aus dem Terzkreis oder dem Symmetriemodell muss in diesem Fall in einen Grundton und einen weiteren Ton übersetzt werden, der spezifiziert, ob es sich um einen Moll-Akkord oder einen Dur-Akkord handelt.

Je nach Zielgruppe kann hierbei ein solches Symmetriekreisinstrument in verschiedenen Ausführungen produziert werden. So kann das Instrument beispielsweise für Babys mit sehr großen bunten Tasten ausgeführt werden. Für ältere Kinder ist es möglich, ein solches Symmetriekreisinstrument als Software bzw. ein Computer-Programm-Produkt auf einem Computer, einem PDA (PDA = personal data assistant = persönlicher Datenassistent), einem Notebook, einem Gameboy®, einem Mobiltelefon (Handy) oder einem anderen Computersystem zu realisieren. Auch hier ist eine Touchscreenvariante denkbar. Wenn beispielsweise die Gameboys® mehrerer Kinder vernetzt sind, könnten Kinder zusammen eine "Gameboyband" bilden. Die zu einem Zeitpunkt zu spielenden Akkorde werden an die Geräte aller beteiligten Kinder übertragen und dort angezeigt. Die Kinder können dann entsprechende Begleitmelodien erzeugen. Eine rhythmische Synchronisierung kann ebenfalls über das bestehende Netzwerk erfolgen.

In den folgenden Abschnitten wird eine Messvorrichtung und eine Analysevorrichtung für tonal-harmonische Zusammenhänge näher erläutert und beschrieben. Die im Rahmen der symmetriemodellbasierten und terzkreisbasierten Harmonieanalyse beschriebenen Möglichkeiten können in Form eines Messgerätes implementiert werden, das ein Audiosignal aufnimmt, in das Symmetriemodell oder den Terzkreis transformiert, die entsprechenden Betragsparameter und Winkelparameter berechnet und optional auf einer Anzeigevorrichtung wiedergibt. Die Anzeigevorrichtung kann bezüglich ihrer Benutzeroberfläche der des HarmonyPads aus Fig. 26 ähneln.

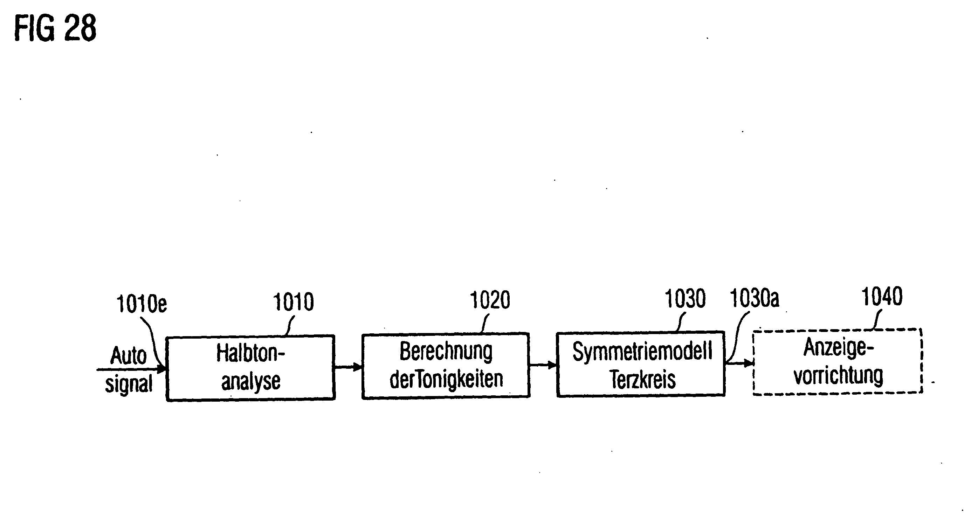

Fig. 28 zeigt ein Blockschaltbild einer Vorrichtung zur Analyse von Audiodaten bzw. eine Messvorrichtung 1000. Die Vorrichtung 1000 weist eine Halbtonanalyseeinrichtung 1010 auf, der ein Audiodatum an einem Eingang 1010e bereitgestellt wird. Hinter die Halbtonanalyseeinrichtung ist eine Tonigkeitsanalyseeinrichtung 1020 geschaltet zur Berechnung der Tonigkeiten. Hinter die Tonigkeitsanalyseeinrichtung 1020 ist eine Vektorberechnungseinrichtung 1030 geschaltet, die an einem Ausgang 1030a ein Analysesignal ausgibt. Das Analysesignal kann dann einer optionalen Anzeigevorrichtung 1040 als Eingangssignal bereitgestellt werden.

Die Halbtonanalyseeinrichtung 1010 analysiert das an ihrem Eingang 1010e bereitgestellte Audiodatum bezüglich einer Lautstärkeintensitätsverteilung über einer Menge von Halbtönen. Die Halbtonanalyseeinrichtung 1010 setzt also (unter anderem) Gleichung 4 um. Die Tonigkeitsanalyseeinrichtung 1020 bestimmt auf Basis der Lautstärkeinformationsverteilung eine Tonigkeits-Lautstärkeinformationsverteilung über der Menge der Tonigkeiten als zugrundeliegende Menge. Der Vektorberechnungseinrichtung 1030 wird sodann die Tonigkeits-Lautstärkeinformationsverteilung bereitgestellt, auf deren Basis die Vektorberechnungseinrichtung 1030 für jede Tonigkeit einen zweidimensionalen bzw. komplexen Zwischenvektor bildet, basierend auf den zweidimensionalen Zwischenvektoren einen Summenvektor berechnet und auf Basis des Summenvektors das Analysesignal an dem Analysesignalausgang 1030a ausgibt. Die nachgeschaltete optionale Anzeigevorrichtung 1040 kann dann basierend auf dem Analysesignal beispielsweise den Summenvektor, den Winkel des Summenvektors und/oder auch den Betrag bzw. die Länge des Summenvektors ausgeben.

Mit anderen Worten wird die Messvorrichtung 1000 mit einem Audiodatum gefüttert, aus dem die Halbtonanalyseeinrichtung 1010 die Halbtöne analysiert. Handelt es sich bei dem Audiosignal um ein Notenfolgensignal, also beispielsweise um einen analoges oder digitales Steuersignal für einen Klangerzeuger, wie beispielsweise eine Midi-Signal, das die gespielten oder zu spielenden Töne direkt anzeigt, kann die Halbtonanalyseeinrichtung 1010 einen im Wesentlichen eine Auswerteeinrichtung umfassen, die das Audiodatum bezüglich der gespielten Töne bzw. Halbtöne in seine Bestandteile zerlegt und gegebenenfalls in einem Speicher zwischenspeichert. Weisen die Notenfolgesignale Lautstärkeinformationen auf, können diese im Rahmen der Halbtonanalyse berücksichtigt werden.

Handelt es sich bei dem Audiodatum um ein analoges oder digitales Audiosignal, also beispielsweise um ein Signal eines Mikrofons, eine (analoges) Line-Signal, wie es im Rahmen von Stereoanalagen zur Musikübermittlung eingesetzt wird, oder um ein PCM-kodiertes digitales Musiksignal (PCM = pulse-code-modulation = Puls-Code-Modulation), kann dies beispielsweise durch eine Constant-Q-Transformation erfolgen. Im Falle analoger Audiosignale kann eine Abtastung beispielsweise mittels Analog/Digital-Wandler (ADC; ADC = analog/digital converter) zweckmäßig sein.

Im Rahmen einer Constant-Q-Transformation wird eine Audiosignal durch eine Mehrzahl von Bandpassfiltern analysiert, die jeweils durch eine zentrale Filterfrequenz und eine Bandbreite charakterisiert sind. Die zentralen Filterfrequenzen stimmen hierbei vorzugsweise mit den Frequenzen der zu analysierenden Töne bzw. deren Grundfrequenzen überein. Die Bandbreite der Bandpassfilter entspricht bezogen auf die Frequenz dem Abstand zweier zu analysierender Töne. Hierdurch ergibt sich ein konstantes Verhältnis (Q = Quotient) aus zentraler Filterfrequenz und Bandbreite, was auch den Namen der Constant-Q-Transformation erläutert.

Die Halbtöne werden dann durch die Tonigkeitsanalyseeinrichtung 1020 zu einem einoktavigen Bereich zusammengefasst. Anders ausgedrückt berechnet die Tonigkeitsanalyseeinrichtung 1020 auf Basis des Ergebnisses der Halbtonanalyseeinrichtung 1010 die Tonigkeiten und die zugehörigen Lautstärkeinformationen. Die Vektorberechnungseinrichtung 1030 auf Basis der so gewonnenen Tonigkeiten und der zugeordneten Tonigkeits-Lautstärkeinformationsverteilung mit Hilfe von Gleichung 14 im Fall einer Analyse gemäß dem Terzkreis oder nach Gleichung 23 im Falle einer Analyse gemäß dem Symmetriemodell den jeweils zugehörigen Summenvektor. Mit noch anderen Worten, die Vektorberechnungseinrichtung rechnet die gewonnenen Tonigkeiten nach Gleichung 14 oder Gleichung 23 in den Terzkreis-Summenvektor oder den Symmetriemodell-Summenvektor um.

Der Winkel und/oder der Betrag des entsprechenden Summenvektors kann dann durch die Anzeigevorrichtung 1040 wiedergegeben werden.

Bei dem Eingangsanschluss 1010e der Messvorrichtung 1000 bzw. der Halbtonanalyseeinrichtung 1010 kann es sich um einen Mikrofoneingang, einen analogen Audioeingang oder auch direkt um einen digitalen Eingang handeln, so dass die Mess- und Anzeigevorrichtung, falls die Anzeigevorrichtung 1040 mitimplementiert ist, im Prinzip sowohl analoge als auch digitale Audiodaten analysieren kann. Im Falle eines digitalen Eingangs können die Audiodaten bzw. Audiosignale auch Steuersignale, also beispielsweise Midi-Steuersignale, umfassen. Im Falle eines analogen Eingangs kann je nach Auslegung des Systems ein Analog/Digital-Wandler (ADC; ADC = analog/digital converter) mitimplementiert werden.

Fig. 28 zeigt somit ein Blockschaltbild der Mess- und Anzeigevorrichtung, wobei insbesondere die Grundstruktur dieser dargestellt wird.

Die optionale Anzeigevorrichtung 1040 kann beispielsweise ein Ausgabefeld aufweisen, wie es dem in Fig. 26 gezeigten HarmonyPad ähnlich ist. In diesem Fall ist es im Falle einer Analyse gemäß dem Symmetriemodell möglich, die Winkelinformation des Symmetriemodell-Summenvektors in Form einer Ausgabefeldradialrichtung darzustellen, die ausgehend von dem Zentrum des Symmetriekreises (810 in Fig. 26) über den gesamten Radius des Symmetriekreises hervorgehoben wird. Optional ist es hier möglich, den Betrag bzw. die Länge des Symmetriemodell-Summenvektors durch eine von dem Betrag des Symmetriekreis-Summenvektors abhängige Länge der Hervorhebung der Ausgabefeldradialrichtung zu realisieren. Alternativ oder ergänzend kann darüber hinaus der Winkel des Symmetriekreis-Summenvektors auch durch einen räumlich begrenzt hervorgehobenen Bereich dargestellt werden, der der Markierung 855 in Fig. 26 beispielsweise ähneln kann.

Grundsätzlich ist es möglich, im Rahmen der Berechnung der Tonigkeiten durch die Tonigkeitsanalyseeinrichtung 1020 eine Gewichtung der analysierten Halbtöne in Abhängigkeit von ihrer Tonhöhe bzw. ihrer Frequenz f durch Einführen einer Gewichtungsfunktion g(f) durchzuführen. Die Gewichtungsfunktion bzw. die Gewichtung beschreibt, wie unterschiedlich der Einfluss zweier Töne gleicher Tonigkeit, die jedoch unterschiedlichen Oktaven angehören, auf die Wahrnehmung bezüglich der Harmonie sind. Hierdurch ergibt sich die Möglichkeit, nicht nur die Analyse der Halbtöne bezüglich einer Lautstärkeinformationsverteilung durchzuführen, der eine gehörangepasste Größe zugrunde liegt, sondern es erlaubt vielmehr auch eine Berücksichtigung der menschlichen Wahrnehmung von Harmonien unterschiedlicher Frequenzen, die über eine bloße gehörabhängige Größe hinaus geht. Die Gewichtungsfunktion g(f) ermöglicht es somit, die Analyse bezüglich des menschlichen Empfindens weiter zu verfeinern.

Darüber hinaus ist es denkbar, zusätzlich oder alternativ einen Eingangswertintegrator in die Messvorrichtung 1000 zu integrieren bzw. einzubinden, der das Audiosignal oder ein hiervon abgeleitetes Signal zeitlich solange aufintegriert, bis der Betrag des sich ergebenden Summenvektors ein Maximum aufweist. Hierdurch ist neben einer Anzeige auf einer Anzeigevorrichtung 1040 auch eine weitere Nutzung des Analysesignals beispielsweise im Rahmen einer Begleitung möglich, da Maxima des Betrages des Summenvektors Akkordwechsel im Falle des Symmetriekreis-Summenvektors oder Tonartwechsel im Falle des Terzkreis-Summenvektors indizieren.

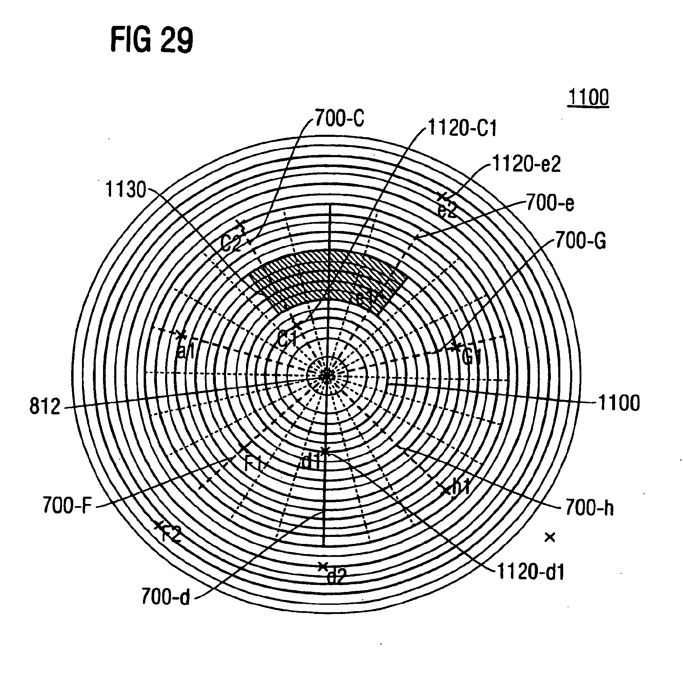

Fig. 29 zeigt ein Ausführungsbeispiel einer Darstellung auf einer Bedieneinrichtung bzw. auf einem Bedienfeld 1100 einer erfindungsgemäßen Vorrichtung zum Erzeugen eines Notensignals, das je nach konkreter Implementierung auch als Ausführungsbeispiel eines Ausgabefeldes 1100 einer Vorrichtung zur Ausgabe von einem eine Tonigkeit anzeigenden Ausgabesignal verwendet werden kann. Das in Fig. 29 gezeigte Ausgabefeld 1100 bzw. das Bedienfeld 1100 basiert wiederum auf dem Symmetriemodell. Wie bereits im Rahmen der Beschreibung des HarmonyPads im Zusammenhang mit Fig. 26 beschrieben wurde, kann auch das Bedienfeld 1100 auf einem berührungsempfindlichen Feld angezeigt werden (Touchscreen), so dass durch Berühren des berührungsempfindlichen Feldes der Benutzer einer in Fig. 29 nicht gezeigten Steuereinrichtung der erfindungsgemäßen Vorrichtung zum Erzeugen eines Notensignals entsprechende Informationen hinsichtlich der Koordinaten des Berührungspunktes übermitteln kann. Die Steuereinrichtung kann dann auf Basis dieser Koordinaten einen Eingabewinkel bzw. Eingabewinkelbereich sowie optional radiale Informationen (z.B. Startradius und Stoppradius oder Startradius und Radiusbereich bzw. Radiusdifferenz) erzeugen.

Wie zuvor erwähnt wurde, basiert die in Fig. 29 dargestellte Bedienoberfläche 1100 auf dem Symmetriemodell, bei dem, wie beispielsweise im Zusammenhang in Fig. 7 erläutert wurde, ausgehend von einem Mittelpunkt 812, die Tonigkeiten auf radial nach außen verlaufenden Richtungen 700-C, 700-e, 700-G, 700-h, 700-d, 700-F und 700-a angeordnet sind. Hierbei orientieren sich wiederum die Bezeichnungen auf dem Bedienfeld 1100 der einzelnen Tonigkeiten bzw. Tönen daran, ob ein entsprechend erklingender Akkord einen Dur-Akkord (Großbuchstaben) oder einen Moll-Akkord (Kleinbuchstaben) darstellt. Genauer gesagt ist bei dem in Fig. 29 dargestellten Bedienfeld 1100 die Menge der Tonigkeiten bzw. Tönen gezeigt, die der diatonischen Tonleiter C-Dur bzw. a-Moll entspricht.

Die Darstellung des Bedienfeldes 1100 in Fig. 29 unterscheidet sich jedoch im Hinblick auf zwei Aspekte ganz wesentlich von den in den Fig. 23 und 26 dargestellten Bedienfeldern, die ebenfalls auf dem Symmetriemodell basieren. Während bei den in den Fig. 23 und 26 dargestellten Bedienfeldern jeweils nur einer Tonigkeit auf den entsprechenden radialen Richtungen (Strahlen) dargestellt ist, ist bei dem Bedienfeld 1100 neben der Auswahl der Tonigkeit über den Winkel auch die gezielte Wahl der Oktavierung über den Radius möglich. Da ein Ton wenigstens aus der Information der Tonigkeit und aus der Information die Oktavierung betreffend besteht, ist es daher möglich auf dem Bedienfeld 1100, wie es in Fig. 29 dargestellt ist, einzelne Töne anzuordnen. Zu diesem Zweck weist das Bedienfeld 1100 ausgehend von dem Mittelpunkt 812 eine Vielzahl konzentrischer Kreise 1110 auf, denen jeweils eine "Oktavierungsinformation" zugeordnet ist, die sich jeweils um einen Halbton (kleine Sekunde) unterscheiden. Die Oktavierungsinformationen, die den Kreisen bzw. Ringen 1110 zugeordnet sind, stellen also Tonhöheninformationen dar. So ist beispielsweise dem mit dem Bezugszeichen 1110 gekennzeichneten Kreis die Tonhöheninformation zugeordnet, die dem Ton C1 (eingestrichenes C bzw. C') entspricht. Unter Berücksichtigung des Winkels, unter dem gemäß dem Symmetriemodell die Tonigkeit C angeordnet ist, ergibt sich somit auf dem Bedienfeld 1100 eine Position für den Ton C1, wie sie durch das in Fig. 29 dargestellte "X" als Markierung 1120-C1 dargestellt ist.

Entsprechend ist beispielsweise auf einem Kreis der bezogen auf den Kreis 1110 zwei Ringe weiter außen angeordnet ist, die Tonhöhe des Tons d1 (eingestrichenes d bzw. d') zugeordnet, so dass ebenfalls unter Berücksichtigung der radialen Richtung 700-d sich die Markierung 1120-d1 für den Ton d1 ("X") ergibt. Entsprechend werden auch den weiteren in Fig. 29 dargestellten Tönen entsprechende Markierungen 1120 ("X"), also etwa dem Ton e2 die Markierung 1120-e2 zugewiesen.

Die Fig. 29 zeigt somit insbesondere ein Beispiel einer Bedienoberfläche 1100 eines Ausführungsbeispiels einer Vorrichtung zum Erzeugen eines Notensignals, bei dem neben einer Zuordnung der Tonigkeiten über die Winkel das Notensignal ferner Informationen hinsichtlich der Oktavierung der einzelnen-Töne umfasst. Zu diesem Zweck ist bei der in Fig. 29 dargestellten Bedienoberfläche 1100 die zuvor erläuterte Mehrzahl von Ringen 1110 dargestellt, wobei jedem einzelnen Ring 1110 eine Tonhöhe zugeordnet ist.

Jedem Ring 1110, dem ein Ton zugeordnet ist, weist hierbei bezogen auf den Mittelpunkt 812 der resultierenden konzentrischen Anordnung der Ringe 1110 einen Radius $R_0$ auf. Da jeder Tonigkeit zusätzlich ein Winkel bzw. ein Hauptwinkel zugeordnet ist, entstehen so die in der Figur dargestellte Verteilung von Tönen, die durch die Markierungen 1120 ("X") markiert sind.

Jedem Ton 1120 kann hierbei eine zweidimensionale Verteilungsfunktion angeheftet bzw. zugeordnet werden, die als Funktion eines Winkels und eines Radius eines Punktes bezogen auf den Ort, an dem ein Ton (beispielsweise der Ton C1 (Markierung 1120-C1)) auf dem Bedienfeld angeordnet ist, eine Intensität (z.B. eine Lautstärkeinformation) zuordnet. Hierbei zerfällt die zweidimensionale Verteilungsfunktion im Allgemeinen in eine tangentiale und eine radiale Komponente hinsichtlich der Intensität, wobei die tangentiale Komponente durch die Einzeltonverteilungsfunktionen gegeben ist, wie sie beispielsweise im Zusammenhang mit Fig. 5c dargestellt sind. Die radiale Komponente kann durch eine radiale Intensitätsverteilung bzw. durch eine radiale Intensitätsverteilungsfunktion gegeben sein, die jedem Ton auf dem Bedienfeld bzw. dem gesamten Eingabefeld angeheftet wird, wobei die radiale Komponente der Intensitätsverteilung optional auch von dem oben genannten Winkel bezogen auf die Richtung 700 der Tonigkeit abhängen kann.

Wie bereits im Zusammenhang mit den Fig. 23 und 26 beschrieben wurde, kann nun ein Benutzer durch Eingabe eines Startwinkels und eines Stoppwinkels bzw. durch Eingabe eines Eingabewinkels und eines Öffnungswinkels prinzipiell ein Kreissegment selektieren. Im Unterschied zu den in den Fig. 23 und 26 gezeigten Bedienelementen kann bei dem in Fig. 29 gezeigten Bedienfeld 1100 ein Benutzer darüber hinaus ebenfalls einen Radialbereich, beispielsweise durch einen Startradius und einen Endradius definieren, der zusammen mit dem Eingabewinkelbereich einen selektierten ringförmigen Bereich ergibt, wie er beispielsweise in Fig. 29 als grau hinterlegter Bereich 1130 gezeigt ist. Wie im Folgenden noch dargestellt wird, kann somit auf Basis des selektierten Bereichs 1130 als Eingabebereich 1130 ein entsprechendes Notensignal erzeugt werden, das neben den Informationen hinsichtlich der Tonigkeit und optional einer Intensitätsverteilung auch Informationen bezüglich der Oktavierung aufweist.

Das Bedienfeld 1100 aus Fig. 29 unterscheidet sich somit von den Bedienfeldern, wie sie beispielsweise in Fig. 23 und 26 dargestellt sind, dadurch, dass jedem Ton bzw. Ring ein eigener Radius mit einem Radiuswert R0 zugeordnet wird. Somit ist es prinzipiell möglich, eine beliebige Anzahl von Oktaven beispielsweise von innen nach außen oder alternativ von außen nach innen auf dem entsprechendem Bedienfeld anzuordnen. Bei dem in Fig. 29 gezeigten Feld 1100 ist es einem Benutzer somit möglich, durch eine Definition eines Startradius einen tiefsten Ton des zu spielenden Akkordes und durch einen Stoppradius, der bei dem in Fig. 29 gezeigten Ausführungsbeispiel größer ist als der Startradius ist, einen höchsten Ton des zu spielenden Akkordes einzugeben.

Durch diese Anordnung von Tönen und Tonigkeiten ist es beispielsweise auch möglich, eine Überblendung eines Akkordes in eine andere Oktavlage durch ein Verschieben der Fläche bzw. des Feldes 1130 in radialer Richtung zu ermöglichen. Wenn nur ein einziger Winkel ausgewählt ist und kein Winkelbereich oder nur ein einzelner Winkel in einem Winkelbereich betrachtet wird, führt das Verändern des Startradius und Stoppradius zu einer Entfernung bzw. Herausnahme oder zu einer Hinzunahme von Oktavierungen der betreffenden Tonigkeiten. Grundsätzlich gelten hierbei in radialer Richtung die gleichen Aspekte bzw. Dinge, wie sie auch in tangentialer Richtung gelten, nur das hier die Töne nicht in Terzabständen sondern, wie zuvor erläutert wurde, in Oktavabständen bzw. bei Betrachtung der einzelnen konzentrischen Kreise 1110 in Halbtonabständen (kleine Sekunde) abgelegt bzw. angeordnet sind.

Jedem Punkt auf dem gesamten Eingabefeld in einem Abstand r von dem Mittelpunkt 812 der konzentrischen Anordnung wird somit durch die radiale Intensitätsverteilung ein Intensitätswert zuordnet, der von einer Differenz $\Delta r$ des Radiuswertes des Punktes r und dem Radiuswert $R_0$ des zugehörigen Rings abhängt. Anders ausgedrückt, stellt die radiale Intensitätsverteilung eine Funktion der Variable $\Delta r$ dar, wobei $\Delta r$ gegeben ist durch

$$\Delta r = r - R_0 \quad .$$

Die radiale Intensitätsverteilung kann hierbei grundsätzlich eine beliebige Funktion sein, die jeder Differenz der Radien $\Delta r$ einen Intensitätswert zuordnet. Hierbei ist es grundsätzlich möglich, dass jedem Ring 1110, dem ein Ton zugeordnet ist, eine eigene, unterschiedliche radiale Intensitätsverteilung zugewiesen ist. Ebenso ist es möglich, dass allen oder nur einigen Ringen 1110, denen Töne zugeordnet sind, übereinstimmende radiale Intensitätsfunktionen zugeordnet sind. So ist es beispielsweise möglich, dass abhängig von der Oktave, der ein Ring 1110 angehört, eine oktavenbezogene radiale Intensitätsfunktion für die betreffenden Ringen 1110 verwendet wird.

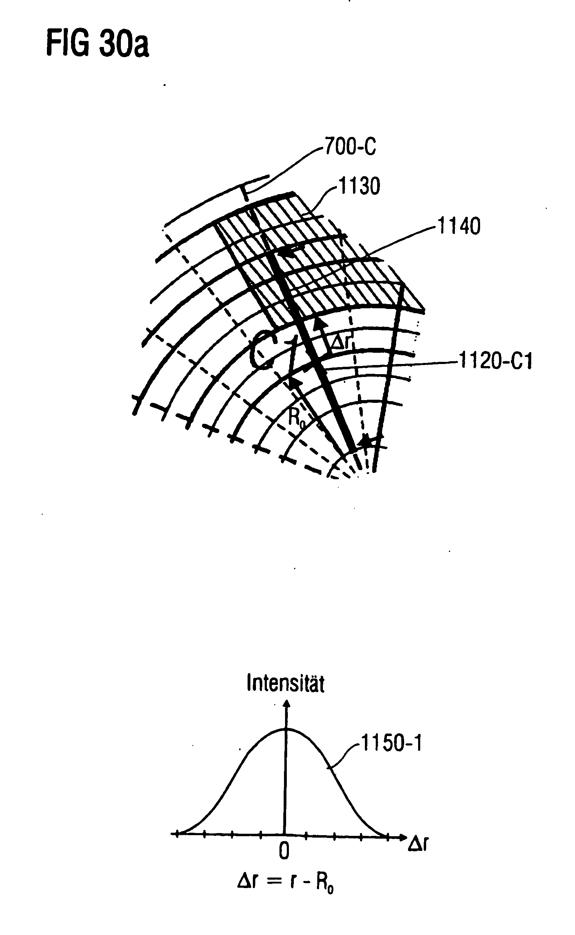

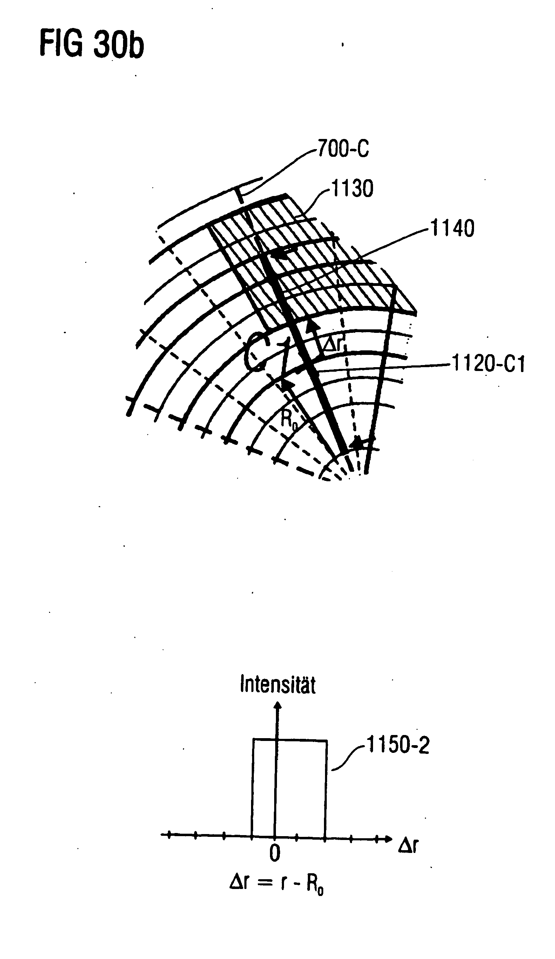

Ebenso können die radialen Intensitätsfunktionen bezogen auf ihren zentralen Wert $\Delta r = 0$, also bezogen auf den eigentlichen Ring 1110 selbst, einen symmetrischen oder asymmetrischen Verlauf aufweisen. So zeigt beispielsweise die untere Teilabbildung von Fig. 30A eine radiale Intensitätsverteilung 1150-1, die bezogen auf den betreffenden Ring ($\Delta r = 0$) einen symmetrischen, glockenförmigen Verlauf aufweist. Im Unterschied hierzu aufweist. Im Unterschied hierzu weist die in der unteren Teilabbildung von Fig. 30B gezeigte radiale Verteilungsfunktion 1150-2 einen asymmetrischen Verlauf auf, der eine Rechteckfunktion darstellt, bei der in diesem Beispiel die Intensität sprunghaft von einem maximalen Wert auf den Wert 0 abfällt.

Mit anderen Worten wird bei den in Fig. 29 und 30 gezeigten Ausführungsbeispielen eines Bedienfeldes 1100 nicht nur die Zuordnung von Tonigkeiten zu Winkeln bzw. anders herum über eine Zuordnungsfunktion durchgeführt, sondern es kann bei einer solchen Implementierung noch hinzukommen, dass der zweiten Dimension, also dem Radius bezogen auf den Mittelpunkt 812, einzelne Oktavierungen einer Tonigkeit zugewiesen wird. Bei den in Fig. 29 und 30 gezeigten Ausführungsbeispiel ist es daher so, dass sehr weit innen die tieferen Oktaven angeordnet sind, während nach außen hin diese immer höher werden.

Weiterhin ist es so, dass die Oktaven der einzelnen Tonigkeiten so auf der Radialachse bzw. bezogen auf die radiale Richtung angeordnet sind, so dass eine "Überlagerung aller Achsen" bzw. "aller radialen Richtungen" zu einer chromatischen Tonleiter führt, die von innen nach außen eine steigende Tonhöhe darstellt. Mit anderen Worten wird unter Vernachlässigung der Winkelinformation, also einem "Zusammenlegen aller Winkel", eine chromatische Tonleiter mit wachsendem Radius überschritten.

Damit hat jede Tonigkeit einen eindeutigen Winkel und jede Tonhöhe einen eindeutigen Radius, so dass auf dem Bedienfeld 1100 jedem Ton genau ein Punkt zuordenbar ist. Ein Vorteil hiervon ist, dass man mit diesem Ausführungsbeispiel uneben einem Startwinkel und einem Stoppwinkel auch einen Startradius und einen Stoppradius definieren kann, womit die spektrale Breite des Akkordes definiert werden kann. Durch ein Verschieben der durch Startwinkel und Stoppwinkel bzw. Startradius und Stoppradius definierten Fläche 1130 in radialer Richtung kann somit beispielsweise die Umkehrung oder allgemeiner die Helligkeit eines Akkordes bestimmt werden. Darüber hinaus ist es prinzipiell möglich, unterschiedlichen Winkeln bzw. Radien auch unterschiedliche Klangfarben bzw. im Falle eines elektronischen Klangerzeugers (z.B. Sampler oder Synthesizer) verschiedene Instrumente zuzuordnen.

Ist nun ein entsprechender Eingabebereich 1130,' wie er in Fig. 29 schattiert hinterlegt dargestellt ist, eingestellt bzw. selektiert, kann zu jedem Punkt auf Basis seines Winkels und seiner Entfernung (Radius r) eine Intensitätsinformation bezüglich der auf dem gesamten Bedienfeld 1100 angeordneten Töne zugewiesen werden. Jedem Punkt des Eingabebereichs 1130 kann so auf Basis des Winkels und der zugehörigen räumlichen Einzeltonverteilungsfunktionen für jede Tonigkeit bzw. jeden Ton eine entsprechende Intensitätsinformation zugeordnet werden. Die Einzeltonverteilungsfunktionen ordnen hierbei, beispielsweise über eine Differenzbildung, jedem Winkel bezogen auf einen Hauptwinkel der Tonigkeit, der mit der entsprechenden Richtung 700 des Bedienfeldes 1100 übereinstimmt, eine Intensitätsinformation zu. Typischerweise dem Hauptwinkel auch die größte Intensität zugewiesen wird.

Darüber hinaus kann basierend auf den radialen Intensitätsfunktionen jedes Rings 1110, dem ein Ton zugeordnet ist, für jeden eine Tonigkeit und eine Oktavierung umfassenden Ton eine für den betreffenden Ton abgeleitete Intensitätsinformation gewonnen werden. Anschließend kann beispielsweise auf Basis aller in dem vollständigen Bedienfeld 1100 angeordneten Tönen 1120 ein (Teil-)Notensignal entsprechend den Intensitätsinformationen der einzelnen Töne durch eine Kombination der einzelnen Informationen bezüglich der resultierenden Intensitäten der Töne 1120 erzeugt werden.

Je nach konkreter Implementierung können hierbei die einzelnen Punkte des ausgewählten Eingabebereichs 1130 aufsummiert bzw. aufintegriert werden oder es kann eine Gesamtintensität durch eine zusätzliche Normierung oder ein anderes Verfahren (beispielsweise Maximumbestimmung) gebildet werden. Auch können bezüglich der einzelnen Töne 1120 die aus den einzelnen räumlichen Tonverteilungsfunktionen und den radialen Intensitätsverteilungen zusammengesetzt sind, Intensitätsinformationen auf Basis einer Multiplikation der entsprechenden Funktionen, oder eines anderen, komplexeren funktionalen Zusammenhangs berechnet bzw. bestimmt werden. Hierzu zählen beispielsweise polynominale Ausdrücke, exponentielle Ausdrücke, mathematische Faltungsausdrücke oder anderer mathematischer Zusammenhänge. Die radiale Intensitätsverteilung ermöglicht so eine (nachträgliche) Gewichtung über die Intensität einzelner Töne, die grundsätzlich auch eine verschwindende Intensität (keine Lautstärke bzw. Intensitätswert 0) ermöglichen.

Somit ergibt sich über das gesamte Eingabefeld 1100 für jeden Ton 1120 in dem gesamten Eingabefeld 1100 eine Intensitätsverteilung bezogen auf alle in dem gesamten Eingabefeld 1100 befindlichen Punkte, die einerseits auf der jeweils zugeordneten räumlichen Einzeltonverteilungsfunktion und andererseits auf der dem jeweiligen Ton bzw. der jeweiligen Oktavierung zugeordneten radialen Intensitätsverteilung basiert. Ober die resultierenden (Teil-)Notensignale für den betreffenden Punkt kann dann aus allen Punkten eines gewählten Eingabebereichs 1130, der beispielsweise durch einen Startwinkel, Öffnungswinkel, Startradius und Endradius bestimmt ist, auf die oben beschriebene Art und Weise das resultierende (Gesamt-)Notensignal bzw. Notensignal gebildet werden.

Zusammenfassend lassen sich somit in Bezug auf das in den Fig. 29 und 30 dargestellte Ausführungsbeispiel die folgenden allgemeinen Grundgedanken zusammenfassen. So kann grundsätzlich jeder Ton an jeder Stelle auf dem Bedienfeld 1100 aktiv sein. Die Intensität eines Tones an einer bestimmten Stelle ist eine beliebige Funktion $f(\alpha, r)$, die von einem Punkt, der durch einen Winkel $\alpha$ und einen Radiuswert r gegeben ist, definiert werden. Die Gesamtintensität eines Tons ergibt sich hierbei durch Aufintegration bzw. Aufsummation der Intensitäten der Töne auf der gesamten Oberfläche 1100. Die Tonverteilungsfunktion, die Selektionsfunktion, die Selektionsgewichtungsfunktion und andere implementierungsspezifische Funktionen stellen letztendlich nur Zwischenschritte dar, die helfen, die eigentliche Tonverteilungsfunktion zu erzeugen bzw. zu beschreiben, die zu der eigentlichen räumlichen Verteilungsfunktion oder zu den eigentlichen räumlichen (zweidimensionalen) Verteilungsfunktionen führen. Hierbei gibt es unterschiedliche Wege, die genaue Tonverteilungsfunktion zu erzeugen, wie die obige Diskussion gezeigt hat.

Ausführungsbeispiele bzw. Implementierungen können dabei beispielsweise folgender Maßen arbeiten. Zunächst wird eine Selektionsfunktion s(r,α) definiert, die jeder Stelle der zweidimensionalen Oberfläche des Bedienelements 1100 eine Intensität für einen Ton mit einer Tonigkeit und einer Oktavierung zuordnet. Anschließend wird für jeden auf der Oberfläche 1100 angeordneten Ton 1120 der Winkel α und der Radius r der selektierten bzw. ausgewählten Punkt betreffend ermittelt. Diese werden der Selektionsfunktion s(r,α) zugeführt, welche dann die Intensität für diese Stelle und damit dann für den jeweiligen Ton zurückliefert. Die Selektionsfunktion s(r,α) kann hierbei auf unterschiedliche Art und Weise gebildet werden. Eine Möglichkeit ist, die Definition eines Startwinkels und Stoppwinkels, sowie eines Startradius und eines Stoppradius zu implementieren. In diesem Fall kann die Selektionsgewichtungsfunktion beispielsweise durch eine radiale und tangentiale Intensitätsverteilungsfunktion erfolgen. Weiterhin kann dann innerhalb dieses Bereiches noch einmal eine zusätzliche Abstufung der Gewichtung beispielsweise über weitere implementierungsspezifische Funktionen erfolgen.

Die Fig. 30A und 30B zeigen so jeweils im oberen Abschnitt einen Ausschnitt aus dem Bedienfeld 1100, bei dem ein Ausschnitt im Bereich des Tons C1 mit der Markierung 1120-C1 dargestellt ist. Hierbei ist jedem Ton, also beispielsweise dem Ton C1 bzw. seiner Markierung 1120-C1 ein Radiuswert $R_0$ zugeordnet, wie er auch in der oberen Teilabbildung von Fig. 30A und 30B dargestellt ist. Wird nun, wie im Zusammenhang mit Fig. 29 erläutert wurde, ein Eingabebereich 1130 gewählt, so weist jeder Punkt des gewählten Bereichs 1130 bezogen auf die Position des Tons C1 bzw. durch seine geometrische Position auf dem Bedienfeld 1130, wie sie durch die Markierung 1120-C1 dargestellt ist, einen Radiuswert $\Delta r$ auf. Ferner weist jeder Punkt des Eingabebereichs 1130 bezogen auf die zugehörige Richtung bzw. den zugehörigen Winkel, wie er beispeilsweise durch die radiale Richtung 700-C für den Ton C1 in Fig. 30 jeweils eingezeichnet ist, einen Winkel auf. Aus diesen Informationen, also aus dem Winkelwert bezogen auf die entsprechenden Richtungen 700 und dem Radiuswert $\Delta r$ wird dann ein Intensitätswert für den betreffenden Ton gebildet. Das bereitgestellte Notensignal umfasst somit bei den in den Ausführungsbeispielen in den Fig. 29 und 30 gezeigten Bedienfeldern 1100 für jeden Ton auf dem Bedienfeld 1100 eine Intensitätsinformation (z.B. eine Lautstärkeinformation), die sich durch eine entsprechende Auswertung der jeweiligen Position der Punkte in dem Eingabebereich 1130 bezogen auf die jeweiligen Punkte der Töne 1120 ergibt. Bezogen auf den Winkel ist dies bereits im Zusammenhang mit den Figuren 5a bis c erläutert worden.

Im Hinblick auf die radiale Information kann bei einem Ausführungsbeispiel der vorliegenden Erfindung die zugehörige Intensität als Funktion des Radiuswertes $\Delta r$ gegeben sein, wie dies in den jeweils unteren Teilabbildungen in den Fig. 30A oder 30B dargestellt ist. Hierbei entspricht die Auftragung der $\Delta r$-Achse ein den jeweiligen unteren Teilabbildungen der in den jeweiligen oberen Teilabbildungen der Fig. 30A und 30B dargestellten starken Linie 1140.

Die kleinen Unterteilungen auf den $\Delta r$-Achsen in den unteren Teilabbildungen der Fig. 30A und 30B entsprechen jeweils einem Abstand zweier konzentrischer Kreise 1110, wie sie in Fig. 29 dargestellt sind. Die beiden in den unteren Teilanmeldungen 30A und 30B gezeigten Intensitätsverläufe 1150-1 und 1150-2 stellen hierbei lediglich zwei mögliche Beispiele dar, bei denen im Falle der radialen Intensitätsverteilungsfunktion 1150-1 eine glockenförmige, symmetrische Funktion bezogen auf den Wert $\Delta r = 0$ dargestellt ist, während die radiale Intensitätsverteilungsfunktion 1150-2 in der unteren Teilabbildung 50 der Fig. 30B eine rechteckförmige, unsymmetrische Intensitätsverteilungsfunktion darstellt.

Selbstverständlich sind die in den Fig. 29 und 30 dargestellten Bedienfeldern nicht auf ein Bedienfeld mit einer Anordnung gemäß dem Symmetriemodell beschränkt. Die entsprechenden Bedienfelder 1100 können selbstverständlich in anderen Ausführungsbeispielen entsprechend auf eine Anordnung der Tonigkeiten über den vollen Winkelbereich eines Kreises gemäß dem Terzkreis angewendet und übertragen werden.

In den folgenden Abschnitten werden einige weitere Ausführungsbeispiele der vorliegenden erfindungsgemäßen Vorrichtungen erläutert und skizziert.

Querschnittsgelähmte können in vielen Fällen nur noch den Kopf bewegen. Sie sind deshalb häufig nicht in der Lage, herkömmliche Instrumente zu bedienen, da diese fast ausschließlich mit den Händen und/oder (in Ausnahmefällen) auch mit den Füßen bedient werden. Die erfindungsgemäße Vorrichtung zum Erzeugen eines Notensignals ermöglicht es daher, als Bedieneinrichtung ein System zu verwenden, das den Neigungswinkel und/oder die Neigungsrichtung des Kopfes messen kann. Auf Basis dieser Messgrößen ist es dann möglich, den Startwinkel und/oder den Öffnungswinkel des selektierten Raumausschnitts des Tonraums zu definieren und beispielsweise dem HarmonyPad oder einer anderen erfindungsgemäßen Vorrichtung zum Erzeugen eines Notensignals auf eine manuelle Eingabe hin als Eingangsgröße zur Verfügung zu stellen. Hierdurch kann die erfindungsgemäße Vorrichtung zum Erzeugen eines Notensignals einen Klangerzeuger ansteuern, so dass ein Querschnittsgelähmter in die Lage versetzt wird, ein Begleitinstrument zu spielen.

Darüber hinaus besteht die Möglichkeit, die Notensignale bzw. die Messgrößen als Eingangssignal einer Vorrichtung zur Ausgabe von einem eine Tonigkeit anzeigenden Ausgabesignal zur Verfügung zu stellen, so dass auf einer Anzeigevorrichtung, etwa dem in Fig. 26 gezeigten HarmonyPad, der selektierte Raumbereich dargestellt werden kann. Darüber hinaus können, genauere Trackingverfahren vorausgesetzt, auch Gesten wie Augenzwinkern und andere Reaktionen eines Querschnittsgelähmten erfasst werden, um beispielsweise den Öffnungswinkel, die räumliche Einzeltonverteilungsfunktion, die Umkehrungsgewichtungsfunktion, die Selektionsverteilungsfunktion oder eine andere Größe während des Spiels bzw. während der Performance zu verändern. Querschnittsgelähmte werden mit Hilfe dieses Instrumentes also in die Lage versetzt, beispielsweise ihren eigen Gesang zu begleiten. Ein solches Instrument stellt damit ein Begleitinstrument für Querschnittsgelähmte dar.

Mit Hilfe der erfindungsgemäßen Vorrichtungen zum Erzeugen eines Notensignals und Vorrichtung zur Ausgabe von einem eine Tonigkeit anzeigenden Ausgabesignal ist es möglich, auch ein Handy bzw. ein Mobiltelefon als Musikinstrument zu verwenden, obwohl diese nur über sehr eingeschränkte Bedienmöglichkeiten verfügen. Neuere Geräte verfügen häufig über einen berührungsempfindlichen Bildschirm und/oder auch über einen polyphonen Klangsynthesizer. Es ist daher möglich, Handys als Musikinstrumente dadurch umzufunktionieren, indem eine dem HarmonyPad aus Fig. 26 ähnliche Darstellung auf dem berührungsempfindlichen Bildschirm abbildet wird und/oder die Handytastatur oder der Handyjoystick zur Bestimmung des Startwinkels und des Öffnungswinkels des Symmetriekreises verwendet wird, wie dies im Zusammenhang mit den Fig. 24 und 25 bereits diskutiert wurde. Darüber hinaus ist möglich, mehrere Handys beispielsweise über Bluetooth® oder andere Netzwerkverbindungen miteinander zu vernetzen, so dass diese zum einen rhythmisch synchronisiert werden können und zum anderen auch den aktiven Tonraumausschnitt anderer Handys anzeigen können. Hiermit ist es möglich, ein "Handy-Orchester" zu bilden. Ist in den Handys darüber hinaus bereits eine Begleitautomatik integriert, so kann diese ebenfalls mit der hier beschriebenen erfindungsgemäßen Vorrichtung zum Erzeugen eines Notensignals gesteuert werden.

Ein weiteres Ausführungsbeispiel der vorliegenden Erfindung besteht in dem sogenannten DJ-Tool. Hierbei wird eine erfindungsgemäße Eingabevorrichtung und eine Ausgabevorrichtung wie etwa das HarmonyPad aus Fig. 26, neben einen Schallplattenspieler oder CD/DVD-Player auf dem Gerätetisch des DJ positioniert. Eine Ton- und Harmonieanalysevorrichtung erfasst die in den aktuell gespielten Stücken bzw. Tracks enthaltenen Basistöne und leitet diese bzw. routet diese auf die erfindungsgemäße Eingabevorrichtung und eine Ausgabevorrichtung (z. B. HarmonyPad) des DJ. Dieser kann nun "coole" harmonische Begleiteffekte erzeugen, indem er die durch das HarmonyPad bereitgestellten Klanggestaltungsmöglichkeiten nutzt.

Ein weiteres Ausführungsbeispiel der vorliegenden Erfindung stellt ein fußgesteuertes Begleitinstrument dar. Hierbei wird der Startwinkel und/oder der Öffnungswinkel des selektierten Kreissegmentes nicht über einen Joystick gesteuert, sondern die Bedieneinrichtung umfasst vielmehr eine in alle Richtungen neigbare Fußplatte. Der Neigungswinkel und die Neigungsstärke der Fußplatte wird beispielsweise über optische, elektrische oder mechanische Sensoren einem Startwinkel und/oder einem. Öffnungswinkel zugeordnet bzw. geroutet. Hierdurch ist es beispielsweise einem Gitarrenspieler möglich, passend zu seinem Spiel auf der Gitarre ein Geigenorchester über einen Synthesizer oder einen anderen Klangerzeuger zu steuern.

Ein weiteres Ausführungsbeispiel der vorliegenden Erfindung besteht in einer drumbasierten bzw. trommelbasierten bzw. schlagzeugbasierten Variante. Hierbei werden die sieben Töne bzw. Tonigkeiten des Symmetriekreises einzelnen Flächen eines Schlagzeuges zugeordnet. Hierbei kann eine solche Zuordnung beispielsweise im Falle eines digitalen Schlagzeugs direkt durch entsprechende digitale Steuersignale (beispielsweise Midi-Signale) oder durch entsprechende Klangaufnehmer und eine entsprechende Auswertungselektronik erfolgen. Mit einem zusätzlich dem Schlagzeugspieler angebotenen Gerät, das eine weitere Bedieneinrichtung aufweist, mit der die Tonarten bzw. die Zuordnungsfunktionen gewechselt werden kann, kann so der Schlagzeugspieler die aktuelle Tonart einstellen. Damit können Schlagzeuger interessante harmonische Begleitungen erzeugen.

Ein weiteres Ausführungsbeispiel der vorliegenden Erfindung besteht in einer zusätzlichen Begleittastatur für Keyboards (mit einer konventionellen Klaviatur). Hierbei kann eine erfindungsgemäße Vorrichtung zum Erzeugen eines Notensignals und/oder eine Vorrichtung zur Ausgabe von einem eine Tonigkeit anzeige den Ausgabesignal, beispielsweise das in Fig. 26 gezeigte HarmonyPad, in (vorhandene) Keyboards integriert werden oder als zusätzliche Begleittastatur oder Begleiteingabevorrichtung angeboten werden. Während das normale Keyboard sich gut eignet, um Melodieverläufe zu gestalten, kann das HarmonyPad verwendet werden, um eine dazu passende harmonische Begleitung zu erzeugen oder die mit dem herkömmlichen Keyboard erzeugten Harmonien zu analysieren.

Ein weiteres Ausführungsbeispiel der vorliegenden Erfindung besteht darin, das in Fig. 26 gezeigte HarmonyPad als Zusatzkomponente (AddOn) zu einem iPod® zu verwenden. Der aktuelle iPod® weist eine kreisförmige berührungsempfindliche Fläche zur Gerätebedienung auf. Diese kreisförmige Fläche kann als Eingabemedium für das HarmonyPad verwendet werden. Darüber hinaus ist es möglich, den iPod® um eine Harmonie-Analysefunktion bzw. eine Harmonieanalysevorrichtung zu erweitern, die auf Basis der Summenvektoren operiert. Diese Funktion analysiert die Tonart und den zu einem Zeitpunkt vorhandenen Startwinkel und Öffnungswinkel und lässt das entsprechende Kreissegment auf dem iPod® aufleuchten. Darüber hinaus kann optional der iPod® nun auch noch mit einem Klangerzeuger ausgestattet werden, so dass aufgeweckte Kids ihre Musik mit schicken Begleitharmonien anreichern können. Es ist anzumerken, dass diese Funktion passende Musik voraussetzen kann.

Ein weiteres Ausführungsbeispiel der vorliegenden Erfindung stellt ein sogenannter HarmonyBuzzer dar. Sony® bietet speziell auf Quizspiele zugeschnittene Eingabegeräte an, die Buzzer genannt werden. Ein Ausführungsbeispiel der vorliegenden Erfindung besteht nun in einem sogenannten HarmonyBuzzer, der Bedienelemente aufweist, die in Form des Symmetriemodells ähnlich der in Fig. 27 gezeigten Bedienvorrichtung 900 bzw. dem entsprechenden Spielzeug und Musikinstrument für Kinder angeordnet sind, wobei der optionale Tonwahlzähler 935 in Fig. 27 nicht implementiert werden muss. Der HarmonyBuzzer wird zusammen mit Lernsoftware hergestellt, um zusammen mit dieser vertrieben zu werden, und macht es möglich, dass mehrere Kinder gemeinsam Musiktheorie lernen und Hörübungen durchführen, gegebenenfalls Stücke nachspielen und andere Aktivitäten durchführen können. Als Eingabeinstrument bzw. Instrument zum Beantworten der Fragen dient der HarmonyBuzzer. Der Vorteil des HarmonyBuzzers besteht darin, dass die Anordnung der Bedienelemente gleichzeitig musiktheoretische Bedeutung hat. Dadurch entsteht ein zusätzlicher "Kanal", der den Kindern hilft, das Gelernte noch sicherer zu verinnerlichen.

Weitere Ausführungsbeispiele der vorliegenden Erfindung stellen Systeme dar, bei denen eine Vorrichtung zur Analyse von Audiodaten oder eine erfindungsgemäße Vorrichtung zum Erzeugen eines Notensignals mit einem Raumklangerzeuger gekoppelt sind, um eine Verknüpfung mit einem Raumklang oder Raumklangerlebnisses und anderen Klangparametern zu ermöglichen. Mit dem Symmetriemodell und dem Terzkreis sind tonale Informationen, etwa in Form des selektierten Raumausschnittes bzw. des Eingabewinkels und/oder des Eingabewinkelbereichs sowie das auf dem Summenvektor basierende Analysesignal, geometrisch sehr effizient repräsentiert. Heutige Wiedergabesysteme bzw. Raumklangsysteme erlauben es, Klänge an bestimmten Raumpositionen wiederzugeben. Es besteht daher die Möglichkeit, im Falle eine Kopplung einer Vorrichtung zum Erzeugen eines Notensignals mit einem Raumklangsystem beispielsweise den (Start-) Winkel, den Öffnungswinkel und/oder den Radius des gegenwärtig selektierten Kreissegments auf Raumparameter wie Richtung, Diffusität, Ausdehnung des Klangs im Raum usw. zu routen bzw. eine entsprechende Zuordnung durchzuführen. Genauso ist es möglich, im Falle einer Kopplung einer erfindungsgemäßen Vorrichtung zur Analyse von Audiodaten mit einem Raumklangsystem basierend auf dem Analysesignal, also insbesondere auf Basis der in diesem umfassten Informationen bezüglich des Winkels und der Länge des Summenvektors, eine entsprechende Zuordnung zu den Parametern des Raumklangsystems vorzunehmen. Darüber hinaus ist es möglich, diese Parameter auf eine frequenzabhängige Übertragungsfunktion oder auf den Zeitverlauf, beispielsweise mittels ADSR-Hüllkurven (ADSR = attack-decay-sustainrelease = Anschlag-Abschwellen-Halten-Lösen) zu routen und somit Harmonie, Klangfarbe und/oder Klangposition miteinander zu verknüpfen.

Weitere Ausführungsbeispiele für die Vorrichtung zur Ausgabe von einem eine Tonigkeit anzeigenden Ausgabesignal stellen beispielsweise Bildschirme, Displays (LCD-Displays) und Ausgabefelder mit Ausgabebereichen, die durch Aufleuchten optisch hervorgehoben werden können, und andere Anzeigevorrichtungen dar. Die Oberflächen dieser Anzeigen können in verschiedenen Formen ausgeführt werden, wie die in den Fig. 26 und 27 gezeigten Beispiele im Falle des Symmetriemodells illustriert haben. Entsprechend können auch Darstellungen im Rahmen des Terzkreises (wie etwa der Terzkreis 835 in Fig. 26) verwendet werden. Genauere Details zu den Ausführungen hängen stark von den Anwendungsgebieten ab. So ist neben dem bereits beschriebenen DJ-Tool, dem HarmonyPad, dem Musikinstrument für Kleinkinder und anderen bereits beschriebenen Ausführungsbeispielen auch eine Anwendung als Raumschmuck beispielsweise in Form eines an einer Wand befestigbaren LCD-Displays oder TFT-Displays (TFT = thin film transisotr = Dünnschichttransistors) denkbar. Auch kleinere Ausführungsbeispiele, die in der Hand gehalten werden können, sind denkbar, die beispielsweise Menschen, die über kein absolutes Gehör verfügen, ein schnelles Erfassen der gespielten Töne eines Musikstücks ermöglichen.

Abhängig von den Gegebenheiten können die erfindungsgemäßen Verfahren zum Erzeugen eines Notensignals auf eine manuelle Eingabe hin oder die Verfahren zur Ausgabe von einem eine Tonigkeit anzeigenden Ausgabesignal in Hardware oder in Software implementiert werden. Die Implementation kann auf einem digitalen Speichermedium, insbesondere einer Diskette, CD oder DVD mit elektronisch auslesbaren Steuersignalen erfolgen, die so mit einem programmierbaren Computersystem zusammenwirken können, dass die erfindungsgemäßen Verfahren zum Erzeugen eines Notensignals auf eine manuelle Eingabe hin oder die Verfahren zur Ausgabe von einem eine Tonigkeit anzeigenden Ausgabesignal ausgeführt werden. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung der Verfahren realisiert werden, wenn das Computerprogramm auf einem Computer abläuft.

**Patentansprüche**

1. Vorrichtung (100; 620; 800; 900) zum Erzeugen eines Notensignals auf eine manuelle Eingabe hin, mit folgenden Merkmalen:

   einer Bedieneinrichtung (110; 800, 830), die ausgebildet ist, um es einem Benutzer derselben als Eingabe zu ermöglichen, einen Eingabewinkel oder einen Eingabewinkelbereich als Eingabesignal zu definieren; und
   einer Steuereinrichtung (120), die ausgebildet ist, um das Eingabesignal zu empfangen und basierend auf einer Zuordnungsfunktion und dem Eingabesignal ein einer Tonigkeit zugeordnetes Notensignal zu erzeugen, **dadurch gekennzeichnet, dass** die Zuordnungsfunktion den vollen Winkelbereich eines Kreises auf eine Tonigkeitsmenge abbildet, derart, dass jedem Winkel des vollen Winkelbereichs eine Tonigkeit oder keine Tonigkeit zugeordnet ist, und dass für alle Winkel gilt, dass,

- wenn einem Winkel keine Tonigkeit zugeordnet ist, einem zu dem Winkel in einer ersten Richtung nächstliegenden ersten Nächstnachbarwinkel des vollen Winkelbereichs, dem eine Tonigkeit zugeordnet ist, eine erste Nächstnachbartonigkeit zugeordnet ist, die zu einer zweiten Nächstnachbartonigkeit, die einem zu dem Winkel in einer der ersten Richtung entgegengesetzten zweiten Richtung nächstliegenden zweiten Nächstnachbarwinkel des vollen Winkelbereichs, dem eine Tonigkeit zugeordnet ist, zugeordnet ist, einen kleinsten Tonabstand aufweist, der einem kleinen Terzabstand oder einem großen Terzabstand entspricht, und
- wenn dem Winkel eine vorbestimmte Tonigkeit zugeordnet ist, die vorbestimmte Tonigkeit und die erste Nächstnachbartonigkeit einen kleinsten Tonabstand aufweisen, der einem Primabstand, einem kleinen Terzabstand oder einem großen Terzabstand entspricht, und die vorbestimmte Tonigkeit und die zweite Nächstnachbartonigkeit einen kleinsten Tonabstand aufweist, der einem Primabstand, einem kleinen Terzabstand oder einem großen Terzabstand entspricht.

2. Vorrichtung (100; 620; 800; 900) gemäß Anspruch 1, bei der die Steuereinrichtung (120) so ausgebildet ist, dass die Zuordnungsfunktion einer Mehrzahl vorbestimmter Winkel Tonigkeiten zuordnet, wobei unmittelbar benachbarten Winkel der Mehrzahl vorbestimmter Winkel Tonigkeiten zugeordnet sind, die als kleinsten Tonabstand einen großen Terzabstand oder einen kleinen Terzabstand aufweisen.

3. Vorrichtung (100; 620; 800; 900) gemäß Anspruch 2, bei der die Steuereinrichtung so ausgebildet ist, dass die Mehrzahl vorbestimmter Winkel 24 Einzelwinkel umfasst, die bezogen auf einen Kreis äquidistant verteilt sind, und dass die Zuordnungsfunktion den 24 Einzelwinkeln der Mehrzahl vorbestimmter Winkel die 12 Tonigkeiten der chromatischen Tonleiter so zuordnet, dass jedem Einzelwinkel der Mehrzahl vorbestimmter Winkel eine Tonigkeit zugeordnet ist, die entweder

- bezogen auf eine einem in dem Uhrzeigersinn unmittelbar benachbarten Winkel der Mehrzahl vorbestimmter Winkel zugeordneten Tonigkeit einen kleinen Terzabstand als kleinstem Tonabstand und bezogen auf eine einem gegen den Uhrzeigersinn unmittelbar benachbarten Winkel der Mehrzahl vorbestimmter Winkel zugeordneten Tonigkeit einen großen Terzabstand als kleinsten Tonabstand aufweist, oder
- bezogen auf eine einem im Uhrzeigersinn unmittelbar benachbarten Winkel der Mehrzahl vorbestimmter Winkel zugeordneten Tonigkeiten einen großen Terzabstand als kleinstem Tonabstand und bezogen auf eine einem gegen den Uhrzeigersinn unmittelbar benachbarten Winkel der Mehrzahl vorbestimmter Winkel zugeordnete Tonigkeit ein kleiner Terzabstand als kleinster Tonabstand aufweist.

4. Vorrichtung (100; 620; 800; 900) gemäß Anspruch 2, bei der die Steuereinrichtung (120) so ausgebildet ist, dass die Mehrzahl vorbestimmter Winkel sieben Einzelwinkel umfasst, die bezogen auf eine Symmetrieachse symmetrisch verteilt sind, und dass die Zuordnungsfunktion den sieben Einzelwinkeln der Mehrzahl vorbestimmter Winkel die sieben Tonigkeiten einer diatonischen Dur-Tonleiter so zuordnet, dass jedem Einzelwinkel der Mehrzahl vorbestimmter Winkel entweder

- bezogen auf eine einem in dem Uhrzeigersinn unmittelbar benachbarten Winkel der Mehrzahl vorbestimmter Winkel zugeordneten Tonigkeit einen kleinen Terzabstand als kleinstem Tonabstand und bezogen auf eine einem gegen den Uhrzeigersinn unmittelbar benachbarten Winkel der Mehrzahl vorbestimmter Winkel zugeordneten Tonigkeit einen großen Terzabstand als kleinsten Tonabstand aufweist oder
- bezogen auf eine einem im Uhrzeigersinn unmittelbar benachbarten Winkel der Mehrzahl vorbestimmter Winkel zugeordneten Tonigkeiten einen großen Terzabstand als kleinstem Tonabstand und bezogen auf eine einem gegen den Uhrzeigersinn unmittelbar benachbarten Winkel der Mehrzahl vorbestimmter Winkel zugeordnete Tonigkeit ein kleiner Terzabstand als kleinster Tonabstand aufweist,

wobei sich jeweils zwei unmittelbar benachbarte Einzelwinkel bezogen auf einen Kreis, denen Tonigkeiten zugeordnet sind, die als kleinsten Tonabstand einen kleinen Terzabstand aufweisen, betragsmäßig um einen Winkel von 45˚ unterscheiden;
wobei sich jeweils zwei unmittelbar benachbarte Einzelwinkel bezogen auf einen Kreis, denen Tonigkeiten zugeordnet sind, die als kleinsten Tonabstand einen großen Terzabstand aufweisen, betragsmäßig um einen Winkel von 60˚ unterscheiden; und
wobei die einem Winkel der Symmetrieachse zugeordnete Tonigkeit bezogen auf einen Grundton der diatonischen Dur-Tonleiter einen kleinsten Tonabstand einer großen Sekunde aufweist.

5. Vorrichtung (100; 620; 800; 900) gemäß einem der vorhergehenden Ansprüche, bei der die Steuereinrichtung (120) so ausgebildet ist, dass die Zuordnungsfunktion jedem Winkel, dem eine Tonigkeit zugeordnet ist, eine Lautstärkeinformation zuordnet, wodurch eine räumliche Tonverteilungsfunktion über die Winkel definiert wird.

6. Vorrichtung (100; 620; 800; 900) gemäß einem der vorhergehenden Ansprüche, bei der die Steuereinrichtung (120) weiterhin ausgebildet ist, um ein Notensignal zu erzeugen, das eine Lautstärkeinformation aufweist, die von dem Winkelbereich des Eingabesignals und einer Selektionsgewichtungsfunktion abgeleitet ist, wobei die Selektionsgewichtungsfunktion eine winkelabhängige Lautstärkeinformationsfunktion aufweist.

7. Vorrichtung (100; 620; 800; 900) gemäß einem der vorhergehenden Ansprüche, bei der die Steuereinrichtung (120) weiterhin ausgebildet ist, um das Notensignal mit einer zufällig bestimmten, einer vorbestimmten oder einer von der Eingabe abhängigen Oktavierung zu erzeugen.

8. Vorrichtung (100; 620; 800; 900) gemäß einem der vorhergehenden Ansprüche; bei der die Bedieneinrichtung ausgebildet ist, um den Eingabewinkelbereich durch einen Startwinkel und einen Öffnungswinkel zu definieren.

9. Vorrichtung (100; 620; 800; 900) gemäß einem der vorhergehenden Ansprüche, bei der die Bedieneinrichtung (110; 800, 830) eine Eingabeeinrichtung aufweist, die aus einer Gruppe ausgewählt ist, die einen Joystick, einen Handyjoystick, eine neigbare Fußplatte, einen Fußtaster, eine Fußwippe, einen Drehregler, einen Schieberegler, einen Touchscreen, eine berührungsempfindliche Fläche, eine Computer-Maus, eine Taste, einen Knopf, eine Schaltfläche und einen Schiebeschalter umfasst, oder bei der die Bedieneinrichtung (110; 800, 830) ausgebildet ist, um eine Neigungsrichtung und/oder eine Neigungsstärke eines Kopfes des Benutzers zu erkennen und als die Eingabe auszugeben.

10. Vorrichtung (100; 620; 800; 900) gemäß einem der vorhergehenden Ansprüche, bei der die Vorrichtung (100; 620; 900) eine zusätzliche Bedieneinrichtung (805) aufweist, um auf eine Auswahleingabe des Benutzers hin ein Auswahlsignal der Steuereinrichtung (120) bereitzustellen, und wobei die Steuereinrichtung ausgebildet ist, um basierend auf dem Auswahlsignal die Zuordnungsfunktion aus einer Mehrzahl von Zuordnungsfunktionen zu bestimmen, um eine diatonische Dur-Tonleiter festzulegen.

11. Vorrichtung (100; 620; 800; 900) gemäß einem der vorhergehenden Ansprüche, bei der die Bedieneinrichtung (110; 800, 830) ein berührungsempfindliches Feld, eine Felderfassungseinrichtung und eine Feldauswerteeinrichtung aufweist, wobei die Erfassungseinrichtung ausgebildet ist, um eine Berührung auf dem berührungsempfindlichen Feld durch den Benutzer zu erfassen und der Feldauswerteeinrichtung ein die Berührung und den Ort der Berührung anzeigendes Signal bereitzustellen, und wobei die Feldauswerteeinrichtung ausgebildet ist, um basierend auf dem die Berührung anzeigenden Signal bezogen auf einen Mittelpunkt des berührungsempfindliches Feldes und einer Vorzugsrichtung des berührungsempfindlichen Feldes aus dem Ort der Berührung den Eingabewinkel oder den Eingabewinkelbereich zu bestimmen und das Eingabesignal auszugeben.

12. Vorrichtung (100; 620; 800; 900) gemäß einem der vorhergehenden Ansprüche, bei der die Bedieneinrichtung (110; 800, 830) eine Mehrzahl von Notenbedieneinrichtungen und einen oval/kreisförmigen Notenbedienbereich aufweist, wobei genau sieben Notenbedieneinrichtungen der Mehrzahl von Notenbedieneinrichtungen entlang eines Umfangs des Notenbedienbereichs aufeinander folgend angeordnet sind;
wobei jeder der sieben Notenbedieneinrichtungen eine Tonigkeit zugeordnet ist;
wobei die sieben Notenbedieneinrichtungen bezogen auf eine Notenbedienbereichsymmetrieachse symmetrisch auf dem Umfang des Notenbedienbereichs angeordnet sind, so dass im Uhrzeigersinn die erste Notenbedieneinrichtung auf der Notenbedienbereichsymmetrieachse liegt; und
einer Erfassungseinrichtung, die ausgebildet ist, um auf ein Betätigen einer Notenbedieneinrichtung der sieben Notenbedieneinrichtungen der Steuereinrichtung als Eingabesignal einen der Notenbedieneinrichtung zugeordneten Eingabewinkel bereitzustellen,
wobei jede der sieben Notenbedieneinrichtungen bezogen auf eine Vorzugsrichtung des Notenbedienbereichs und eines Mittelpunkts des Notenbedienbereichs unter einem Winkel angeordnet ist, der dem der Notenbedieneinrichtung zugeordneten Eingabewinkel entspricht; und
wobei jede der sieben Noteneingabeeinrichtungen eine Taste, einen Knopf, eine berührungsempfindliche Fläche, einen Schalter oder einen Taster umfasst.

**13.** Vorrichtung (100; 620; 800; 900) gemäß einem der Ansprüche 1 bis 11, bei der die Bedieneinrichtung (110; 800; 830) eine Mehrzahl von Notenbedieneinrichtungen und einen oval/kreisförmigen Notenbedienbereich aufweist, wobei genau 24 Notenbedieneinrichtungen der Mehrzahl von Notenbedieneinrichtungen entlang eines Umfangs des Notenbedienbereichs aufeinander folgend angeordnet sind;

wobei jeder der 24 Notenbedieneinrichtungen eine Tonigkeit zugeordnet ist; und

einer Erfassungseinrichtung, die ausgebildet ist, um auf ein Betätigen einer Notenbedieneinrichtung der 24 Notenbedieneinrichtungen der Steuereinrichtung als Eingabesignal einen der Notenbedieneinrichtung zugeordneten Eingabewinkel bereitzustellen,

wobei jede der 24 Notenbedieneinrichtungen bezogen auf eine Vorzugsrichtung des Notenbedienbereichs und eines Mittelpunkts des Notenbedienbereichs unter einem Winkel angeordnet ist, der dem der Notenbedieneinrichtung zugeordneten Eingabewinkel entspricht; und

wobei jede der 24 Notenbedieneinrichtungen eine Taste, einen Knopf, eine berührungsempfindliche Fläche, einen Schalter oder einen Taster umfasst.

**14.** Vorrichtung (100; 620; 800; 900) nach einem der vorhergehenden Ansprüche, bei dem die Bedieneinrichtung (100; 800, 830; 1110) ferner ausgebildet ist, um es einem Benutzer derselben ferner zu ermöglichen, einen im Eingabesignal ferner umfassten Eingaberadius oder einen Eingaberadiusbereich zu definieren, und bei dem die Steuereinrichtung (120) ferner ausgebildet ist, um das der Tonigkeit zugeordnete Notensignal mit einer wenigstens auf Basis des in dem Eingabesignal umfassten Eingaberadius oder Eingaberadiusbereichs bestimmten Intensitätsinformationen für wenigstens eine Oktavierung der Tonigkeit zu erzeugen.

**15.** Vorrichtung (100; 620; 800; 900) nach Anspruch 14, bei der die Steuereinrichtung (120) ferner ausgebildet ist, um die Intensitätsinformation auf Basis des Eingaberadius oder des Eingaberadiusbereichs über eine radiale Intensitätsverteilungsfunktion für die wenigstens eine Oktavierung der Tonigkeit so zu bestimmen, dass die wenigstens einer Oktavierung der Tonigkeit zugeordnete Intensitätsinformation von dem Eingaberadius bzw. dem Eingaberadiusbereich und einem der wenigstens einen Oktavierung zugeordneten Radiuswert abhängt.

**16.** Vorrichtung (100; 620; 800; 900) nach einem der Ansprüche 14 oder 15, bei dem die Bedieneinrichtung (110; 800, 830) ausgebildet ist, um die Definition des Eingaberadiusbereichs durch eine Eingabe eines Startradius und eines Stoppradius oder durch eine Eingabe eines Startradius und eines Radiusbereichs zu ermöglichen.

**17.** Verfahren zum Erzeugen eines Notensignals auf eine manuelle Eingabe hin, mit folgenden Schritten:

Empfangen eines Eingabesignals, das einen Eingabewinkel oder einen Eingabewinkelbereich definiert; und

Erzeugen eines einer Tonigkeit zugeordneten Notensignals auf Basis einer Zuordnungsfunktion und dem Eingabesignal,

**dadurch gekennzeichnet, dass** die Zuordnungsfunktion den vollen Winkelbereich eines Kreises auf eine Tonigkeitsmenge abbildet, derart, dass jedem Winkel des vollen Winkelbereichs eine Tonigkeit oder keine Tonigkeit zugeordnet ist, und dass für alle Winkel gilt, dass

- wenn einem Winkel keine Tonigkeit zugeordnet ist, einem zu dem Winkel in einer ersten Richtung nächstliegenden ersten Nächstnachbarwinkel des vollen Winkelbereichs, dem eine Tonigkeit zugeordnet ist, eine erste Nächstnachbartonigkeit zugeordnet ist, die zu einer zweiten Nächstnachbartonigkeit, die einem zu dem Winkel in einer der ersten Richtung entgegengesetzten zweiten Richtung nächstliegenden zweiten Nächstnachbarwinkel des vollen Winkelbereichs, dem eine Tonigkeit zugeordnet ist, zugeordnet ist, einen kleinsten Tonabstand aufweist, der einem kleinen Terzabstand oder einem großen Terzabstand entspricht, und

- wenn dem Winkel eine vorbestimmte Tonigkeit zugeordnet ist, die vorbestimmte Tonigkeit und die erste Nächstnachbartonigkeit einen kleinsten Tonabstand aufweisen, der einem Primabstand, einem kleinen Terzabstand oder einem großen Terzabstand entspricht, und die vorbestimmte Tonigkeit und die zweite Nächstnachbartonigkeit einen kleinsten Tonabstand aufweist, der einem Primabstand, einem kleinen Terzabstand oder einem großen Terzabstand entspricht.

**18.** Computer-Programm mit einem Programmcode zum Durchführen des Verfahrens nach Anspruch 17, wenn das Computerprogramm auf einem Computer abläuft.

**EP 1 941 487 B1**

**Claims**

1. A device (100; 620; 800; 900) for generating a note signal upon a manual input, comprising:

   an operating means (110; 800, 830) which is implemented to enable a user of the same, as an input, to define an input angle or an input angle range as the input signal; and
   a control means (120) which is implemented to receive the input signal and to generate a note signal associated with a pitch class based on an assignment function and the input signal,
   **characterized in that** the assignment function maps the complete angle range of a circle to a set of pitch classes such that one pitch class or no pitch class is assigned to each angle of the complete angle range and that for all angles it applies that

   - when no pitch class is associated with the predetermined angle, to a first next neighbor angle, nearest to the predetermined angle in a first direction, of the complete angle range, to which a pitch class is assigned, a first next neighbor pitch class is assigned, which comprises a smallest pitch interval, which corresponds to a minor third interval or a major third interval, with respect to a second next neighbor pitch class which is associated with a second next neighbor angle, which is nearest to the predetermined angle in a second direction which is opposite to the first direction, of the complete angle range, which has an associated pitch class, and
   - when one predetermined pitch class is associated with the predetermined angle, the predetermined pitch class and the first next-neighbor pitch class comprise a smallest pitch interval which corresponds to a prime interval, a minor third interval or a major third interval, and the predetermined pitch class and the second next-neighbor pitch class comprise a smallest pitch interval which corresponds to a prime interval, a minor third interval or a major third interval.

2. The device (100; 620; 800; 900) according to claim 1, wherein the control means (120) is implemented such that the assignment function assigns pitch classes to a plurality of predetermined angles, wherein pitch classes are associated with directly adjacent angles of the plurality of predetermined angles, which comprise a major third interval or a minor third interval as the smallest pitch interval.

3. The device (100; 620; 800; 900) according to claim 2, wherein the control means is implemented such that the plurality of predetermined angles includes 24 individual angles which are distributed equidistantly with regard to a circle, and that the assignment function assigns the 12 pitch classes of the chromatic scale to the 24 individual angles of the plurality of predetermined angles, so that a pitch class is associated with each individual angle of the plurality of predetermined angles, which either

   - with regard to a pitch class associated with an angle of the plurality of predetermined angles which is directly adjacent in a clockwise direction, comprises a minor third interval as the smallest pitch interval, and with regard to a pitch class associated with an angle of the plurality of predetermined angles directly adjacent in a counterclockwise direction, comprises a major third interval as the smallest pitch interval, or
   - with regard to a pitch class associated with an angle of the plurality of predetermined angles which is directly adjacent in a clockwise direction, comprises a major third interval as the smallest pitch interval, and with regard to a pitch class associated with an angle of the plurality of predetermined angles directly adjacent in a counterclockwise direction, comprises a minor third interval as the smallest pitch interval.

4. The device (100; 620; 800; 900) according to claim 2, wherein the control means (120) is implemented such that the plurality of predetermined angles includes seven individual angles which are distributed symmetrically with regard to a symmetry axis, and that the assignment function assigns the seven pitch classes of a diatonic major scale to the seven individual angles of the plurality of predetermined angles so that each individual angle of the plurality of predetermined angles either

   - with regard to a pitch class associated with an angle of the plurality of predetermined angles which is directly adjacent in a clockwise direction, comprises a minor third interval as the smallest pitch interval, and with regard to a pitch class associated with an angle of the plurality of predetermined angles directly adjacent in a counterclockwise direction, comprises a major third interval as the smallest pitch interval, or
   - with regard to a pitch class associated with an angle of the plurality of predetermined angles which is directly adjacent in a clockwise direction, comprises a major third interval as the smallest pitch interval, and with regard to a pitch class associated with an angle of the plurality of predetermined angles directly adjacent in a counter-

51

clockwise direction, comprises a minor third interval as the smallest pitch interval,

wherein two directly adjacent individual angles each, which have associated pitch classes which comprise a minor third interval as the smallest pitch interval, are different with regard to a circle regarding their absolute value by an angle of 45˚;
wherein two directly adjacent individual angles each, which have associated pitch classes which comprise a major third interval as the smallest pitch interval, are different with regard to a circle regarding their absolute value by an angle of 60˚; and
wherein the pitch class associated with an angle of the symmetry axis, with regard to a basic pitch of the diatonic major scale, comprises a smallest pitch interval of a major second.

5. The device (100; 620; 800; 900) according to one of the preceding claims, wherein the control means (120) is implemented such that the assignment function assigns a volume information to each angle to which a pitch class is assigned, whereby a spatial pitch distribution function is defined via the angles.

6. The device (100; 620; 800; 900) according to one of the preceding claims, wherein the control means (120) is further implemented to generate a note signal which comprises volume information which is derived from the angle range of the input signal and a selection weighting function, wherein the selection weighting function comprises an angle-dependent volume information function.

7. The device (100; 620; 800; 900) according to one of the preceding claims, wherein the control means (120) is further implemented to generate the note signal with an octaving which is randomly determined, predetermined or dependent on the input.

8. The device (100; 620; 800; 900) according to one of the preceding claims, wherein the operating means is implemented to define the input angle range by a starting angle and an opening angle.

9. The device (100; 620; 800; 900) according to one of the preceding claims, wherein the operating means (110; 800, 830) comprises an input means which is selected from a group including a joystick, a mobile phone joystick, a tiltable foot plate, a foot key, a foot rocker, a rotary switch, a sliding controller, a touchscreen, a touch-sensitive area, a computer mouse, a key, a button, a push-button and a slide switch, or wherein the operating means (110; 800, 830) is implemented to detect an inclination direction and/or an inclination degree of a user's head and output the same as the input.

10. The device (100; 620; 800; 900) according to one of the preceding claims, wherein the device (100; 620; 900) comprises an additional operating means (805) to provide a selection signal to the control means (120) upon a selection input of the user, and wherein the control means is implemented to determine the assignment function from a plurality of the assignment functions based on the selection signal in order to determine a diatonic major scale.

11. The device (100; 620; 800; 900) according to one of the preceding claims, wherein the operating means (110; 800, 830) comprises a touch-sensitive field, a field detection means and a field evaluation means, wherein the detection means is implemented to detect a touch on the touch-sensitive field by the user and to provide a signal indicating the touch and the location of the touch to the field evaluation means, and wherein the field evaluation means is implemented to determine the input angle or the input angle range from the location of the touch, based on the signal indicating the touch with regard to a center point of the touch-sensitive field and a preferential direction of the touch-sensitive field, and to output the input signal.

12. The device (100; 620; 800; 900) according to one of the preceding claims, wherein the operating means (110; 800, 830) comprises a plurality of note operating means and an oval/circular note operating area,
wherein exactly seven note operating means of the plurality of note operating means are successively arranged along a periphery of the note operating area;
wherein a pitch class is associated with each of the seven note operating means; wherein the seven note operating means are arranged symmetrically on the periphery of the note operating area with regard to a note operating area symmetry axis, so that the first note operating means lies on the note operating area symmetry axis in a clockwise direction; and
a detection means which is implemented to provide an input angle associated with the note operating means as an input signal upon operating a note operating means of the seven note operating means of the control means, wherein each of the seven note operating means, with regard to a preferential direction of the note operating area and a center point of the note operating area is arranged under an angle which corresponds to the input angle associated with the note operating means; and

wherein each of the seven note input means includes a key, a button, a touch-sensitive area, a switch or a push-button.

**13.** The device (100; 620; 800; 900) according to one of claims 1 to 11, wherein the operating means (110; 800; 830) comprises a plurality of note operating means and an oval/circular note operating area,

wherein exactly 24 note operating means of the plurality of note operating means are arranged successively along a periphery of the note operating area;

wherein a pitch class is associated with each of the 24 note operating means; and

a detection means which is implemented to provide an input angle associated with the note operating means as an input signal to the control means upon operating one note operating means of the 24 note operating means,

wherein each of the 24 note operating means, with regard to a preferential direction of the note operating area and a center point of the note operating area, is arranged under an angle which corresponds to the input angle associated with the note operating means; and

wherein each of the 24 note operating means includes a key, a button, a touch-sensitive area, a switch or a push-button.

**14.** The device (100; 620; 800; 900) according to one of the preceding claims, wherein the operating means (100; 800, 830; 1110) is further implemented to enable a user of the same to define an input radius or an input radius range further included in the input signal, and wherein the control means (120) is further implemented to generate the note signal associated with the pitch class, with an intensity information determined at least on the basis of the input radius or the input radius range included in the input signal, for at least one octaving of the pitch class.

**15.** The device (100; 620; 800; 900) according to claim 14, wherein the control means is further implemented to determine the intensity information on the basis of the input radius or the input radius range via a radial intensity distribution function for the at least one octaving of the pitch class so that the intensity information associated with the at least one octaving of the pitch class depends on the input radius and/or the input radius range and a radius value associated with the at least one octaving.

**16.** The device (100; 620; 800; 900) according to one of claims 14 or 15, wherein the operating means (110; 800, 830) is implemented to enable the definition of the input radius range by an input of a starting radius and a stopping radius or by an input of a starting radius and a radius range.

**17.** A method for generating a note signal upon a manual input, comprising the following steps:

receiving an input signal defining an input angle or an input angle range; and

generating a note signal associated with a pitch class on the basis of an assignment function and the input signal, **characterized in that** the assignment function maps the complete angle range of a circle to a set of pitch classes such that one pitch class or no pitch class is assigned to each angle of the complete angle range and that for all angles it applies that

- when no pitch class is associated with the predetermined angle, to a first next neighbor angle, nearest to the predetermined angle in a first direction, of the complete angle range, to which a pitch class is assigned, a first next neighbor pitch class is assigned, which comprises a smallest pitch interval, which corresponds to a minor third interval or a major third interval, with respect to a second next neighbor pitch class which is which is associated with a second next neighbor angle, nearest to the predetermined angle in a second direction which is opposite to the first direction, of the complete angle range, which has an associated pitch class, and

- when one predetermined pitch class is associated with the predetermined angle, the predetermined pitch class and the first next-neighbor pitch class comprise a smallest pitch interval which corresponds to a prime interval, a minor third interval or a major third interval, and the predetermined pitch class and the second next-neighbor pitch class comprises a smallest pitch interval which corresponds to a prime interval, a minor third interval or a major third interval.

**18.** A computer program having a program code for executing the method according to claim 17, when the computer program runs on a computer.

**Revendications**

1. Dispositif (100; 620; 800; 900) pour générer un signal de notes suite à une entrée manuelle, aux caractéristiques suivantes:

   un moyen de manoeuvre (110; 800, 830) qui est réalisé de manière à permettre à un utilisateur de ce dernier de définir, comme entrée, un angle d'entrée ou une plage d'angles d'entrée comme signal d'entrée; et
   un moyen de commande (120) qui est réalisé de manière à recevoir le signal d'entrée et à générer, sur base d'une fonction d'association et du signal d'entrée, un signal de notes associé à une hauteur tonale,
   **caractérisé par le fait que** la fonction d'association reproduit la plage d'angles complète d'un cercle sur une quantité de hauteur tonale, de sorte qu'à chaque angle de la plage d'angles complète soit associée une hauteur tonale ou pas de hauteur tonale, et que soit d'application pour tous les angles que

   - lorsqu'il n'est pas associé de hauteur tonale à un angle, il est associé au premier angle de la plage d'angles complète le plus voisin de l'angle dans une première direction, auquel est associée une hauteur tonale, une première hauteur tonale la plus voisine qui présente, par rapport à une deuxième hauteur tonale de la plage d'angles complète la plus voisine qui est associée à un deuxième angle le plus voisin de l'angle dans une deuxième direction opposée à la première direction, auquel est associée une hauteur tonale, un intervalle de son le plus petit qui correspond à un petit intervalle de tiers d'octave ou un grand intervalle de tiers d'octave, et
   - lorsqu'il est associé à l'angle une hauteur tonale prédéterminée, la hauteur tonale prédéterminée et la première hauteur tonale la plus voisine présentent un intervalle de son le plus petit qui correspond à un intervalle primaire, un petit intervalle de tiers d'octave ou un grand intervalle de tiers d'octave, et la hauteur tonale prédéterminée et la deuxième hauteur tonale la plus voisine présentent un intervalle de son le plus petit qui correspond à un intervalle primaire, un petit intervalle de tiers d'octave ou un grand intervalle de tiers d'octave.

2. Dispositif (100; 620; 800; 900) selon la revendication 1, dans lequel le moyen de commande (120) est réalisé de sorte que la fonction d'association associe des hauteurs tonales à une pluralité d'angles prédéterminés, à des angles immédiatement voisins de la pluralité d'angles prédéterminés étant associées des hauteurs tonales présentant, comme intervalle de son le plus petit, un grand intervalle de tiers d'octave ou un petit intervalle de tiers d'octave.

3. Dispositif (100; 620; 800; 900) selon la revendication 2, dans lequel le moyen de commande est réalisé de sorte que la pluralité d'angles prédéterminés comprenne 24 angles individuels qui, par rapport à un cercle, sont répartis de manière équidistante, et que la fonction d'association associe aux 24 angles individuels de la pluralité d'angles prédéterminés les 12 hauteurs tonales de la gamme chromatique de sorte qu'à chaque angle individuel de la pluralité d'angles prédéterminés soit associée une hauteur tonale qui soit

   - présente, par rapport à une hauteur tonale associée à un angle de la pluralité d'angles prédéterminés immédiatement voisin dans le sens des aiguilles d'une montre, un petit intervalle de tiers d'octave comme intervalle de son le plus petit et, par rapport à une hauteur tonale associée à un angle de la pluralité d'angles prédéterminés immédiatement voisin dans le sens contraire aux aiguilles d'une montre, un grand intervalle de tiers d'octave comme intervalle de son le plus petit, soit
   - présente, par rapport à une hauteur tonale associée à un angle de la pluralité d'angles prédéterminés immédiatement voisin dans le sens des aiguilles d'une montre, un grand intervalle de tiers d'octave comme intervalle de son le plus petit et, par rapport à une hauteur tonale associée à un angle de la pluralité d'angles prédéterminés immédiatement voisin dans le sens contraire aux aiguilles d'une montre, un petit intervalle de tiers d'octave comme intervalle de son le plus petit.

4. Dispositif (100; 620; 800; 900) selon la revendication 2, dans lequel le moyen de commande (120) est réalisé de sorte que la pluralité d'angles prédéterminés comprenne sept angles individuels qui sont répartis de manière symétrique par rapport à un axe de symétrie, et que la fonction d'association associe aux sept angles individuels de la pluralité d'angles prédéterminés les sept hauteurs tonales d'une gamme de Fa majeur diatonique de sorte qu'à chaque angle individuel de la pluralité d'angles prédéterminés soit associée une hauteur tonale qui soit

   - présente, par rapport à une hauteur tonale associée à un angle de la pluralité d'angles prédéterminés immédiatement voisin dans le sens des aiguilles d'une montre, un petit intervalle de tiers d'octave comme intervalle de son le plus petit et, par rapport à une hauteur tonale associée à un angle de la pluralité d'angles prédéterminés immédiatement voisin dans le sens contraire aux aiguilles d'une montre, un grand intervalle de tiers d'octave comme intervalle de son le plus petit, soit
- présente, par rapport à une hauteur tonale associée à un angle de la pluralité d'angles prédéterminés immédiatement voisin dans le sens des aiguilles d'une montre, un grand intervalle de tiers d'octave comme intervalle de son le plus petit et, par rapport à une hauteur tonale associée à un angle de la pluralité d'angles prédéterminés immédiatement voisin dans le sens contraire aux aiguilles d'une montre, un petit intervalle de tiers d'octave comme intervalle de son le plus petit,

chaque fois deux angles individuels immédiatement adjacents par rapport à un cercle auxquels sont associées des hauteurs de son présentant, comme intervalle de son le plus petit, un petit intervalle de tiers d'octave différant en quantité d'un angle de 45°;
chaque fois deux angles individuels immédiatement adjacents par rapport à un cercle auxquels sont associées des hauteurs de son présentant, comme intervalle de son le plus petit, un grand intervalle de tiers d'octave différant en quantité d'un angle de 60°; et
la hauteur de son associée à un angle de l'axe de symétrie présentant, par rapport à un son fondamental de la gamme de Fa majeur diatonique, un intervalle de son le plus petit d'une grande seconde.

**5.** Dispositif (100; 620; 800; 900) selon l'une des revendications précédentes, dans lequel le moyen de commande (120) est réalisé de sorte que la fonction d'association associe une information de volume de son à chaque angle auquel est associée une hauteur de son, d'où est définie une fonction de répartition de son spatiale sur les angles.

**6.** Dispositif (100; 620; 800; 900) selon l'une des revendications précédentes, dans lequel le moyen de commande (120) est par ailleurs réalisé de manière à générer un signal de notes présentant une information de volume de son qui est dérivée de la plage d'angles du signal d'entrée et d'une fonction de pondération de sélection, la fonction de pondération de sélection présentant une fonction d'information de volume de son dépendant de l'angle.

**7.** Dispositif (100; 620; 800; 900) selon l'une des revendications précédentes, dans lequel le moyen de commande (120) est par ailleurs réalisé de manière à générer le signal de notes avec un décalage d'une octave déterminé de manière aléatoire, prédéterminé ou fonction de l'entrée.

**8.** Dispositif (100; 620; 800; 900) selon l'une des revendications précédentes, dans lequel le moyen de manoeuvre est réalisé de manière à définir la plage d'angles d'entrée par un angle initial et un angle d'ouverture.

**9.** Dispositif (100; 620; 800; 900) selon l'une des revendications précédentes, dans lequel le moyen de manoeuvre (110; 800, 830) présente un moyen d'entrée qui est sélectionné parmi un groupe composé d'un joystick (manette de commande), d'un handy joystick, d'une plaque au pied inclinable, d'un palpeur actionné par le pied, d'un basculeur actionné par le pied, d'un bouton rotatif, d'un curseur, d'un écran tactile, d'une surface sensible au toucher, d'une souris d'ordinateur, d'une touche, d'un bouton, d'une surface de connexion et d'un interrupteur coulissant, ou dans lequel le moyen de manoeuvre (110; 800, 830) est réalisé de manière à identifier une direction d'inclinaison et/ou intensité d'inclinaison d'une tête de l'utilisateur et à la sortir comme entrée.

**10.** Dispositif (100; 620; 800; 900) selon l'une des revendications précédentes, dans lequel le dispositif (100; 620; 900) présente un moyen de manoeuvre additionnel (805) pour mettre à disposition, suite à une entrée de sélection par l'utilisateur, un signal de sélection du moyen de commande (120), et dans lequel le moyen de commande est réalisé de manière à déterminer, sur base du signal de sélection, la fonction d'association parmi une pluralité de fonctions d'association, pour fixer une gamme de Fa majeur diatonique.

**11.** Dispositif (100; 620; 800; 900) selon l'une des revendications précédentes, dans lequel le moyen de manoeuvre (110; 800, 830) présente un champ sensible au toucher, un moyen de détection de champ et un moyen d'évaluation de champ, le moyen de détection étant réalisé de manière à détecter un contact de l'utilisateur avec le champ sensible au toucher et à mettre à disposition du moyen d'évaluation de champ un signal indiquant le contact et l'endroit du contact, et le moyen d'évaluation de champ étant réalisé de manière à déterminer, sur base du signal indiquant le contact, par rapport à un point central du champ sensible au toucher, et d'une direction préférentielle du champ sensible au toucher à partir de l'endroit de contact, l'angle d'entrée ou la plage d'angles d'entrées et à sortir le signal d'entrée.

**12.** Dispositif (100; 620; 800; 900) selon l'une des revendications précédentes, dans lequel le moyen de manoeuvre (110; 800, 830) présente une pluralité de moyens de manoeuvre de notes et une zone de manoeuvre de notes ovale/circulaire,

exactement sept moyens de manoeuvre de notes de la pluralité de moyens de manoeuvre de notes étant disposés successivement le long d'une périphérie de la zone de manoeuvre de notes;

à chacun des sept moyens de manoeuvre de notes étant associée une hauteur de son;

les sept moyens de manoeuvre de notes étant disposées, par rapport à un axe de symétrie de zone de manoeuvre de notes, de manière symétrique sur la périphérie de la zone de manoeuvre de notes, de sorte que, dans le sens des aiguilles d'une montre, le premier moyen de manoeuvre de notes se trouve sur l'axe de symétrie de zone de manoeuvre de notes; et

un moyen de détection qui est réalisé de manière à mettre à disposition du moyen de commande, à un actionnement d'un moyen de manoeuvre de notes parmi les sept moyens de manoeuvre de notes, comme signal d'entrée un angle d'entrée associé au moyen de manoeuvre de notes,

chacun des sept moyens de manoeuvre de notes étant disposé, par rapport à une direction préférentielle de la zone de manoeuvre de notes et un point central de la zone de manoeuvre de notes, selon un angle qui correspond à l'angle d'entrée associé au moyen de manoeuvre de notes; et

chacun des sept moyens de manoeuvre de notes comportant une touche, un bouton, une surface sensible au toucher, un interrupteur ou un palpeur.

**13.** Dispositif (100; 620; 800; 900) selon l'une des revendications 1 à 11, dans lequel le moyen de manoeuvre (110; 800; 830) présente une pluralité de moyens de manoeuvre de notes et une zone de manoeuvre de notes ovale/ circulaire,

exactement 24 moyens de manoeuvre de notes de la pluralité de moyens de manoeuvre de notes étant disposés successivement le long d'une périphérie de la zone de manoeuvre de notes;

à chacun des 24 moyens de manoeuvre de notes étant associée une hauteur de son; et

un moyen de détection qui est réalisé de manière à mettre à disposition du moyen de commande, à un actionnement d'un moyen de manoeuvre de notes parmi les 24 moyens de manoeuvre de notes, comme signal d'entrée un angle d'entrée associé au moyen de manoeuvre de notes,

chacun des 24 moyens de manoeuvre de notes étant disposé, par rapport à une direction préférentielle de la zone de manoeuvre de notes et un point central de la zone de manoeuvre de notes, selon un angle qui correspond à l'angle d'entrée associé au moyen de manoeuvre de notes; et

chacun des 24 moyens de manoeuvre de notes comportant une touche, un bouton, une surface sensible au toucher, un interrupteur ou un palpeur.

**14.** Dispositif (100; 620; 800; 900) selon l'une des revendications précédentes, dans lequel le moyen de manoeuvre (100; 800, 830; 1110) est par ailleurs réalisé de manière à permettre par ailleurs à un utilisateur de ce dernier de définir un rayon d'entrée ou une plage de rayons d'entrée par ailleurs contenu dans le signal d'entrée, et dans lequel le moyen de commande (120) est par ailleurs réalisé de manière à générer le signal de notes associé à la hauteur de son avec une information d'intensité déterminée au moins sur base du rayon d'entrée ou de la plage de rayons d'entrée contenu dans le signal d'entrée pour au moins un décalage d'une octave de la hauteur de son.

**15.** Dispositif (100; 620; 800; 900) selon la revendication 14, dans lequel le moyen de commande (120) est par ailleurs réalisé de manière à déterminer l'information d'intensité sur base du rayon d'entrée ou de la plage de rayons d'entrée par l'intermédiaire d'une fonction de répartition d'intensité radiale pour l'au moins un décalage d'une octave de la hauteur de son de sorte que l'information d'intensité associée à au moins un décalage d'une octave de la hauteur de son dépende du rayon d'entrée ou de la plage de rayons d'entrée et d'une valeur de rayon associée à l'au moins un décalage d'une octave.

**16.** Dispositif (100; 620; 800; 900) selon l'une des revendications 14 ou 15, dans lequel le moyen de manoeuvre (110; 800, 830) est réalisé de manière à permettre la définition de la plage de rayons d'entrée par une entrée d'un rayon initial et d'un rayon d'arrêt ou par une entrée d'un rayon initial et d'une plage de rayons.

**17.** Procédé pour générer un signal de notes à la suite d'une entrée manuelle, aux étapes suivantes consistant à:

recevoir un signal d'entrée qui définit un angle d'entrée ou une plage d'angles d'entrée; et

générer un signal de notes associé à une hauteur de son sur base d'une fonction d'association et du signal d'entrée,

**caractérisé par le fait que** la fonction d'association reproduit la plage d'angles complète d'un cercle sur une quantité de hauteur tonale, de sorte qu'à chaque angle de la plage d'angles complète soit associée une hauteur tonale ou pas de hauteur tonale, et que soit d'application pour tous les angles que

- lorsqu'il n'est pas associé de hauteur tonale à un angle, il est associé à un premier angle de la plage d'angles complète le plus voisin de l'angle dans une première direction, auquel est associée une hauteur tonale, une première hauteur tonale la plus voisine qui présente, par rapport à une deuxième hauteur tonale de la plage d'angles complète la plus voisine qui est associée à un deuxième angle le plus voisin de l'angle dans une deuxième direction opposée à la première direction, auquel est associée une hauteur tonale, un intervalle de son le plus petit qui correspond à un petit intervalle de tiers d'octave ou un grand intervalle de tiers d'octave, et

- lorsqu'il est associé à l'angle une hauteur tonale prédéterminée, la hauteur tonale prédéterminée et la première hauteur tonale la plus voisine présentent un intervalle de son le plus petit qui correspond à un intervalle primaire, un petit intervalle de tiers d'octave ou un grand intervalle de tiers d'octave, et la hauteur tonale prédéterminée et la deuxième hauteur tonale la plus voisine présentent un intervalle de son le plus petit qui correspond à un intervalle primaire, un petit intervalle de tiers d'octave ou un grand intervalle de tiers d'octave.

18. Programme d'ordinateur avec un code de programme pour réaliser le procédé selon la revendication 17 lorsque le programme d'ordinateur est exécuté sur un ordinateur.

FIG 1

# FIG 2

Eingabesignal

Zuordnungsfunktion

150-1   C   e   150-2

152-2

a

G

150-3

155-1

150-4

F

ho

d   150-5

β   150-2

C   e

150-1   α

Notensignal

Tonigkeiten
C,e

# FIG 3

FIG 4

a)

300a

G    B    D    F    A    C

b)

300b

G    B    D    F    A    C

c)

300b    300c    300d

G    B    D    F    A    C

d)

300b    300e

G    B    D    F    A    C

e)

300e    300f

G    B    D    F    A    C

# FIG 5

(a.)

305

G    B

300g

(b.)

Itensität

310-G    310-B    310-D    310-F    310-A    310-C

G    B    D    F    A    C

Raumposition

(c.)

Intensität

310-C    310-E

C    E

Raumposition

Intensität

310'-C    310'-E

C    E

Raumposition

Intensität

310''-C    310''-E

C    E

Raumposition

# FIG 6

(a.)

(b.) 320-D ... 320-F ... 320-A

(c.) 320-G ... 320-A

(d.) 320-D ... 330 ... 320-F ... 325 ... 320-A

**FIG 7**

## FIG 8

## FIG 9

## FIG 10

## FIG 11

Geometrische Repräsentation
einer Tonart an der Stelle
ihrer Symmetrieachse

Art des Vorzeichens,
"+" entspricht # und
"-" entspricht b's

Anzahl der Vorzeichen
der jeweiligen Tonart

## FIG 12

# FIG 13

# FIG 14

FIG 15

## FIG 16

FIG 17

# FIG 18

EP 1 941 487 B1

# FIG 19

485

480

Betrag des Symmetriemodell-Summenvektors

Prime:  Große Terz  Kleine Terz  Verminderte Quinte  Quarte  Quarte  Große Sekunde  Kleine Sekunde

Intervall

EP 1 941 487 B1

FIG 20

# FIG 21

# FIG 22

**FIG 23**

## FIG 24

a) Spezial     b) Numpad     c) Pfeiltasten     d) Drehregler

## FIG 25

a) Tastenkombination     b) Fader     c) Tonzahltasten

# FIG 26

# FIG 27

910-c   910-e   900

950-1
950-2
Tonales Zentrum 930
910-G
Winkel α
Tontaste
Kreismittelpunkt 920
Symmetrieachse 925
950-3
Symmetriekreis 915
910-h
Symmetrieton
950-4
Tonzahlwähler 935

950-8
910-a
950-7
910-F
950-6
910-d
950-5

C   e
a   G
F   h0
d

1   2   3   4

940-1   940-2   940-3   940-4

FIG 28

EP 1 941 487 B1

```
        1010e            1010                    1020                      1030    1030a            1040
 Auto         Halbton-               Berechnung                 Symmetriemodell            Anzeige-
signal        analyse       →       derTonigkeiten     →           Terzkreis        →      vorrichtung
```

## FIG 29

# FIG 30a

$$\Delta r = r - R_0$$

# FIG 30b

700-C

1130

1140

$\Delta r$

1120-C1

$R_0$

Intensität

1150-2

0

$\Delta r$

$\Delta r = r - R_0$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 8005260 U1
- DE 8902959 U1
- DE 3744255 A1
- US 5709552 A
- DE 3690188 T1
- US 20020178896 A1
- DE 4002361 A1
- DE 19831409 A1
- DE 19859303 A1
- DE 29801154 U1

- DE 20301012 U1
- DE 8005260
- DE 29512911 U1
- EP 0452347 B1
- DE 4216349 C2
- DE 2857808 C3
- EP 0834167 B1
- EP 0632427 B1
- DE 69418776 T2
- US 5415071 A